# EUROPEAN PATENT APPLICATION

(11) **EP 4 823 165 A1**
(43) Date of publication of application: **14.10.2026**
(21) Application number: 24916131.6
(22) Date of filing: 12.01.2024
(51) Int. Cl.: H04W 28/02

(54) **WIRELESS COMMUNICATION METHOD AND APPARATUS, AND DEVICE, CHIP AND STORAGE MEDIUM**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN)
(74) Representative: Taor, Simon Edward William
(86) International application number: PCT/CN2024/072187
(87) International publication number: WO 2025/148067

(57) **Abstract**

Provided in the embodiments of the present application is a wireless communication method. The method comprises: a terminal device sending first information to a network device, wherein the first information comprises at least one of the following: time information, data amount information, and association information.

## Description

### TECHNICAL FIELD

Embodiments of the present disclosure relate to the field of communication technologies, and specifically relate to a wireless communication method, apparatus, device, chip and storage medium.

### BACKGROUND

Currently, services related to eXtended Reality (XR) include Augmented Reality (AR)/ Virtual Reality (VR)/Cloud gaming and the like. Characteristics of XR data include packet sizes being variable and having a large average value.

Multi-modal scenarios are considered in XR. However, in existing technologies, multi-modal service transmission over an air interface have not been not considered at present. For example, transmission or behavior of sync/coordination info on the UE side is not taken into consideration, and delay-based scheduling over an air interface is not considered either, which reduces communication performance to a certain extent.

### SUMMARY

Embodiments of the present disclosure provide a wireless communication method, apparatus, device, chip and storage medium.

In a first aspect, an embodiment of the present disclosure provides a wireless communication method. The method includes: a terminal device transmits first information to a network device; where the first information comprises at least one of time information, data volume information, or association information.

In a second aspect, an embodiment of the present disclosure provides a wireless communication method. The method includes: a terminal device receives second configuration information transmitted by a network device, where the second configuration information is arranged to configure a first association relationship, and the first association relationship includes a mapping relationship between LCH and UL grant resources.

In a third aspect, an embodiment of the present disclosure provides a wireless communication method. The method includes: a terminal device receives third configuration information transmitted by a network device, and performs data processing based on the third configuration information; where the third configuration information is arranged to indicate whether the terminal device supports performing data processing, or indicate a DRB for performing data processing.

In a fourth aspect, an embodiment of the present disclosure provides a wireless communication method. The method includes: a network device receives first information transmitted by a terminal device; where the first information comprises at least one of time information, data volume information, or association information.

In a fifth aspect, an embodiment of the present disclosure provides a wireless communication method. The method includes: a network device transmits second configuration information to a terminal device, wherein the second configuration information is arranged to configure a first association relationship, and the first association relationship includes a mapping relationship between LCH and UL grant resources.

In a sixth aspect, an embodiment of the present disclosure provides a wireless communication method. The method includes: a network device transmits third configuration information to a terminal device, to enable the terminal device to perform data processing based on the third configuration information; where the third configuration information is arranged to indicate whether the terminal device supports performing data processing, or indicate a DRB for performing data processing.

In a seventh aspect, an embodiment of the present disclosure provides a wireless communication apparatus. The apparatus includes a first transmitting unit configured to transmit first information to a network device; where the first information comprises at least one of time information, data volume information, or association information.

In an eighth aspect, an embodiment of the present disclosure provides a wireless communication apparatus. The apparatus includes a first receiving unit configured to receive second configuration information transmitted by a network device, where the second configuration information is arranged to configure a first association relationship, and the first association relationship includes a mapping relationship between LCH and UL grant resources.

In a ninth aspect, an embodiment of the present disclosure provides a wireless communication apparatus. The apparatus includes a second receiving unit configured to receive third configuration information transmitted by a network device and perform data processing based on the third configuration information; where the third configuration information is arranged to indicate whether the terminal device supports performing data processing, or indicate a DRB for performing data processing.

In a tenth aspect, an embodiment of the present disclosure provides a wireless communication apparatus. The apparatus includes a third receiving unit configured to receive first information transmitted by a terminal device; where the first information comprises at least one of time information, data volume information, or association information.

In an eleventh aspect, an embodiment of the present disclosure provides a wireless communication apparatus. The apparatus includes a second transmitting unit configured to transmit second configuration information to a terminal device, where the second configuration information is arranged to configure a first association relationship, and the first association relationship includes a mapping relationship between LCH and UL grant resources.

In a twelfth aspect, an embodiment of the present disclosure provides a wireless communication apparatus. The apparatus includes a third transmitting unit configured to transmit third configuration information to a terminal device, to enable the terminal device to perform data processing based on the third configuration information; where the third configuration information is arranged to indicate whether the terminal device supports performing data processing, or indicate a DRB for performing data processing.

In a thirteenth aspect, an embodiment of the present disclosure provides a wireless communication device. The wireless communication device includes a memory and a processor; where the memory is configured to store computer executable instructions; and the processor is connected to the memory and configured to implement the method according to any one of the first aspect to the sixth aspect by executing the computer executable instructions.

In a fourteenth aspect, an embodiment of the present disclosure provides a chip. The chip includes a processor configured to invoke and run a computer program from a memory, to enable a device installed with the chip to execute the method according to any one of the first aspect to the sixth aspect.

In a fifteenth aspect, an embodiment of the present disclosure provides a computer readable storage medium. The computer readable storage medium stores a computer program, and the computer program, when executed by at least one processor, implements the method according to any one of the first aspect to the sixth aspect.

The wireless communication method, apparatus, chip, device and storage medium provided by the embodiments of the present disclosure can support multi-modal service transmission over an air interface and effectively improve communication performance.

### BRIEF DESCRIPTION OF THE DRAWINGS

The accompanying drawings described herein are intended to provide further understanding of the present disclosure and constitute a part of the present disclosure. The schematic embodiments and descriptions thereof of the present disclosure are used to explain the present disclosure and shall not constitute improper limitation on the present disclosure. In the accompanying drawings:
FIG. 1 is a schematic diagram of an application scenario according to an embodiment of the present disclosure.
FIG. 2 is a first schematic diagram of a wireless communication method according to an embodiment of the present disclosure.
FIG. 3 is a second schematic diagram of a wireless communication method according to an embodiment of the present disclosure.
FIG. 4 is a third schematic diagram of a wireless communication method according to an embodiment of the present disclosure.
FIG. 5 is a fourth schematic diagram of a wireless communication method according to an embodiment of the present disclosure.
FIG. 6 is a fifth schematic diagram of a wireless communication method according to an embodiment of the present disclosure.
FIG. 7 is a sixth schematic diagram of a wireless communication method according to an embodiment of the present disclosure.
FIG. 8 is a seventh schematic diagram of a wireless communication method according to an embodiment of the present disclosure.
FIG. 9 is an eighth schematic diagram of a wireless communication method according to an embodiment of the present disclosure.
FIG. 10 is a ninth schematic diagram of a wireless communication method according to an embodiment of the present disclosure.
FIG. 11 is a tenth schematic diagram of a wireless communication method according to an embodiment of the present disclosure.
FIG. 12 is an eleventh schematic diagram of a wireless communication method according to an embodiment of the present disclosure.
FIG. 13 is a twelfth schematic diagram of a wireless communication method according to an embodiment of the present disclosure.
FIG. 14 is a first implementation schematic diagram of a wireless communication method according to an embodiment of the present disclosure.
FIG. 15 is a second implementation schematic diagram of a wireless communication method according to an embodiment of the present disclosure.
FIG. 16 is a third implementation schematic diagram of a wireless communication method according to an embodiment of the present disclosure.
FIG. 17 is a first structural schematic diagram of a wireless communication apparatus according to an embodiment of the present disclosure.
FIG. 18 is a second structural schematic diagram of a wireless communication apparatus according to an embodiment of the present disclosure.
FIG. 19 is a third structural schematic diagram of a wireless communication apparatus according to an embodiment of the present disclosure.
FIG. 20 is a fourth structural schematic diagram of a wireless communication apparatus according to an embodiment of the present disclosure.
FIG. 21 is a fifth structural schematic diagram of a wireless communication apparatus according to an embodiment of the present disclosure.
FIG. 22 is a sixth structural schematic diagram of a wireless communication apparatus according to an embodiment of the present disclosure.
FIG. 23 is a schematic structural diagram of a wireless communication device according to an embodiment of the present disclosure.
FIG. 24 is a schematic structural diagram of a chip according to an embodiment of the present disclosure.
FIG. 25 is a schematic block diagram of a wireless communication system according to an embodiment of the present disclosure.

### DETAILED DESCRIPTION

The technical solutions in the embodiments of the present disclosure will be described below in combination with the accompanying drawings in the embodiments of the present disclosure. Obviously, the described embodiments are part of the embodiments of the present disclosure, rather than all the embodiments. Based on the embodiments of the present disclosure, all other embodiments obtained by those skilled in the art without creative labor shall fall within the protection scope of the present disclosure.

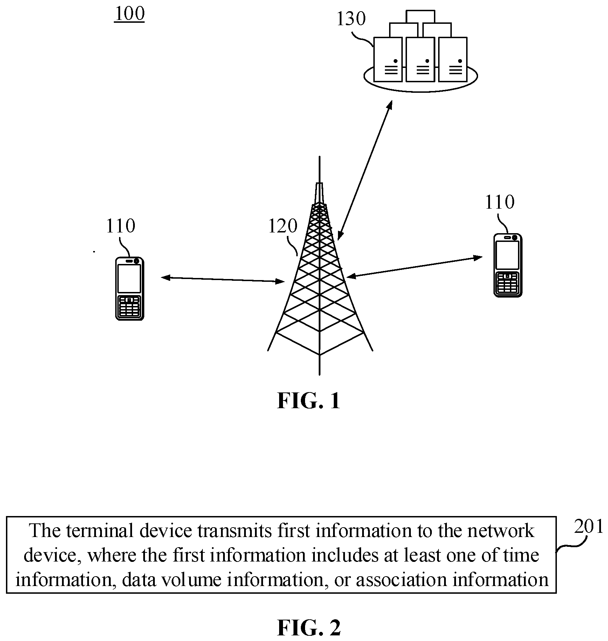

FIG. 1 is a schematic diagram of an application scenario according to an embodiment of the present disclosure.

As shown in FIG. 1, a communication system 100 may include a terminal device 110 and a network device 120. The network device 120 may communicate with the terminal device 110 through an air interface. Multiple service transmissions are supported between the terminal device 110 and the network device 120.

It should be understood that the embodiments of the present disclosure are only exemplarily described by taking the communication system 100 as an example, and the embodiments of the present disclosure are not limited thereto. That is to say, the technical solutions of the embodiments of the present disclosure can be applied to various communication systems, such as Long Term Evolution (LTE) system, LTE Time Division Duplex (TDD), Universal Mobile Telecommunication System (UMTS), Internet of Things (IoT) system, Narrow Band Internet of Things (NB-IoT) system, enhanced Machine-Type Communications (eMTC) system, 5th Generation Mobile Communication Technology (5G) communication system (also referred to as New Radio (NR) communication system), B5G communication system, 6G communication system or future communication system and the like.

In the communication system 100 shown in FIG. 1, the network device 120 may be an access network device communicating with the terminal device 110. The access network device can provide communication coverage for a specific geographical area, and can communicate with the terminal device 110 (such as UE) located within the coverage area.

The network device 120 may be an Evolutional Node B (eNB or eNodeB) in an LTE system, or a Next Generation Radio Access Network (NG RAN) device, or a base station (gNB) in an NR system, or a wireless controller in a Cloud Radio Access Network (CRAN). Alternatively, the network device 120 may be a relay station, an access point, an in-vehicle device, a wearable device, a hub, a switch, a bridge, a router, or a network device in a future evolved Public Land Mobile Network (PLMN) and the like.

The terminal device 110 may be any terminal device, including but not limited to terminal devices connected to the network device 120 or other terminal devices in a wired or wireless manner.

For example, the terminal device 110 may refer to an access terminal, User Equipment (UE), user unit, user station, mobile station, mobile terminal, remote station, remote terminal, mobile device, user terminal, terminal, wireless communication device, user agent or user device. The access terminal may be a cellular phone, cordless phone, Session Initiation Protocol (SIP) phone, IoT device, satellite handheld terminal, Wireless Local Loop (WLL) station, Personal Digital Assistant (PDA), handheld device with wireless communication function, computing device or other processing devices connected to a wireless modem, in-vehicle device, wearable device, terminal device in a 5G network or terminal device in a future evolved network and the like.

The terminal device 110 can be used for Device to Device (D2D) communication.

The wireless communication system 100 may further include a core network device 130 communicating with the network device 120. The core network device 130 may be a 5G Core (5GC) device, such as an Access and Mobility Management Function (AMF), an Authentication Server Function (AUSF), a User Plane Function (UPF), or a Session Management Function (SMF). In some embodiments, the core network device 130 may also be an Evolved Packet Core (EPC) device of an LTE network, such as a Session Management Function + Core Packet Gateway (SMF+PGW-C) device. It should be understood that SMF+PGW-C can implement functions achievable by both SMF and PGW-C. In the process of network evolution, the above core network devices may also be named differently, or new network entities may be formed by dividing core network functions, which is not limited by the embodiments of the present disclosure.

Connections can be established between each functional unit in the communication system 100 through next generation (NG) interfaces to realize communication.

For example, the terminal device establishes an air interface connection with the access network device through an NR interface for transmitting user plane data and control plane signaling; the terminal device can establish a control plane signaling connection with AMF through NG interface 1 (abbreviated as N1); an access network device such as a next generation radio access base station (gNB) can establish a user plane data connection with UPF through NG interface 3 (abbreviated as N3); the access network device can establish a control plane signaling connection with AMF through NG interface 2 (abbreviated as N2); UPF can establish a control plane signaling connection with SMF through NG interface 4 (abbreviated as N4); UPF can interact user plane data with a data network through NG interface 6 (abbreviated as N6); AMF can establish a control plane signaling connection with SMF through NG interface 11 (abbreviated as N11); SMF can establish a control plane signaling connection with PCF through NG interface 7 (abbreviated as N7).

FIG. 1 exemplarily shows one network device, one core network device and two terminal devices. Optionally, the wireless communication system 100 may include multiple network devices, and each network device may cover other numbers of terminal devices within its coverage range, which is not limited in the embodiments of the present disclosure.

It should be noted that FIG. 1 only schematically illustrates the applicable system of the present disclosure in an example form. Certainly, the methods shown in the embodiments of the present disclosure can also be applied to other systems. In addition, the terms "system" and "network" are often used interchangeably herein. The term "and/or" herein only describes an association relationship of associated objects, indicating that there may be three relationships. For example, A and/or B may represent three cases: A exists alone, A and B exist simultaneously, and B exists alone. In addition, the character "/" herein generally indicates an "or" relationship between associated objects before and after. It should also be understood that "indication" mentioned in the embodiments of the present disclosure may be direct indication, indirect indication, or representation of an association relationship. For illustration, that A indicates B may mean that A directly indicates B, for example, B can be obtained through A; or that A indirectly indicates B, for example, A indicates C and B can be obtained through C; or that there is an association relationship between A and B. It should also be understood that "correspondence" mentioned in the embodiments of the present disclosure may mean a direct or indirect correspondence relationship between two parties, or an association relationship between two parties, or a relationship of indication and being indicated, configuration and being configured and the like. It should also be understood that "predefined" or "predefined rule" mentioned in the embodiments of the present disclosure can be implemented by pre-storing corresponding codes, tables or other modes capable of indicating relevant information in devices (such as terminal devices and network devices), and the specific implementation mode thereof is not limited in the present disclosure. For example, predefined may refer to definitions in protocols. It should also be understood that the "protocol" in the embodiments of the present disclosure may refer to standard protocols in the communication field, and may include LTE protocol, NR protocol and relevant protocols applied in future communication systems, which is not limited in the present disclosure.

To facilitate understanding of the technical solutions of the embodiments of the present disclosure, relevant technologies of the embodiments of the present disclosure are described below. The following relevant technologies can be arbitrarily combined with the technical solutions of the embodiments of the present disclosure as optional schemes, all of which belong to the protection scope of the embodiments of the present disclosure.

With people's pursuit of rate, delay, high-speed mobility and energy efficiency as well as diversity and complexity of services in future life, the 3rd Generation Partnership Project (3GPP) international standard organization has begun to develop 5G. Main application scenarios of 5G include enhanced Mobile Broadband (eMBB), Ultra-Reliable Low-Latency Communications (URLLC) and massive Machine-Type Communications (mMTC).

On one hand, eMBB still aims to enable users to acquire multimedia content, services and data, and its demand grows rapidly. On the other hand, since eMBB may be deployed in different scenarios such as indoor areas, urban areas and rural areas, its capabilities and demands differ greatly. Therefore, it cannot be generalized and must be analyzed in detail combined with specific deployment scenarios. Typical applications of URLLC include industrial automation, power automation, remote medical operation (surgery), traffic safety guarantee and the like. Typical characteristics of mMTC include high connection density, small data volume, delay-insensitive services, low module cost and long service life and the like.

NR can be deployed independently. In a 5G network environment, a new Radio Resource Control (RRC) state, namely RRC_INACTIVE state, is defined to reduce air interface signaling, quickly restore wireless connections and quickly resume data services. This state is different from RRC_IDLE state and RRC_ACTIVE state. The three RRC states in the 5G network environment are described as follows:
1) RRC_IDLE state: mobility adopts UE-based cell selection and reselection. Paging is initiated by the Core Network (CN), and paging area is configured by the CN. No UE Access Stratum (AS) context and no RRC connection exist on the base station side.
2) RRC_CONNECTED state: an RRC connection exists, and the UE AS context exist on both the base station and UE sides. The network side knows the location of UE at a specific cell level. Mobility is network-controlled mobility. Unicast data can be transmitted between the UE and the base station.
3) RRC_INACTIVE state: mobility adopts UE-based cell selection and reselection. A connection between CN and NR exists, and the UE AS context exists at a certain base station. Paging is triggered by the Radio Access Network (RAN), and an RAN-based paging area is managed by the RAN. The network side knows the location of the UE at the RAN-based paging area level.

At the 3GPP RAN #88e meeting, a research project entitled "eXtended Reality (XR) and cloud game (CG) evaluations for NR" was approved. Services studied by the project include Augmented Reality (AR)/Virtual Reality (VR)/Cloud gaming and the like. A major service of XR/CG is the video stream service, whose arrival rate (measured by fps, namely frame per second) can be 30fps, 60fps, 90fps and 120fps. Corresponding periods of the video stream are {33.33ms, 16.67ms, 11.11ms, 8.33ms}.

Characteristics of XR data include variable packet size and large average value. Taking AR/VR with a data rate of 100Mbps as an example, the average uplink data packet size is 20833 bytes, the maximum value is 31250 bytes, and the minimum value is 10417 bytes. That is, the sizes of data packets to be transmitted in each period range from 10417 bytes to 31250 bytes. In an actual system with 100M bandwidth, transmitting a 20833-byte data packet occupies transmission resources in approximately 4 slots.

Application layer data interacted between UE and an application server or a peer UE, such as AR/VR/Cloud gaming/live video broadcast and the like, usually includes data streams of multiple modes including voice, video, text and control information. Synchronization between data streams is generally required for these data streams. For example, voice, video, subtitle and other data need to be synchronously displayed to users. Currently, video playback realizes synchronization among multiple data streams at the application layer. For example, multiple received data streams are cached, and corresponding data frames of the multiple data streams are extracted according to timestamps of playback data streams for synchronous display to users.

Multi-modal scenarios are considered in XR. Details are as follows. In R18 discussions, multi-modal impacts are limited to Stand Alone (SA), which cannot fully meet multi-modal requirements such as synchronization/coordination. Therefore, RAN support and enhancement for multi-modal can be considered in R19.
Case1: how to support coordinated transmission for multi-modality flows with a single UE
Case2: how to enable application synchronization and QoS policy coordination for Multi-modal Data flows among multiple UEs

In addition, service transmission has delay requirements, so delay in scheduling and delay-based scheduling need to be taken into account. Otherwise, service delay requirements may not be satisfied.

That is to say, existing technologies fail to support multi-modal service transmission over air interface at present. For example, transmission or behavior of sync/coordination info on the UE side is not taken into consideration, and delay-based scheduling over air interface is not considered either.

In view of this, the present disclosure provides a wireless communication method. On one hand, the terminal device can report first information including time information, and/or data volume information, and/or association information to the network device, so that the network device performs scheduling, resource allocation or parameter configuration based on the first information. On the other hand, introduction of a new mapping relationship between Logical Channels (LCHs) and uplink (UL) grants can guarantee transmission of a specific LCH. Furthermore, the network device can configure the terminal device to perform data processing based on the first information. It can be seen that embodiments of the present disclosure can support transmission or behavior of sync/coordination info, and support delay-based scheduling over air interface, thereby realizing multi-modal service transmission over air interface and effectively improving the communication performance.

To facilitate understanding of the technical solutions of the embodiments of the present disclosure, the technical solutions of the present disclosure are described in detail through specific embodiments below. The above relevant technologies can be arbitrarily combined with the technical solutions of the embodiments of the present disclosure as optional schemes, all of which belong to the protection scope of the embodiments of the present disclosure. Embodiments of the present disclosure include at least part of the following contents.

An embodiment of the present disclosure proposes a wireless communication method applicable to a terminal device. FIG. 2 is a first schematic diagram of the wireless communication method according to an embodiment of the present disclosure. As shown in FIG. 2, the wireless communication method performed by the terminal device may include the following operations.

At operation 201, the terminal device transmits first information to a network device; where the first information includes at least one of time information, data volume information, or association information.

In the embodiment of the present disclosure, the terminal device may transmit the first information to the network device. The first information may include at least one of time information, data volume information, or association information.

It should be noted that in the embodiment of the present disclosure, the terminal device transmits the first information to the network device, so that the network device acquires one or more of time information, data volume information and association information based on the first information, and performs corresponding scheduling processing, allocation processing or configuration processing based on the first information.

It can be understood that in the embodiment of the present disclosure, the first information may also include at least one of time information, data volume information, or transmission mode information. Correspondingly, the terminal device transmits the first information to the network device, so that the network device acquires one or more of time information, data volume information and transmission mode information based on the first information, and performs corresponding scheduling processing, allocation processing or configuration processing based on the first information.

It should be noted that in the embodiment of the present disclosure, the first information may include time information. The time information may include delay information and/or timestamp information. The timestamp information can be understood as time point information.

It should be noted that in the embodiment of the present disclosure, the first information may include data volume information. The data volume information can enable the network device to obtain data related to time information, thereby completing scheduling of corresponding data or allocating resources for the corresponding data before the time point meeting the delay requirement.

It should be noted that in the embodiment of the present disclosure, the first information may include association information. The association information can be understood as synchronization/coordination information. For example, the association information may be sync/coordination info.

It can be understood that in the embodiment of the present disclosure, the association information may be arranged to indicate objects with a preset association relationship, and/or indicate whether an object has a demand for association information.

That is to say, in the embodiment of the present disclosure, the association information included in the first information may be arranged to indicate at least one of the following: a second object having a preset association relationship among objects corresponding to the association information; whether a third object corresponding to the association information has an association demand.

Exemplarily, in some embodiments, taking the association information being sync/coordination info as an example, the sync/coordination info may be arranged to indicate objects with sync/coordination relationship, or indicate whether a certain object has a demand for sync/coordination info.

It should be noted that in the embodiment of the present disclosure, the association information and time information (such as delay information) in the first information can be simultaneously reported or used by the terminal device.

Exemplarily, in some embodiments, sync/coordination info needs to be reported together with delay information, or used (function) together.

Further, in the embodiment of the present disclosure, the first information may include at least one piece of time information and/or at least one piece of data volume information. The at least one piece of time information and the at least one piece of data volume information may be in one-to-one correspondence.

Further, in the embodiment of the present disclosure, the first information may further include information of at least one object, and the information of the at least one object corresponds to at least one of time information, data volume information, or association information.

That is to say, in the embodiment of the present disclosure, object information may include object information corresponding to time information, and/or object information corresponding to data volume information, or object information with a sync/coordination relationship.

It should be noted that in the embodiment of the present disclosure, the at least one object includes an object having a preset association relationship and/or an object meeting a preset delay condition.

It can be understood that in the embodiment of the present disclosure, an object having a preset association relationship can be regarded as an object having a sync/coordination relationship, namely a multi-modal object.

It can be understood that in the embodiment of the present disclosure, the preset delay condition can represent a certain delay requirement, for example, the remaining delay meets a preset threshold.

That is to say, in the embodiment of the present disclosure, an object among the at least one object may be a multi-modal object or an object meeting a certain delay requirement.

Further, in the embodiment of the present disclosure, the object among the at least one object includes one of the following: a Packet Data Unit (PDU), a Service Data Unit (SDU), a data packet, a PDU set, a data burst, a Data Radio Bearer (DRB), a Radio Link Control (RLC), a Quality of Service (QoS) flow, or a PDU session.

That is to say, in the embodiment of the present disclosure, a certain object may be any one of a PDU, a SDU, a data packet, a PDU set, a data burst, a DRB, a RLC, a QoS flow, or a PDU session, which is not specifically limited in the present disclosure.

Further, information of the at least one object in the embodiment of the present disclosure may be indicated in one of the following ways: bitmap indication; object identifier indication; indication based on a first reporting Logical Channel (LCH) corresponding to a first object, or a first reporting Logical Channel Group (LCG) or a first LCH group corresponding to a first object; indication based on all LCHs, or all LCGs, or all LCH groups corresponding to the first object; indication of a second LCH, or a second LCG, or a second LCH group capable of carrying the first object based on a first indicator.

For example, in some embodiments, assuming that the object is an SDU, correspondingly, multiple objects may include multiple buffered SDUs of one LCH, and the corresponding first information may include information (time and/or data volume) of these SDUs.

For example, in some embodiments, assuming that the object is an SDU, correspondingly, multiple objects may include multiple buffered SDUs in multiple multi-modal LCHs. The corresponding first information may include information (time and/or data volume) of these SDUs, or corresponding information (time and/or data volume) in each LCH.

It should be noted that in the embodiments of the present disclosure, the object information may be indicated by explicit indication or implicit indication.

It can be understood that in the embodiments of the present disclosure, explicit indication means that object information is directly contained in the transmitted first information. For example, explicit indication may include bitmap indication or object identifier indication.

For example, in some embodiments, information of at least one object may be indicated in the form of a bitmap, or indicated by an index/ID/SN number.

For example, in some embodiments, object information indicates an object identifier, such as an ID, an index or a Secondary Node (SN) number of a PDU, an SDU, a data packet, a PDU set, a data burst, a DRB, an RLC, a QoS flow, or a PDU session.

For example, in some embodiments, if information of one object is reported, the object information may be indicated by the ID, index or SN number, or the object may be marked at a corresponding bitmap position in the bitmap representing object information (for example, the bitmap bit is set to 1).

For example, in some embodiments, if information of multiple objects is reported, the object information may be indicated by an ID, an index or an SN number. Optionally, object information may be indicated in sequential order. For instance, objects and related information of the objects (such as delay) are sorted in ascending order of ID, index or SN. Alternatively, the objects may be marked at corresponding bitmap positions in the bitmap representing object information (for example, the bitmap bit is set to 1).

It should be noted that in the embodiments of the present disclosure, the first information may be reported for a certain object or certain objects, and information of the object(s) is/are implicitly indicated when reporting the first information.

It can be understood that in the embodiments of the present disclosure, implicit indication may include indication based on a first LCH, a first LCG or a first LCH group corresponding to a first object.

For example, in some embodiments, when implicitly indicating object information, information of a specific LCH, a specific LCG or a specific LCH group may be reported. The LCH group may be composed of several LCHs configured additionally by the network, and these LCHs have synchronization relationships.

It can be understood that in the embodiments of the present disclosure, implicit indication may include indication based on all LCHs, all LCGs or all LCH groups corresponding to a first object.

For example, in some embodiments, when implicitly indicating object information, information of all LCHs, all LCGs or all LCH groups may be reported.

It can be understood that in the embodiments of the present disclosure, implicit indication may include indication of a second LCH, a second LCG or a second LCH group capable of carrying a first object based on a first indication.

For example, in some embodiments, when implicitly indicating object information, the LCHs, LCGs or LCH groups that may report the first information may be configured by the network and/or supported by the UE.

Further, in the embodiments of the present disclosure, when the terminal device transmits first information to the network device, the terminal device transmits the first information corresponding to a first object to the network device based on network configuration and/or terminal capability, where the at least one object includes the first object.

It can be understood that in the embodiments of the present disclosure, the first object is an object that can report corresponding first information among the at least one object. The first object may be determined by the network device or the terminal device, which is not specifically limited herein.

That is to say, in the embodiments of the present disclosure, the objects that may report the first information may be configured by the network and/or supported by the UE. For example, the UE is capable of identifying information of the first object.

It can be understood that in the embodiments of the present disclosure, the first object may be an object configured by the network device and/or supported by the terminal device; and/or an object having time information or association information; and/or an object whose time or association requirement satisfies a first requirement condition; and/or an object configured to be able to perform a relevant behavior.

For example, in some embodiments, the first object may be an object configured by the network and/or supported by the UE, an object having delay information or sync/coordination information (or multi-modal information), an object whose delay or sync/coordination requirement (or multi-modal requirement) meets a certain condition, or an object configured to be able to perform a relevant behavior.

Further, delay information contained in the time information of the first information may be first delay information. The first delay information includes any one of the following: a delay difference(s) between objects with the association information; a delay difference(s) between a preset object with the association information and other object(s); a delay difference(s) between multiple objects with the association information; a delay of an object having data to be transmitted among multiple objects with the association information; a delay of an object having a longest delay tolerance among multiple objects with the association information; a delay of an object having a shortest delay tolerance among multiple objects with the association information; a delay of an object satisfying a first requirement among multiple objects with the association information; a delay difference between the shortest delays or a delay difference between the longest delays corresponding to objects with the association information; a delay difference(s) between a shortest delay of a preset object with the association information and shortest delay(s) of other object(s), or a delay difference(s) between a longest delay of a preset object with the association information and longest delay(s) of other object(s); a delay difference(s) between multiple shortest delays or a delay difference(s) between multiple longest delays corresponding to multiple objects with the association information; a delay of a shortest-delay data packet or a longest-delay data packet of an object having data to be transmitted among multiple objects with the association information; a delay of a shortest-delay data packet or a longest-delay data packet of an object having a longest delay tolerance among multiple objects with the association information; a delay of a shortest-delay data packet or a longest-delay data packet of an object having a shortest delay tolerance among multiple objects with the association information; or a delay of a shortest-delay data packet or a longest-delay data packet of an object satisfying a second requirement among multiple objects with the association information.

It should be noted that in the embodiments of the present disclosure, the first delay information may include multi-modal delay information, and the multi-modal information may be sync/coordination information.

For example, in some embodiments, the first delay information may be a delay difference between objects with a sync/coordination relationship, namely only the difference value between the two objects is provided, without taking compared objects into consideration.

For example, in some embodiments, the first delay information may be a delay difference of one object relative to another object having a sync/coordination relationship with the one object. That is, there is a definite compared object, and the difference value relative to the compared object is provided.

For example, in some embodiments, the first delay information may be respective delays of multiple objects with a sync/coordination relationship.

For example, in some embodiments, the first delay information may be a delay of an object having data to be transmitted among multiple objects with a sync/coordination relationship. For instance, there are two synchronized flows, transmission of one flow has completed while the other flow still has data to be transmitted, and the delay of the data is the first delay information. Alternatively, there are two synchronized data packets, one packet has been transmitted completely while the other still has data to be transmitted, and the delay of the residual data is the first delay information.

For example, in some embodiments, the first delay information may be a delay of an object having a shortest delay tolerance among multiple objects with a sync/coordination relationship.

For example, in some embodiments, the first delay information may be a delay of an object having a longest delay tolerance among multiple objects with a sync/coordination relationship.

For example, in some embodiments, the first delay information may be a delay of a specific object having a sync/coordination relationship (such as an object having a minimum index or maximum index), namely the delay of an object satisfying the first requirement.

For example, in some embodiments, the first delay information may be a delay difference between data packets with shortest delays of respective objects with a sync/coordination relationship, namely only a difference value between the two data packets is provided, without taking the compared objects into consideration.

For example, in some embodiments, the first delay information may be a delay difference between a data packet with a shortest delay of one object and a data packet with a shortest delay of another object having a sync/coordination relationship with the one object. That is, there is a definite compared object, and the difference value relative to this compared object is provided.

For example, in some embodiments, the first delay information may be respective delays of data packets with shortest delays of multiple objects with a sync/coordination relationship.

For example, in some embodiments, the first delay information may be a delay of a data packet with a shortest delay of an object having data to be transmitted among multiple objects with a sync/coordination relationship. For instance, there are two synchronized flows, transmission of one flow has completed and the other flow still has data to be transmitted. If there is data A with a shortest delay among the data to be transmitted, the delay of data A is provided. Alternatively, there are two synchronized data packets, one packet has been fully transmitted and the other packet has data to be transmitted, and the delay of the data to be transmitted is provided.

For example, in some embodiments, the first delay information may be a delay of a data packet with a shortest delay of an object having a shortest delay tolerance among multiple objects with a sync/coordination relationship. For example, if two synchronized objects have delays of 10ms (milliseconds) and 9ms respectively, and the object having 9ms delay includes two data packets with remaining delays of 5ms and 4ms respectively, then the delay information of 4ms is reported.

For example, in some embodiments, the first delay information may be a delay of a data packet with a shortest delay of an object having a longest delay tolerance among multiple objects with a sync/coordination relationship. For example, if two synchronized objects have delays of 10ms and 9ms respectively, and the object having 10ms delay includes two data packets with remaining delays of 5ms and 4ms respectively, then the delay information of 4ms is reported.

For example, in some embodiments, the first delay information may be a delay of a data packet of a specific object having a sync/coordination relationship (such as the object having a minimum index or maximum index), namely a delay of a data packet with a shortest delay or a longest delay of an object satisfying the second requirement.

For example, in some embodiments, the first delay information may be a delay of a data packet with a shortest delay of a specific object having a sync/coordination relationship (such as an object having a minimum index, maximum index, shortest delay or longest delay), namely a delay of a data packet with a shortest delay or a longest delay of an object satisfying the second requirement.

Further, timestamp information, i.e. time point information, contained in the time information of the first information may include the time information comprises the timestamp information, and the timestamp information comprises any one of: time of an object with the association information; a time difference(s) between a preset object with the association information and other object(s); a time difference(s) between multiple objects with the association information; time of an object having data to be transmitted among multiple objects with the association information; time of an object having a longest delay tolerance among multiple objects with the association information; time of an object having a shortest delay tolerance among multiple objects with the association information; time of an object satisfying a third requirement among multiple objects with the association information; a time difference(s) between shortest delays or a time difference(s) between longest delays corresponding to objects with the association information; time of an object whose remaining delay is less than or equal to a first threshold; a shortest time or a longest time of data in an LCH where an object whose remaining delay is less than or equal to a second threshold is located; respective time of all data in an LCH where an object whose remaining delay is less than or equal to a third threshold is located; a shortest time or a longest time of data in an LCG where an object whose remaining delay is less than or equal to a fourth threshold is located; respective time of all data in an LCG where an object whose remaining delay is less than or equal to a fifth threshold is located; a shortest time or a longest time of data in an LCH group where an object whose remaining delay is less than or equal to a sixth threshold is located; or respective time of all data in an LCH group where an object whose remaining delay is less than or equal to a seventh threshold is located.

It can be understood that in the embodiments of the present disclosure, the first requirement, the second requirement and the third requirement can be used to restrict object information. The three requirements may be identical or different, which is not specifically limited herein.

It can be understood that the first threshold to the seventh threshold may be used to limit remaining delay. All or part of these thresholds may be the same, or all thresholds may be different, which is not specifically limited herein.

Further, data volume information included in the first information may include any one of the following: information of an object with association information; information of an object corresponding to time information; information of an LCH where a data packet corresponding to time information is located; information of an LCG where a data packet corresponding to time information is located; information of an LCH group where a data packet corresponding to time information is located; or information of a first object and information of other object(s) associated with the first object.

For example, in some embodiments, the data volume information may be information of an object having a sync/coordination relationship.

For example, in some embodiments, the data volume information may be data volume information of an object corresponding to the reported time information.

For example, in some embodiments, the data volume information may be information of an LCH/LCG/LCH group where a data packet corresponding to the reported time information is located.

For example, in some embodiments, the data volume information may include information of an object, specifically information of a first object or overall information associated with the first object. For example, in a multi-modal case, data 1 is indicated, while information of data 1 and associated data 2 is reported.

Further, in the embodiments of the present disclosure, delay information included in the time information may further include second delay information. The second delay information includes remaining delay information, and the remaining delay information includes any one of the following: delay information of a first object; delay information of the first object in a case of satisfying a first preset trigger condition; delay information of the first object in a case of transmitting the first information; delay information of a data packet with a shortest delay of the first object.

It should be noted that in the embodiments of the present disclosure, the second delay information may be remaining delay information, such as delay information of a first object, delay information of the first object meeting a first preset trigger condition, delay information of the first object in a case of reporting the first information, or delay information of a data packet with a shortest delay of the first object.

It should be noted that in the embodiments of the present disclosure, the first preset trigger condition may include but is not limited to a trigger condition for reporting the first information, and the trigger condition for reporting the first information includes a first trigger condition and/or a second trigger condition.

That is to say, the first preset trigger condition may be a trigger condition for reporting the first information, or may be different from the trigger condition for reporting the first information, or include other trigger condition(s) apart from the trigger condition for reporting the first information, which is not limited herein.

For example, in some embodiments, the remaining delay information may represent the remaining time to meet the PDB/PSDB requirements, or the remaining time before timeout of the PDCP discard timer.

Further, the delay information may include a delay index or a delay value; the data volume information may include a data volume index or a data volume value.

It should be noted that the delay information and/or data volume information may be expressed in the form of an index value or a specific numerical value.

It can be understood that a mapping relationship between indexes and delay information and/or data volume information can be predetermined, and a corresponding value of delay information and/or data volume information can be determined according to the mapping relationship and the index value.

It can be understood that the mapping relationship between indexes and delay information and/or data volume information can be determined based on a threshold or a range.

It should be noted that the threshold or range for determining the mapping relationship between indexes and delay information and/or data volume information can be predefined, determined according to a table, or indicated by RRC.

For example, in some embodiments, the mapping relationship between indexes and delay information is shown in Table 1. Different value ranges of delay information correspond to different index values. For instance, the index value is 0 when the range of the delay information is (0ms, 2ms], and the index value is 1 when the range of the delay information is (2ms, 4ms].

**Table 1**

| Index value | Delay information |
|---|---|
| 0 | (0ms, 2ms] |
| 1 | (2ms, 4ms] |
| ... | ... |

For example, in some embodiments, the mapping relationship between indexes and data volume information is shown in Table 2. Different value ranges of data volume information correspond to different index values. For instance, the index value is 0 when the range of the data volume information is (1 slot, 3 slots], and the index value is 1 when the range of the data volume information is (3 slots, 5 slots].

**Table 2**

| Index value | Delay information |
|---|---|
| 0 | (1 slot, 3 slots] |
| 1 | (3 slots, 5 slots] |
| ... | ... |

For example, in some embodiments, if the delay information is expressed by a specific value, the value of the delay information, such as 5ms, can be directly indicated; if the data volume information is expressed by a specific value, the value of the data volume information, such as 4 slots, can be directly indicated.

It should be noted that, in the embodiments of the present disclosure, the first information including delay information and/or data volume information may be reported for a terminal device, that is, reported at the granularity of the terminal device, representing the overall information of the terminal device (for example, a specific data volume corresponding to a delay among all data to be transmitted by the UE, and/or one or more delay values in a case where the delay satisfies a first threshold), or reported for object information (for example, reporting information of a certain LCH or a certain data packet).

It can be understood that the network device acquires one or more of time information, data volume information and association information through the first information transmitted by the terminal device.

For example, in some embodiments, taking the network device as a base station as an example, the base station receives first information transmitted by the UE (User Equipment/terminal device), enabling the base station to obtain time information and/or data volume information and/or sync/coordination information, and/or the first information may also be used for the base station to perform scheduling, resource allocation, or parameter configuration.

Further, in the embodiments of the present disclosure, the first information received by the network device is carried in any one of the following: Medium Access Control Control Element Medium Access Control Control Element MAC CE); Uplink Control Information (UCI); or Radio Resource Control (RRC).

It should be noted that, in the embodiments of the present disclosure, the MAC CE includes a first MAC CE or a second MAC CE, where the first MAC CE is different from the second MAC CE.

It can be understood that, in the embodiments of the present disclosure, the first MAC CE may be a newly introduced MAC CE, and the second MAC CE may include any one of the following: a Delay Status Report (DSR) MAC CE, an enhanced DSR MAC CE, a Buffer Status Report (BSR) MAC CE, or an enhanced BSR MAC CE.

That is to say, in the embodiments of the present disclosure, the first information may be carried using a MAC CE, UCI, or RRC. The MAC CE may be a newly introduced MAC CE; the MAC CE may also be a DSR MAC CE, or an enhanced DSR MAC CE; the MAC CE may also be a BSR MAC CE, or an enhanced BSR MAC CE.

Further, in the embodiments of the present disclosure, the first information is carried in a MAC CE indicated by a Logical Channel Identifier (LCID); or, the first information is carried in a MAC CE indicated by one or more bits.

It should be noted that, in the embodiments of the present disclosure, an LCID can be introduced to indicate the MAC CE carrying the first information.

For example, in some embodiments, a new LCID can be used to indicate whether the MAC CE is an enhanced DSR MAC CE or an original DSR MAC CE.

That is to say, in the embodiments of the present disclosure, the new LCID indicates whether the delay information and/or data volume information relies on the definition in the original DSR MAC CE or the definition in the enhanced DSR MAC CE.

For example, in some embodiments, a new LCID can be used to distinguish that the reported information is directed to the first information and not to the DSR.

For example, in some embodiments, a new LCID can indicate whether information of an object having a sync relationship (e.g., at least one of a delay difference, a data volume, and a minimum delay of the object, or of data packets of the object) is included.

For example, in some embodiments, a new LCID can indicate whether the MAC CE is an enhanced BSR MAC CE or an original BSR MAC CE.

That is to say, in the embodiments of the present disclosure, the new LCID indicates whether the data volume information relies on the definition in the original BSR MAC CE or the definition in the enhanced BSR MAC CE.

Correspondingly, in the embodiments of the present disclosure, based on the new LCID, the network device can learn that it is the definition in the enhanced BSR MAC CE, and thereby know that these data volumes have a delay requirement and need to be scheduled as soon as possible.

It should be noted that, in the embodiments of the present disclosure, a new bit(s) can be introduced to indicate the MAC CE carrying the first information.

For example, in some embodiments, a new bit(s) can be introduced in the MAC CE to indicate whether the delay information and/or data volume information relies on the definition in the original DSR MAC CE or the definition in the enhanced DSR MAC CE.

For example, in some embodiments, a new bit(s) can be introduced in the MAC CE to indicate whether information of an object having a sync/coordination relationship (for instance, at least one of a delay difference, a data volume, or a minimum delay of the object, or at least one of a delay difference, a data volume, and a minimum delay of a data packet of the object) is included.

For example, in some embodiments, the data packet of the object may be a specific data packet. For instance, the specific data packet may be a data packet with the minimum delay, or a data packet of the object associated with an object that triggers a DSR report.

For example, in some embodiments, a new bit(s) can be introduced in the MAC CE to indicate whether the data volume information relies on the definition in the original DSR MAC CE or the definition in the enhanced BSR MAC CE.

Further, in the embodiments of the present disclosure, the time information is determined by an application layer; and/or, the time information is determined by a terminal device implementation; and/or, the time information is carried in a packet header; and/or, the time information is determined according to a Packet Data Convergence Protocol (PDCP) discard timer; and/or, the time information is determined according to the time when a data packet arrives at a PDCP or Radio Link Control (RLC); and/or, the time information is determined according to the waiting time of a data packet in a PDCP or RLC; and/or, the time information is determined according to a Packet Delay Budget (PDB) or a PDU set Delay Budget (PSDB) of a data packet.

For example, in some embodiments, the delay information within the time information can be determined according to the PDCP discard timer, or determined according to the time when the data packet arrives at the PDCP/RLC, or determined according to the waiting time of the data packet in the PDCP/RLC, or determined according to the PDB/PSDB of the data packet.

For example, in some embodiments, the delay information within the time information may also be determined based on at least two of the above factors. For instance, the remaining time of the discard timer is the delay. For example, if the PDB is 3ms and the data packet has waited 1ms in the PDCP, the delay is 2ms. For example, if the PDB is 2ms, the delay is 2ms.

Further, in the embodiments of the present disclosure, the data volume information may be determined according to whether there is association information; and/or, the data volume information is determined according to whether there is data with time information; and/or, the data volume information is determined according to a data volume of a data packet in a PDCP or RLC buffer; and/or, the data volume information is determined according to the size of a Control PDU; and/or, the data volume information is determined according to a transmission type.

For example, in some embodiments, the data volume information can be determined according to whether there is a sync/coordination relationship, or determined according to the data volume of a data packet in the PDCP/RLC buffer, or determined according to the size of a control PDU, or determined according to whether it is a new transmission or a retransmission.

For example, in some embodiments, the data volume information within the time information may also be determined based on at least two of the above factors.

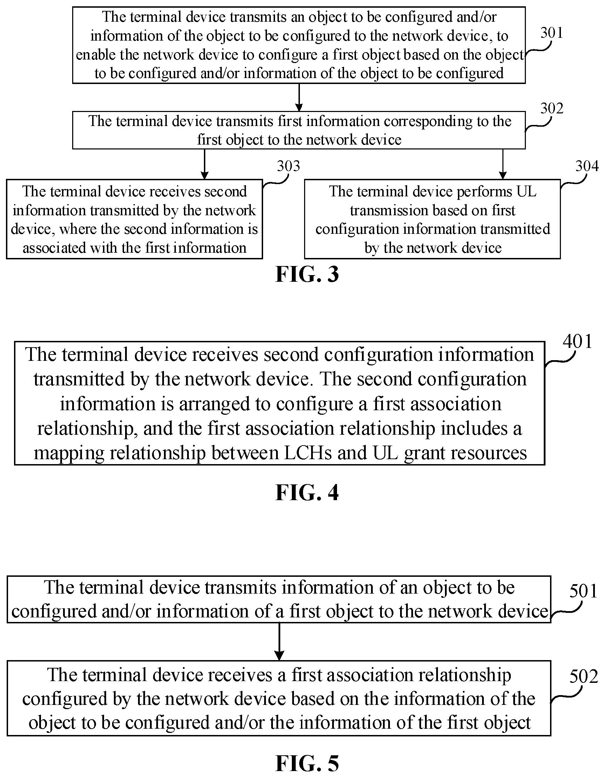

Further, in the embodiments of the present disclosure, FIG. 3 is a second schematic diagram of a wireless communication method according to an embodiment of the present disclosure. As shown in FIG. 3, the method for a terminal device to perform wireless communication may include the following operations.

At operation 301, the terminal device transmits an object(s) to be configured and/or information of the object(s) to be configured to the network device, to enable the network device to configure a first object based on the object(s) to be configured and/or the information of the object(s) to be configured.

In the embodiments of the present disclosure, the terminal device may transmit the object(s) to be configured and/or the information of the object(s) to be configured to the network device, where the object(s) to be configured includes any one of the following: an object(s) with association information; an object(s) supported by the terminal device; or an object(s) supporting delay-based scheduling.

It can be understood that, in the embodiments of the present disclosure, the terminal device may first report the object(s) to be configured and/or the information of the object(s) to be configured to the network device, and then the network device determines which object(s) can report corresponding first information, that is, determining the first object.

It can be understood that, in the embodiments of the present disclosure, the object(s) to be configured reported by the terminal device may be the same as the first object determined by the network device, or the object(s) to be configured reported by the terminal device may include the first object determined by the network device, that is, the first object may be a subset of the object(s) to be configured, which is not limited in the present disclosure.

For example, in some embodiments, the terminal device reports object(s) with a sync/coordination relationship, such as QoS flow, data flow, LCH, LCH group, LCG, DRB, and the network device configures, based on the report, which object(s) can report the first information, that is, determining the first object. The object(s) reported by the terminal device may be the same as the first object, or the first object may be a subset of the reported object(s).

For example, in some embodiments, the terminal device reports information of an object(s) that can identify or report the first information, or information of an object(s) that can identify or report delay-based scheduling, such as QoS flow, data flow, LCH, LCH group, LCG, DRB. The network device configures which object(s) can report the first information based on the report, that is, determining the first object. The object(s) reported by the terminal device may be the same as the first object, or the first object may be a subset of the reported object(s).

At operation 302, the terminal device transmits first information corresponding to the first object to the network device.

In the embodiments of the present disclosure, the terminal device may transmit the first information corresponding to the first object to the network device. Herein, the terminal device may transmit the first information corresponding to the first object to the network device based on network configuration.

Further, in the embodiments of the present disclosure, in the case of reporting the first information corresponding to the first object based on network configuration, the terminal device may first report the object and/or the information of the object to the network device, and then the network device determines which object(s) can report the corresponding first information, that is, determining the first object, thereby enabling the terminal device to transmit the first information corresponding to the first object to the network device based on the network configuration.

At operation 303, the terminal device receives second information transmitted by the network device, where the second information is associated with the first information.

In the embodiments of the present disclosure, after transmitting the first information corresponding to the first object to the network device, the terminal device may further receive second information transmitted by the network device, where the second information is associated with the first information, that is, the second information may be determined by the network device based on the first information.

It should be noted that, in the embodiments of the present disclosure, the second information may include at least one of the following: scheduling information, resource allocation information, or parameter configuration information.

At operation 304, the terminal device performs a UL transmission based on first configuration information transmitted by the network device.

In the embodiments of the present disclosure, after transmitting the first information corresponding to the first object to the network device, the terminal device may further perform a UL (Uplink) transmission based on the first configuration information transmitted by the network device.

It can be understood that in the embodiments of the present disclosure, the first configuration information is associated with the first information, that is, the first configuration information may be determined by the network device based on the first information.

That is to say, in the embodiments of the present disclosure, the terminal device transmits the first information to the network device, so that the network device can acquire one or more of time information, data volume information and association information based on the first information, and perform corresponding scheduling processing, allocation processing or configuration processing accordingly.

It can be understood that in the embodiments of the present disclosure, the network device may further determine the second information and/or the first configuration information according to the received first information, and perform corresponding scheduling, allocation or configuration processing based on the second information and/or the first configuration information.

It can be understood that, in the embodiments of the present disclosure, which objects can report the first information can be configured by the network or supported by the terminal device, that is, the terminal device has the capability to identify the information of the first object. Therefore, the terminal device can also directly transmit the first information corresponding to the first object to the network device.

For example, in some embodiments, for sync, the UE reports LCH1 and LCH2 as objects with sync requirements, and the reporting is semi-static (such as UE assistance information, or RRC method) or dynamic (such as MAC CE or RRC). Optionally, the network configures the UE to report the first information.

For example, in some embodiments, for sync, LCH1 and LCH2 are objects with sync requirements, and a new MAC CE or an enhanced DSR MAC CE is used to report the first information. In the first information, the respective delays (such as the minimum remaining delay) of LCH1 and LCH2 are indicated. Further, for the delay, corresponding data volume information is respectively indicated. Optionally, the delay is that of an LCH or of a data packet (such as a specific data packet, or data with the minimum delay).

For example, in some embodiments, for sync, LCH1 and LCH2 are objects with sync requirements, and a new MAC CE or an enhanced DSR MAC CE is used to report the first information. In the first information, the delay difference between LCH2 and LCH1 is indicated. Further, the data volume information of LCH2 and/or LCH1 is indicated. Optionally, the delay is that of an LCH or of a data packet (such as a specific data packet, or the data packet with the minimum delay).

For example, in some embodiments, for sync, LCH1 and LCH2 are objects with sync requirements. When the remaining delay of LCH1 and/or LCH2 is less than threshold 1, the remaining delay of LCH1 and/or LCH2 is reported, and/or the delay difference between LCH1 and LCH2 is reported. Further, the data volume information of LCH2 and/or LCH1 is indicated. Optionally, the delay is that of an LCH or of a data packet (such as a specific data packet, or data with the minimum delay).

For example, in some embodiments, for sync, LCH1 and LCH2 are objects with sync requirements. In the case where data of LCH1 and/or LCH2 arrives, the remaining delay of LCH1 and/or LCH2 is reported, and/or the delay difference between LCH1 and LCH2 is reported. Further, the data volume information of LCH2 and/or LCH1 is indicated. Optionally, the delay is that of an LCH or of a data packet (such as a specific data packet, or data with the minimum delay).

For example, in some embodiments, for sync, LCH1 and LCH2 are objects with sync requirements, and a new MAC CE or an enhanced DSR MAC CE is used to report the first information. Under the condition of acquiring the delay difference between LCH1 and LCH2, and learning that data packets have been acquired (e.g., between respective specific data packets of LCH1 and LCH2, or between data packets of LCH1 and LCH2 in each cycle, or between a data packet with the shortest delay and its sync data packet, or between respective data packets of LCH1 and LCH2 within a period of time), the first information is reported.

For example, in some embodiments, for sync, LCH1 and LCH2 are objects with sync requirements, and a new MAC CE or an enhanced DSR MAC CE is used to report the first information. If LCH1 triggers a DSR report, in the case of reporting the DSR information of LCH1, the delay and/or data volume information of LCH2 or a data packet of LCH2 is reported. The data packet of LCH2 is a data packet in LCH2 associated with LCH1, or a data packet of LCH2 associated with the data packet triggering the LCH1 DSR report, or a data packet in LCH2 with the minimum remaining delay, or a data packet in LCH2 with a remaining delay less than threshold M.

For example, in some embodiments, for sync, LCH1 and LCH2 are objects with sync requirements, and a new MAC CE or an enhanced DSR MAC CE is used to report the first information. If LCH1 and LCH2, or the data packet of LCH1 and the data packet of LCH2, have a delay difference less than or equal to threshold B, then the first information is reported, or the reporting of the first information is triggered.

It can be understood that, in the embodiments of the present disclosure, any one or more of the multiple examples described above can also be used in combination, or used independently; the present disclosure does not make any specific limitations.

For example, in some embodiments, for delay-based scheduling, the UE reports itself as a UE supporting delay-based scheduling, or reports that LCH1 can support delay-based scheduling. Optionally, the network configures LCH1 of the UE to report the first information.

For example, in some embodiments, for delay-based scheduling, LCH1 is an LCH capable of reporting delay information, or LCH1 is an LCH supporting delay-based scheduling, or the UE is a UE capable of reporting delay information, or the UE is a UE supporting delay-based scheduling, and the network configures the UE to report the first information. If a new MAC CE or an enhanced DSR MAC CE is used to report the first information, the delay (e.g., minimum remaining delay) of LCH1 is indicated in the first information. Further, for the delay, corresponding data volume information is indicated. Optionally, the delay is that of an LCH or of a data packet (such as a specific data packet, or data with the minimum delay).

For example, in some embodiments, for delay-based scheduling, LCH1 is an LCH capable of reporting delay information, or LCH1 is an LCH supporting delay-based scheduling, or the UE is a UE capable of reporting delay information, or the UE is a UE supporting delay-based scheduling, and the network configures the UE to report the first information. If a new MAC CE or an enhanced BSR MAC CE is used to report the first information, the data volume of LCH1 or of the LCG where LCH1 is located is indicated in the first information (e.g., the data volume of a data packet with the minimum remaining delay, or the data volume of data packets less than a delay threshold, or the data volume of LCH1, or the data volume of the LCG where LCH1 is located).

For example, in some embodiments, for delay-based scheduling, LCH1 is an LCH capable of reporting delay information, or LCH1 is an LCH supporting delay-based scheduling, or the UE is a UE capable of reporting delay information, or the UE is a UE supporting delay-based scheduling, and the network configures the UE to report the first information. The UE reports the first information in the case where data arrives, or the delay is less than or equal to threshold A.

It can be understood that, in the embodiments of the present disclosure, any one or more of the multiple examples described above can also be used in combination, or used independently; the present disclosure does not make any specific limitations.

The present disclosure provides a wireless communication method, in which a terminal device can report first information including time information, and/or data volume information, and/or association information to a network device, thereby enabling the network device to perform scheduling, resource allocation, or parameter configuration based on the first information. It can be seen that in the embodiments of the present disclosure, the transmission or behavior of sync/coordination info can be supported, while simultaneously supporting delay-based scheduling over the air interface, which in turn can support multi-modal service transmission over the air interface, effectively improving communication performance.

Based on the above embodiments, yet another embodiment of the present disclosure proposes a wireless communication method applicable to a terminal device. FIG. 4 is a third schematic diagram of a wireless communication method according to an embodiment of the present disclosure. As shown in FIG. 4, the method for the terminal device to perform wireless communication may include the following operations.

At operation 401, the terminal device receives second configuration information transmitted by the network device, where the second configuration information is arranged to configure a first association relationship, and the first association relationship includes a mapping relationship between LCHs and UL grant resources.

In the embodiments of the present disclosure, the terminal device may receive the second configuration information transmitted by the network device. The second configuration information is arranged to configure the first association relationship. Here, the first association relationship can characterize an association relationship between LCHs and UL grants.

That is to say, in the embodiments of the present disclosure, an association relationship between LCHs and UL grants can be introduced.

Further, in the embodiments of the present disclosure, the first association relationship may be configured by the network device based on information of an object reported by the terminal device. Here, after receiving the information of the object reported by the terminal device, the network device may configure the second configuration information based on the information of the object, and thereby complete the configuration of the first association relationship through the issued second configuration. The information of the object may include information of an object to be configured and/or information of a first object.

It should be noted that, in the embodiments of the present disclosure, the first association relationship may include a mapping relationship between LCHs and UL grant resources. That is, the first association relationship can be used to determine a carrying or mapping relationship between LCHs and UL grants.

It should be noted that, in the embodiments of the present disclosure, the first association relationship may include an LCH mapping restriction.

Further, in the embodiments of the present disclosure, the UL grant resources include Dynamic Grant (DG) resources, and correspondingly, the first association relationship may also include a mapping relationship between LCHs and DG resources.

It can be understood that, in the embodiments of the present disclosure, the network-configured first association relationship can be used to determine data of which LCHs can be carried on a specific DG (such as a first DG resource) for transmission.

Further, in the embodiments of the present disclosure, the network device transmits first indication information to the terminal device, where the first indication information is arranged to indicate a first identifier, and the first identifier corresponds to a channel to be transmitted that is carried by the first DG resource.

That is to say, in the embodiments of the present disclosure, based on the first identifier indicated by the first indication information, the channel to be transmitted corresponding to the first identifier can be carried on the first DG resource.

It should be noted that, in the embodiments of the present disclosure, the first indication information may include Downlink Control Information (DCI), that is, indicating the first identifier through DCI.

It should be noted that, in the embodiments of the present disclosure, the channel to be transmitted may include an LCH or an LCG.

Further, in the embodiments of the present disclosure, based on the first association relationship, the channel to be transmitted indicated by the first identifier can be transmitted through the first DG; or, the channel to be transmitted indicated by the first identifier can be transmitted preferentially through the first DG; or, the channel to be transmitted indicated by the first identifier can be transmitted with low priority through the first DG.

That is to say, in the embodiments of the present disclosure, the network device can configure the first association relationship. The first association relationship is an LCH mapping restriction, or it is used to determine a carrying or mapping relationship between LCHs and UL grants.

For example, in some embodiments, for a UL DG, the network configures a first association relationship for determining data of which LCHs can be carried on a specific DG for transmission.

For example, in some embodiments, the DCI can indicate an LCH or LCG identifier (the first identifier corresponding to the channel to be transmitted) that can be carried by a specific DG. In the case of configuring an LCH or LCG, whether the LCH or LCG can be transmitted with the specific DG is indicated, or whether the specific DG can be used preferentially for transmission, or whether the specific DG can be used with low priority for transmission.

Further, in the embodiments of the present disclosure, the UL grant indicated by the second configuration information can exclusively be used to transmit data of the first object; or, the UL grant indicated by the second configuration information can preferentially be used to transmit data of the first object; or, the UL grant indicated by the second configuration information can be used to transmit data of the first object having low priority.

Further, in the embodiments of the present disclosure, the UL grant indicated by the second configuration information can exclusively transmit data of an object with association information; or, the UL grant indicated by the second configuration information can preferentially transmit data of an object with association information; or, the UL grant indicated by the second configuration information can transmit data of an object with association information with low priority.

That is to say, in the embodiments of the present disclosure, for a UL grant, the network configures whether to exclusively perform transmission of data of the first object, or whether to prioritize transmission of data of the first object, or whether to assign low priority to the transmission of data of the first object, or whether to exclusively perform transmission of objects with a sync/coordination relationship, or whether to prioritize transmission of objects with a sync/coordination relationship, or whether to assign low priority to the transmission of objects with a sync/coordination relationship.

It should be noted that, in the embodiments of the present disclosure, the first object may be an object capable of reporting the corresponding first information. The first object may be determined by the network device, or may also be determined by the terminal device, which is not specifically limited in the present disclosure.

That is to say, in the embodiments of the present disclosure, which object(s) can report the first information can be configured by the network, and/or supported by the UE; for example, the UE has the capability to identify the information of the first object.

It can be understood that, in the embodiments of the present disclosure, the first object may be an object configured by the network device and/or supported by the terminal device; and/or, the first object may be an object having time information or association information; and/or, the first object may be an object whose time or relationship requirement satisfies a first requirement condition; and/or, the first object is an object configured to be able to perform a related behavior(s).

For example, in some embodiments, the first object may be an object configured by the network and/or supported by the UE, or may be an object having delay information or sync/coordination info (or multi-modal information), or may be an object whose delay or sync/coordination requirement (or multi-modal requirement) satisfies a certain condition, or may be an object configured to be able to perform a related behavior(s).

For example, in some embodiments, for UL grant1, if there are data packets with a sync/coordination relationship, then the data packets with a sync/coordination relationship are carried on UL grant1. Further, if there are remaining bits in the UL grant, they can carry a data packet(s) of other LCHs.

For example, in some embodiments, for UL grant1, if there is/are a data packet(s) of the first object, then the data packet(s) of the first object is/are carried on UL grant1. Further, if there are remaining bits in the UL grant, they can carry a data packet(s) of other LCHs.

Further, in the embodiments of the present disclosure, for a UL grant, the network configures whether to exclusively carry the transmission of data of the first object, or whether to exclusively carry the transmission of an object(s) with a sync/coordination relationship.

For example, in some embodiments, for UL grant1, if there are data packets with a sync/coordination relationship, then the data packets with a sync/coordination relationship are carried on UL grant1. Further, if there are remaining bits in the UL grant, they can carry padding.

For example, in some embodiments, for UL grant1, if there is/are a data packet(s) of the first object, then the data packet(s) of the first object is/are carried on UL grant1. Further, if there are remaining bits in the UL grant, they can carry padding.

Further, in the embodiments of the present disclosure, FIG. 5 is a fourth schematic diagram of a wireless communication method according to the present disclosure. As shown in FIG. 5, the method for the terminal device to perform wireless communication may include the following operations.

At operation 501, the terminal device transmits information of an object to be configured and/or information of a first object to the network device.

In the embodiments of the present disclosure, the terminal device transmits information of an object to be configured and/or information of a first object to the network device. The object to be configured includes any one of the following: an object with association information; an object supported by the terminal device; or an object supporting delay-based scheduling.

For example, in some embodiments, the terminal device reports objects having a sync/coordination relationship, such as QoS flow, data flow, LCH, LCH group, LCG, or DRB.

For example, in some embodiments, the terminal device reports information of an object capable of identifying or reporting the first information, or information of an object capable of identifying or reporting delay-based scheduling. For example, QoS flow, data flow, LCH, LCH group, LCG, or DRB.

At operation 502, the terminal device receives a first association relationship transmitted by the network device configured based on the information of the object to be configured and/or the information of the first object.

In the embodiments of the present disclosure, after transmitting the information of the object to be configured and/or the information of the first object to the network device, the terminal device may receive second configuration information transmitted by the network device, where the second configuration information may be arranged to configure the first association relationship, and the first association relationship may be configured by the network device based on the information of the object to be configured and/or the information of the first object.

Further, in the embodiments of the present disclosure, the network device may use the received information of the object to be configured and/or the information of the first object to determine the first association relationship, wherein the network device may configure the second configuration information, thereby completing the configuration of the first association relationship through the second configuration information.

That is to say, in the embodiments of the present disclosure, the terminal device transmits the information of the object to be configured and/or the information of the first object to the network device, thereby enabling the network device to configure the first association relationship based on the information of the object to be configured and/or the information of the first object.

For example, in some embodiments, a first association relationship is introduced. For example, LCH mapping restriction X is introduced; LCH mapping restriction X is used to indicate which LCH(s) (such as LCH1 and LCH2, or LCH3) can be transmitted on DG type A (a specific DG). If the network schedules a DG, it indicates in the DCI whether the UL grant is DG type A. If a DG is DG type A, then only LCH(s) corresponding to DG type A (such as LCH1 and LCH2, or LCH3) can be transmitted using this DG.

For example, in some embodiments, a first association relationship is introduced. For example, LCH mapping restriction Y is introduced; LCH mapping restriction Y is used to indicate which LCH(s) (such as LCH1 and LCH2, or LCH3) can be transmitted on DG type A. If the network schedules a DG, it indicates in the DCI whether the UL grant is DG type A. If a DG is DG type A, then LCH(s) corresponding to DG type A (such as LCH1 and LCH2, or LCH3) has/have priority to be transmitted using this DG. If the DG has remaining bits, it can further carry data of other LCHs.

For example, in some embodiments, a first association relationship is introduced. For example, LCH mapping restriction Z is introduced; LCH mapping restriction Z is used to indicate which LCH(s) (such as LCH1 and LCH2, or LCH3) can be transmitted on CG type A. If the network configures a CG (Configured Grant), it indicates in the DCI whether the UL grant is CG type A. If a CG is CG type A, then LCH(s) corresponding to CG type A (such as LCH1 and LCH2, or LCH3) has/have priority to be transmitted using this DG. If the CG has remaining bits, it can further carry data of other LCHs.

For example, in some embodiments, a first association relationship is introduced. For example, LCH mapping restriction X is introduced; LCH mapping restriction X is used to indicate which LCH(s) (such as LCH1 and LCH2, or LCH3) can be transmitted on CG type A or DG type A. If the size of the LCH list is 0 or the LCH list is NULL, then no LCH can be carried and transmitted on CG type A or DG type A. If the LCH list does not appear, it represents that the LCH can be transmitted on any CG and/or DG.

The present disclosure provides a wireless communication method. By introducing a new mapping relationship between LCHs and UL grants, the transmission of a specific LCH can be guaranteed, and under certain possibilities, the transmission of other LCHs can also be guaranteed. It is evident that in the embodiments of the present disclosure, multi-modal service transmission can be supported over the air interface, effectively improving communication performance.

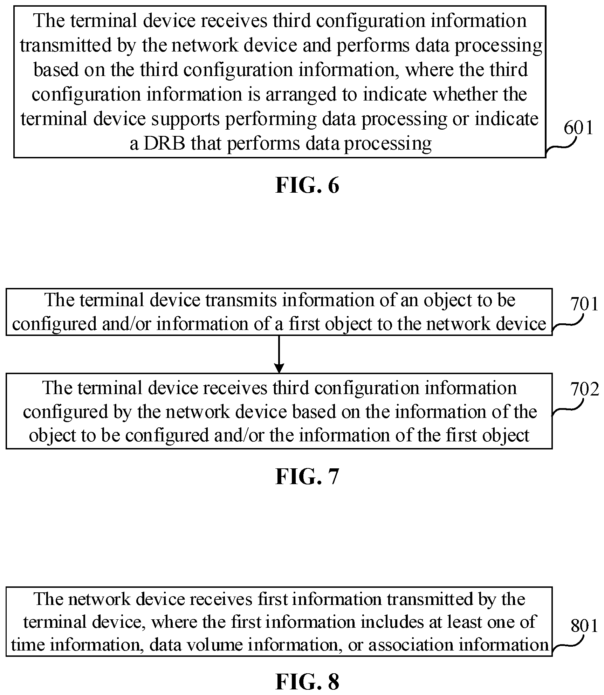

Based on the above embodiments, yet another embodiment of the present disclosure provides a wireless communication method, which can be applied to a terminal device. FIG. 6 is a fifth schematic diagram of the wireless communication method according to an embodiment of the present disclosure. As shown in FIG. 6, the method for the terminal device to perform wireless communication may include the following operations.

At operation 601, the terminal device receives third configuration information transmitted by a network device, and performs data processing based on the third configuration information; wherein the third configuration information is arranged to indicate whether the terminal device supports performing the data processing; or to indicate a DRB that performs the data processing.

In the embodiments of the present disclosure, the terminal device may receive the third configuration information transmitted by the network device, and then may perform data processing based on the third configuration information.

It should be noted that, in the embodiments of the present disclosure, the third configuration information is arranged to indicate whether the terminal device supports performing the data processing; or to indicate the DRB that performs the data processing.

Further, in the embodiments of the present disclosure, the data processing may include data processing based on third information; the third information includes first information, and the first information includes association information and/or time information.

That is to say, in the embodiments of the present disclosure, the terminal device may perform data processing based on the third information. The third information may include the first information, and the first information may include association information and/or time information.

It should be noted that, in the embodiments of the present disclosure, the first information may include at least one of time information, data volume information, or association information.

It should be noted that, in the embodiments of the present disclosure, the first information may also include at least one of time information, data volume information, or transmission mode information.

It should be noted that, in the embodiments of the present disclosure, the first information may include time information. The time information may include delay information and/or timestamp information. Herein, the timestamp information can be understood as time point information.

It should be noted that, in the embodiments of the present disclosure, the first information may include data volume information. Herein, the data volume information can be used for the network device to learn about data related to the time information, thereby enabling the scheduling of corresponding data to be completed or resources to be allocated for the corresponding data before a time point required by a delay.

It should be noted that, in the embodiments of the present disclosure, the first information may include association information. Herein, the association information can be understood as synchronization/coordination information. For example, the association information may be sync/coordination info.

It can be understood that, in the embodiments of the present disclosure, the association information can be arranged to indicate an object having a first association relationship, and/or to indicate whether the object has a demand for association information.

That is to say, in the embodiments of the present disclosure, the association information included in the first information can be arranged to indicate at least one of the following: a second object having a first association relationship among objects corresponding to the association information; and whether a third object corresponding to the association information has a association demand.

For example, in some embodiments, taking the association information as sync/coordination info for example, the sync/coordination info can be arranged to indicate which object(s) has/have a sync/coordination relationship, or to indicate whether a certain object has a demand for sync/coordination info.

It should be noted that, in the embodiments of the present disclosure, both the association information and the time information (such as delay information) in the first information can be simultaneously reported or used (function) by the terminal device.

For example, in some embodiments, the sync/coordination info needs to be reported together with the delay information, or used (functioned) together.

Further, in the embodiments of the present disclosure, the first information may include at least one piece of time information and/or at least one piece of data volume information. Herein, the at least one piece of time information and the at least one piece of data volume information may have a one-to-one correspondence.

Further, in the embodiments of the present disclosure, the first information may also include information of at least one object, and the information of the at least one object corresponds to at least one of the time information, the data volume information, or the association information.

That is to say, in the embodiments of the present disclosure, the information of the object may include object information corresponding to the time information, and/or object information corresponding to the data volume information, or object information having a sync/coordination relationship.

It should be noted that, in the embodiments of the present disclosure, the at least one object includes an object having a first association relationship and/or an object satisfying a preset delay condition.

It can be understood that, in the embodiments of the present disclosure, an object having a first association relationship can be understood as an object having a sync/coordination relationship, that is, a multi-modal object.

It can be understood that, in the embodiments of the present disclosure, the preset delay condition can characterize a certain delay requirement or demand, for example, a remaining delay satisfies a preset threshold.

That is to say, in the embodiments of the present disclosure, an object among the at least one object may be a multi-modal object, or an object whose remaining delay satisfies a certain requirement.

Further, in the embodiments of the present disclosure, an object among the at least one object includes one of the following: a PDU, an SDU, a data packet, a PDU set, a data burst, a DRB, an RLC, a QoS flow, or a PDU session.

That is to say, in the embodiments of the present disclosure, a certain object may be any one of a PDU, an SDU, a data packet, a PDU set, a data burst, a DRB, an RLC, a QoS flow, or a PDU session, which is not specifically limited in the present disclosure.

Further, in the embodiments of the present disclosure, when the terminal device performs data processing based on the third information, the terminal device activates or deactivates PDCP discard processing based on the association information or time information.

That is to say, in the embodiments of the present disclosure, the data processing may include PDCP discard processing based on association information and/or time information. For example, the data processing may be PDCP discard processing based on multi-modal information (i.e., association information) or remaining delay information.

Further, in the embodiments of the present disclosure, the PDCP discard processing based on association information or time information is performed or activated or deactivated by the terminal device.

Further, in the embodiments of the present disclosure, the PDCP discard processing based on association information or time information is performed or activated or deactivated by a MAC entity.

That is to say, in the embodiments of the present disclosure, the data processing may be performed or activated or deactivated per UE or per MAC entity.

Further, in the embodiments of the present disclosure, the PDCP discard processing based on association information or time information is performed or activated or deactivated by a DRB.

That is to say, in the embodiments of the present disclosure, the data processing may be performed or activated or deactivated per DRB.

Further, in the embodiments of the present disclosure, the PDCP discard processing based on association information or time information is performed at a PDCP entity.

That is to say, in the embodiments of the present disclosure, the data processing may be performed at a PDCP entity.

Further, in the embodiments of the present disclosure, the PDCP determines whether to perform the PDCP discard processing based on association information or time information.

Further, in the embodiments of the present disclosure, whether to perform the PDCP discard processing based on association information or time information is indicated by the network device.

Further, in the embodiments of the present disclosure, the MAC notifies the PDCP whether to perform the PDCP discard processing based on association information or time information.

That is to say, in the embodiments of the present disclosure, whether to perform the data processing may be determined by the PDCP, or indicated by the network, or notified by the UE MAC to the UE PDCP. It is evident that, apart from the indication through the third configuration information, other methods can also be employed to determine whether to perform the data processing.

It can be understood that, in the embodiments of the present disclosure, the data processing may be performed in consideration of multi-modal information (association information) or remaining delay information (time information), in a case of being under a PDCP discard mechanism.

Further, in the embodiments of the present disclosure, during the PDCP discard processing based on association information or time information, in a case where a data packet of a fourth object among objects with association information is deleted, associated data packets of other objects associated with the fourth object may be deleted.

For example, in some embodiments, for objects having a sync/coordination relationship, if a data packet of one of the objects (the fourth object) is deleted (or discarded), the PDCP also deletes the associated data packet of another object.

It should be noted that, in the embodiments of the present disclosure, if the associated objects correspond to different PDCPs or DRBs, the PDCPs interact with each other to notify the counterpart whether to delete a data packet, and/or information of the deleted associated data packet (such as an SN, or whether it is associated with other packets).

Further, in the embodiments of the present disclosure, during the PDCP discard processing based on association information or time information, in a case where a remaining delay of a data packet of a fifth object among objects with association information is less than or equal to an eighth threshold, the data packet of the fifth object and associated data packets of other objects associated with the fifth object may be deleted.

For example, in some embodiments, for objects having a sync/coordination relationship, if the remaining delay of a data packet of one of the objects (the fifth object) is less than or equal to an eighth threshold, the PDCP deletes the data packet and its associated data packets.

It should be noted that, in the embodiments of the present disclosure, if the associated objects correspond to different PDCPs or DRBs, the PDCPs interact with each other to notify the counterpart whether to delete a data packet, and/or information of the deleted associated data packet (such as an SN, or whether it is associated with other packets).

Further, in the embodiments of the present disclosure, during the PDCP discard processing based on association information or time information, in a case where a remaining delay of a data packet of a first object is less than or equal to an eighth threshold, the data packet of the first object and associated data packets of other objects associated with the first object may be deleted.

For example, in some embodiments, if there is a first object whose data packet's remaining delay is less than or equal to a first threshold, then the PDCP deletes the data packet.

It should be noted that, in the embodiments of the present disclosure, if the data packet is associated with other data packets, the associated data packets are also deleted.

It can be understood that, in the embodiments of the present disclosure, the first object may be an object among the at least one object capable of reporting corresponding first information. Herein, the first object may be determined by the network device, or may be determined by the terminal device, which is not specifically limited in the present disclosure.

That is to say, in the embodiments of the present disclosure, which objects can report the first information can be configured by the network and/or supported by the UE; for example, the UE has the capability to identify the information of the first object.

It can be understood that, in the embodiments of the present disclosure, the first object may be an object configured by the network device and/or supported by the terminal device; and/or, the first object may be an object having time information or association information; and/or, the first object may be an object whose time or relationship requirement satisfies a first demand condition; and/or, the first object is an object configured to be able to perform a related behavior(s).

For example, in some embodiments, the first object may be an object configured by the network and/or supported by the UE, or may be an object having delay information or sync/coordination info (or multi-modal information), or it may be an object whose delay or sync/coordination requirement (or multi-modal requirement) satisfies a certain condition, or may be an object configured to be able to perform a related behavior(s).

Further, in the embodiments of the present disclosure, in the case where the PDCP performs a packet deletion operation, if the deleted data packet has already been delivered to the RLC layer, the PDCP notifies the RLC to delete the corresponding data packet (for example, indicating an SN of the deleted PDCP data packet).

Further, in the embodiments of the present disclosure, in the case where the PDCP performs PDCP discard processing based on multi-modal information or remaining delay information, if the data packet that needs to be deleted has already been delivered to the RLC layer, the PDCP cannot delete the corresponding data packet.

Further, in the embodiments of the present disclosure, the terminal device receives the third configuration information transmitted by the network device; wherein the third configuration information can be arranged to indicate whether the terminal device supports performing PDCP discard processing based on association information or time information; or to indicate a DRB that performs the PDCP discard processing based on association information or time information.

That is to say, in the embodiments of the present disclosure, the third configuration information transmitted by the network device can determine whether the UE or which DRB(s) perform(s) PDCP discard processing based on multi-modal information or remaining delay information.

For example, in some embodiments, whether to perform PDCP discard processing based on multi-modal information or remaining delay information is indicated per UE or per DRB.

For example, in some embodiments, it is indicated in a PDCP config whether the PDCP or DRB performs PDCP discard processing based on multi-modal information or remaining delay information.

It should be noted that, in the embodiments of the present disclosure, a MAC CE from the network device is used to indicate whether the terminal device supports performing PDCP discard processing based on association information or time information; or to indicate the DRB that performs PDCP discard processing based on association information or time information.

That is to say, in the embodiments of the present disclosure, a MAC CE from the network device indicates whether the UE or which DRB activates/deactivates PDCP discard processing based on multi-modal information or remaining delay information.

For example, in some embodiments, if a MAC CE is received from the network device, the UE activates/deactivates PDCP discard processing based on multi-modal information or remaining delay information.

For example, in some embodiments, if a MAC CE is received from the network device, the UE activates/deactivates PDCP discard processing based on multi-modal information or remaining delay information for the DRB indicated by the MAC CE.

For example, in some embodiments, if a MAC CE from the network device indicates to activate PDCP discard processing based on multi-modal information or remaining delay information, the UE notifies a higher layer to activate the PDCP discard processing based on multi-modal information or remaining delay information.

For example, in some embodiments, if a MAC CE from the network device indicates to activate PDCP discard processing based on multi-modal information or remaining delay information, the UE notifies, for the DRB indicated by the MAC CE, a higher layer to activate the PDCP discard processing based on multi-modal information or remaining delay information.

For example, in some embodiments, if a MAC CE from the network device indicates to deactivate PDCP discard processing based on multi-modal information or remaining delay information, the UE notifies a higher layer to deactivate the PDCP discard processing based on multi-modal information or remaining delay information.

For example, in some embodiments, if a MAC CE from the network device indicates to deactivate PDCP discard processing based on multi-modal information or remaining delay information, the UE notifies, for the DRB indicated by the MAC CE, a higher layer to deactivate the PDCP discard processing based on multi-modal information or remaining delay information.

Further, in the embodiments of the present disclosure, FIG. 7 is a sixth schematic diagram of a wireless communication method according to an embodiment of the present disclosure. As shown in FIG. 7, the method for a terminal device to perform wireless communication may include the following operations.

At operation 701, the terminal device transmits information of an object to be configured and/or information of a first object to the network device.

In the embodiments of the present disclosure, the terminal device transmits information of an object to be configured and/or information of a first object to the network device. Herein, the object to be configured includes any one of the following: an object with association information; an object supported by the terminal device; or an object supporting delay-based scheduling.

For example, in some embodiments, the terminal device reports an object(s) having a sync/coordination relationship, for example, a QoS flow, a data flow, an LCH, an LCH group, an LCG, a DRB.

For example, in some embodiments, the terminal device reports information of an object capable of identifying or reporting first information, or information of an object capable of identifying or reporting delay-based scheduling. For example, a QoS flow, a data flow, an LCH, an LCH group, an LCG, or a DRB.

At operation 702, the terminal device receives third configuration information transmitted by the network device, where the third configuration information is configured based on the information of the object to be configured and/or the information of the first object.

In the embodiments of the present disclosure, after transmitting the information of the object to be configured and/or the information of the first object to the network device, the terminal device may receive third configuration information transmitted by the network device, where the third configuration information may be configured by the network device based on the information of the object to be configured and/or the information of the first object.

Further, in the embodiments of the present disclosure, the network device may determine the third configuration information using the received information of the object to be configured and/or the information of the first object, thereby configuring the UE or specifying which DRB to perform PDCP discard processing based on multi-modal information or remaining delay information through the third configuration information.

That is to say, in the embodiments of the present disclosure, the terminal device transmits the information of the object to be configured and/or the information of the first object to the network device, thereby enabling the network device to configure the third configuration information based on the information of the object to be configured and/or the information of the first object.

The present disclosure provides a wireless communication method. A network device may configure a terminal device to perform data processing based on first information; for example, the network configures a UE or specifies which DRB to perform PDCP discard processing based on multi-modal information or remaining delay information, thereby supporting the deletion of associated data packets, which in turn can improve system capacity.

Based on the above embodiments, another embodiment of the present disclosure proposes a wireless communication method applicable to a network device. FIG. 8 is a seventh schematic diagram of a wireless communication method according to an embodiment of the present disclosure. As shown in FIG. 8, the method for the network device to perform wireless communication may include the following operations.

At operation 801, the network device receives first information transmitted by a terminal device, where the first information includes at least one of the following: time information, data volume information, or association information.

In the embodiments of the present disclosure, the network device may receive first information transmitted by the terminal device. Herein, the first information may include at least one of time information, data volume information, or association information.

It should be noted that, in the embodiments of the present disclosure, the network device may receive the first information transmitted by the terminal device, thereby enabling the network device to acquire one or more of the time information, data volume information, and association information based on the first information, and also enabling the network device to perform corresponding scheduling processing, allocation processing, or configuration processing based on the first information.

It can be understood that, in the embodiments of the present disclosure, the first information may also include at least one of time information, data volume information, or transmission mode information. Correspondingly, the terminal device transmits the first information to the network device, thereby enabling the network device to acquire one or more of the time information, data volume information, and transmission mode information based on the first information, and also enabling the network device to perform corresponding scheduling processing, allocation processing, or configuration processing based on the first information.

It should be noted that, in the embodiments of the present disclosure, the first information may include time information. Herein, the time information may include delay information and/or timestamp information. The timestamp information can be understood as time point information.

It should be noted that, in the embodiments of the present disclosure, the first information may include data volume information. Herein, the data volume information can be used for the network device to learn about data related to the time information, thereby enabling the corresponding data to be completely scheduled or resources to be allocated to the corresponding data before the time point required by the delay.

It should be noted that, in the embodiments of the present disclosure, the first information may include association information. Herein, the association information can be understood as synchronization/coordination information. For example, the association information may be sync/coordination info.

It can be understood that, in the embodiments of the present disclosure, the association information can be arranged to indicate an object having a preset association relationship, and/or to indicate whether an object has a demand for association information.

That is to say, in the embodiments of the present disclosure, the association information included in the first information can be arranged to indicate at least one of the following: a second object having a preset association relationship among objects corresponding to the association information; whether a third object corresponding to the association information has a association demand.

For example, in some embodiments, taking the association information as sync/coordination info for example, the sync/coordination info can be arranged to indicate which object(s) has/have a sync/coordination relationship, or to indicate whether a certain object has a demand for sync/coordination info.

It should be noted that, in the embodiments of the present disclosure, both the association information and the time information (such as delay information) within the first information can be simultaneously reported or used by the terminal device.

For example, in some embodiments, the sync/coordination info needs to be reported together with the delay information, or used (functioned) together.

Further, in the embodiments of the present disclosure, the first information may include at least one piece of time information and/or at least one piece of data volume information. Herein, the at least one piece of time information and the at least one piece of data volume information may have a one-to-one correspondence.

Further, in the embodiments of the present disclosure, the first information may also include information of at least one object, where the information of the at least one object corresponds to at least one of the time information, data volume information, or association information.

That is to say, in the embodiments of the present disclosure, the information of the object may include object information corresponding to the time information, and/or object information corresponding to the data volume information, or object information having a sync/coordination relationship.

It should be noted that, in the embodiments of the present disclosure, the at least one object includes an object having a preset association relationship and/or an object satisfying a preset delay condition.

It can be understood that, in the embodiments of the present disclosure, an object having a preset association relationship can be understood as an object having a sync/coordination relationship, that is, a multi-modal object.

It can be understood that, in the embodiments of the present disclosure, the preset delay condition can characterize a certain delay requirement or demand; for example, the remaining delay satisfies a preset threshold.

That is to say, in the embodiments of the present disclosure, an object among the at least one object may be a multi-modal object, or an object whose delay satisfies a certain demand.

Further, in the embodiments of the present disclosure, an object among the at least one object includes one of the following: a PDU, an SDU, a data packet, a PDU set, a data burst, a DRB, an RLC, a QoS flow, or a PDU session.

That is to say, in the embodiments of the present disclosure, a certain object may be any one of a PDU, an SDU, a data packet, a PDU set, a data burst, a DRB, an RLC, a QOS flow, or a PDU session, which is not specifically limited in the present disclosure.

Further, in the embodiments of the present disclosure, the information of the at least one object may be indicated in one of the following ways: a bitmap indication; an object identifier indication; an indication based on a first LCH, or a first LCG, or a first LCH group corresponding to a first object; an indication based on all LCHs, or all LCGs, or all LCH groups corresponding to the first object; an indication based on a first indication capable of carrying a second LCH, or a second LCG, or a second LCH group corresponding to the first object.

For example, in some embodiments, assuming that the object is an SDU, correspondingly, multiple objects may include multiple buffered SDUs in one LCH, then the corresponding first information may include the information (time and/or data volume) of the SDUs.

For example, in some embodiments, assuming that the object is an SDU, correspondingly, multiple objects may include multiple buffered SDUs across multiple multi-modal LCHs, then the corresponding first information may include the information (time and/or data volume) of these SDUs, or corresponding information (time and/or data volume) within each LCH.

It should be noted that, in the embodiments of the present disclosure, the indication manner of the object information may be an explicit indication or an implicit indication.

It can be understood that, in the embodiments of the present disclosure, an explicit indication means that the transmitted first information directly contains the object information. For example, the explicit indication may include a bitmap indication or an object identifier indication.

For example, in some embodiments, the information of at least one object may be indicated in the form of a bitmap, or indicated through an index/ID/SN.

For example, in some embodiments, the information of the object indicates an object identifier, such as an ID, an index, or an SN of a PDU, an SDU, a data packet, a PDU set, a data burst, a DRB, an RLC, a QOS flow, or a PDU session.

For example, in some embodiments, if reporting information of a single object, the information of the object may be indicated by an ID, an index, or an SN, or the object may be identified at a corresponding bitmap position within a bitmap representing the object information (e.g., the bitmap bit is set to 1).

For example, in some embodiments, if reporting information of multiple objects, the information of the objects may be indicated by IDs, indexes, or SNs (optionally, the specified object information can be indicated sequentially. For example, sorting the objects and related object information (such as delays) in ascending order of ID, index, or SN), or the objects may be identified at corresponding bitmap positions within a bitmap representing the object information (e.g., the bitmap bits are set to 1).

It should be noted that, in the embodiments of the present disclosure, the first information may be reported for a certain object or certain objects, but implicitly indicates the information of the object when reporting the first information.

It can be understood that, in the embodiments of the present disclosure, the implicit indication may include an indication based on a first LCH, or a first LCG, or a first LCH group corresponding to the first object.

For example, in some embodiments, when implicitly indicating information of an object, reporting can be specific to a specific LCH, or a specific LCG, or a specific LCH group. Herein, the LCH group may be a group of several LCHs additionally configured by the network, where these several LCHs have a sync relationship.

It can be understood that, in the embodiments of the present disclosure, the implicit indication may include an indication based on all LCHs, or all LCGs, or all LCH groups corresponding to the first object.

For example, in some embodiments, when implicitly indicating information of an object, reporting can be specific to all LCHs, or all LCGs, or all LCH groups.

It can be understood that, in the embodiments of the present disclosure, the implicit indication may include an indication based on a first indication capable of carrying a second LCH, or a second LCG, or a second LCH group corresponding to the first object.

For example, in some embodiments, when implicitly indicating information of an object, which LCH(s), LCG(s), or LCH group(s) can report the first information can be configured by the network and/or supported by the UE.

Further, in the embodiments of the present disclosure, when the terminal device transmits the first information to the network device, the terminal device transmits the first information corresponding to the first object to the network device based on a network configuration and/or terminal capability, where the at least one object includes the first object.

It can be understood that, in the embodiments of the present disclosure, the first object may be an object among the at least one object capable of reporting the corresponding first information. Herein, the first object may be determined by the network device, or may be determined by the terminal device, which is not specifically limited in the present disclosure.

That is to say, in the embodiments of the present disclosure, which object(s) can report the first information can be configured by the network and/or supported by the UE; for example, the UE has the capability to identify the information of the first object.

It can be understood that, in the embodiments of the present disclosure, the first object may be an object configured by the network device and/or supported by the terminal device; and/or, the first object may be an object having time information or association information; and/or, the first object may be an object whose time or relationship requirement satisfies a first demand condition; and/or, the first object is an object configured to be capable of performing a related behavior(s).

For example, in some embodiments, the first object may be an object configured by the network and/or supported by the UE, or may be an object having delay information or sync/coordination info (or multi-modal information), or may be an object whose delay or sync/coordination requirement (or multi-modal requirement) satisfies a certain condition, or may be an object configured to be capable of performing a related behavior(s).

Further, in the embodiments of the present disclosure, the delay information within the time information included in the first information may be first delay information. Herein, the first delay information includes any one of the following: a delay difference(s) between objects with the association information; a delay difference(s) between a preset object with the association information and other object(s); a delay difference(s) between multiple objects with the association information; a delay of an object having data to be transmitted among multiple objects with the association information; a delay of an object having a longest delay tolerance among multiple objects with the association information; a delay of an object having a shortest delay tolerance among multiple objects with the association information; a delay of an object satisfying a first requirement among multiple objects with the association information; a delay difference between the shortest delays or a delay difference between the longest delays corresponding to objects with the association information; a delay difference(s) between a shortest delay of a preset object with the association information and shortest delay(s) of other object(s), or a delay difference(s) between a longest delay of a preset object with the association information and longest delay(s) of other object(s); a delay difference(s) between multiple shortest delays or a delay difference(s) between multiple longest delays corresponding to multiple objects with the association information; a delay of a shortest-delay data packet or a longest-delay data packet of an object having data to be transmitted among multiple objects with the association information; a delay of a shortest-delay data packet or a longest-delay data packet of an object having a longest delay tolerance among multiple objects with the association information; a delay of a shortest-delay data packet or a longest-delay data packet of an object having a shortest delay tolerance among multiple objects with the association information; or a delay of a shortest-delay data packet or a longest-delay data packet of an object satisfying a second requirement among multiple objects with the association information.

It should be noted that, in the embodiments of the present disclosure, the first delay information may include multi-modal delay information. Herein, the multi-modal information may be sync/coordination information.

For example, in some embodiments, the first delay information may be a delay difference between objects having a sync/coordination relationship. For example, only the difference between the objects is provided, without considering the objects being compared.

For example, in some embodiments, the first delay information may be a delay difference between one object and another object, which have a sync/coordination relationship. For example, there is a definite object being compared, and the difference provided is relative to the compared object.

For example, in some embodiments, the first delay information may be the respective delays of multiple objects having a sync/coordination relationship.

For example, in some embodiments, the first delay information may be the delay of an object that still has data to be transmitted among multiple objects having a sync/coordination relationship. For example, in a case that there are two synchronized flows, one flow has completed transmission, and the other flow still has data, the first delay information is the delay of this data. Alternatively, in a case that there are two synchronized packets, one packet has completed transmission, and the other packet still has data to be transmitted, the first delay information is the delay of this data.

For example, in some embodiments, the first delay information may be the delay of the object having the shortest delay tolerance among multiple objects having a sync/coordination relationship.

For example, in some embodiments, the first delay information may be the delay of the object having the longest delay tolerance among multiple objects having a sync/coordination relationship.

For example, in some embodiments, the first delay information may be the delay of a specific object (such as minimum index, maximum index, etc.) having a sync/coordination relationship, that is, the delay of an object satisfying a first requirement.

For example, in some embodiments, the first delay information may be a delay difference between the shortest-delay data packets of respective objects having a sync/coordination relationship. For example, only the difference between the two data packets is provided, without considering the objects being compared.

For example, in some embodiments, the first delay information may be a delay difference between the shortest-delay data packet of one object and the shortest-delay data packet of another object, which have a sync/coordination relationship. For example, there is a definite object being compared, and the difference provided is specific to this compared object.

For example, in some embodiments, the first delay information may be the respective delays of the shortest-delay data packets corresponding to multiple objects having a sync/coordination relationship.

For example, in some embodiments, the first delay information may be the delay of the shortest-delay data packet in an object that still has data to be transmitted among multiple objects having a sync/coordination relationship. For example, in a case that there are two synchronized flows, one flow has completed transmission, and the other flow still has data to be transmitted, the first delay information is the delay of data A with the shortest delay among these data. Alternatively, in a case that there are two synchronized packets, one packet has completed transmission, and the other packet still has data to be transmitted, the first delay information is the delay of this data.

For example, in some embodiments, the first delay information may be the delay of the shortest-delay data packet of the object having the shortest delay tolerance among multiple objects having a sync/coordination relationship. For example, in a case that there are two synchronized objects, one with a delay of 10ms and the other with a delay of 9ms, if the 9ms object contains 2 packets, one with a remaining delay of 5ms and the other with a remaining delay of 4ms, then the reported delay information is 4ms.

For example, in some embodiments, the first delay information may be the delay of the shortest-delay data packet of the object having the longest delay tolerance among multiple objects having a sync/coordination relationship. For example, in a case that there are two synchronized objects, one with a delay of 10ms and one with a delay of 9ms, if the 10ms object contains 2 packets, one with a remaining delay of 5ms and one with a remaining delay of 4ms, then the reported delay information is 4ms.

For example, in some embodiments, the first delay information may be the delay of a data packet of a specific object (such as minimum index, maximum index, etc.) having a sync/coordination relationship, that is, the delay of the shortest-delay data packet or the longest-delay data packet of an object satisfying a second requirement.

For example, in some embodiments, the first delay information may be the delay of the shortest-delay data packet of a specific object (such as minimum index, maximum index, shortest delay, longest delay, etc.) having a sync/coordination relationship, that is, the delay of the shortest-delay data packet or the longest-delay data packet of an object satisfying a second requirement.

Further, in the embodiments of the present disclosure, the timestamp information in the time information included in the first information, i.e., the time point information includes any one of: time of an object with the association information; a time difference(s) between a preset object with the association information and other object(s); a time difference(s) between multiple objects with the association information; time of an object having data to be transmitted among multiple objects with the association information; time of an object having a longest delay tolerance among multiple objects with the association information; time of an object having a shortest delay tolerance among multiple objects with the association information; time of an object satisfying a third requirement among multiple objects with the association information; a time difference(s) between shortest delays or a time difference(s) between longest delays corresponding to objects with the association information; time of an object whose remaining delay is less than or equal to a first threshold; a shortest time or a longest time of data in an LCH where an object whose remaining delay is less than or equal to a second threshold is located; respective time of all data in an LCH where an object whose remaining delay is less than or equal to a third threshold is located; a shortest time or a longest time of data in an LCG where an object whose remaining delay is less than or equal to a fourth threshold is located; respective time of all data in an LCG where an object whose remaining delay is less than or equal to a fifth threshold is located; a shortest time or a longest time of data in an LCH group where an object whose remaining delay is less than or equal to a sixth threshold is located; or respective time of all data in an LCH group where an object whose remaining delay is less than or equal to a seventh threshold is located.

It can be understood that, in the embodiments of the present disclosure, the first requirement, the second requirement, and the third requirement can be used for restrictions on the information of an object. Herein, the first requirement, the second requirement, and the third requirement may be the same or different; the present disclosure does not make specific limitations.

It can be understood that, in the embodiments of the present disclosure, the first threshold to the seventh threshold can all be used to limit the remaining delay, where the first threshold to the seventh threshold may be all or partially the same, or all different from each other, the present disclosure does not make specific limitations.

Further, in the embodiments of the present disclosure, the data volume information included in the first information may include any one of the following: information of an object with the association information; information of an object corresponding to the time information; information of a Logical Channel (LCH) where a data packet corresponding to the time information is located; information of a Logical Channel Group (LCG) where a data packet corresponding to the time information is located; information of an LCH group where a data packet corresponding to the time information is located; or information of the first object and information of other objects associated with the first object.

For example, in some embodiments, the data volume information may be information of an object having a sync/coordination relationship.

For example, in some embodiments, the data volume information may be data volume information of an object corresponding to the reported time information.

For example, in some embodiments, the data volume information may be information of an LCH/LCG/LCH group where a data packet corresponding to the reported time information is located.

For example, in some embodiments, the data volume information may include information for an object, specifically, it may be information of a first object, or may be overall information associated with the first object. For example, in a multi-modal case, data 1 is indicated, but information of data 1 and associated data 2 is reported.

Further, in the embodiments of the present disclosure, the delay information included in the time information may further include second delay information, where the second delay information includes remaining delay information, and the remaining delay information includes any one of the following: delay information of a first object; delay information of the first object in a case where a first preset trigger condition is satisfied; delay information of the first object in a case where the first information is sent; delay information of a shortest-delay data packet of the first object.

It should be noted that, in the embodiments of the present disclosure, the second delay information may be remaining delay information. For example, the second delay information is delay information for the first object, or delay information of the first object in a case where a first preset trigger condition is satisfied, or delay information of the first object in a case where the first information is reported, or delay information of a shortest-delay data packet of the first object.

It should be noted that, in the embodiments of the present disclosure, the first preset trigger condition may include but is not limited to a trigger condition for reporting the first information, where the trigger condition for reporting the first information may include a first trigger condition and/or a second trigger condition.

That is to say, in the embodiments of the present disclosure, the first preset trigger condition may be a trigger condition for reporting the first information, or may be different from the trigger condition for reporting the first information, or may include other trigger conditions than the trigger condition for reporting the first information; the present disclosure does not make specific limitations.

For example, in some embodiments, the remaining delay information may characterize how much time is left to reach the duration required by a PDB/PSDB, or may characterize the remaining time based on the timeout of a PDCP discard timer.

Further, in the embodiments of the present disclosure, the delay information may include a delay index or a delay value; the data volume information may include a data volume index or a data volume value.

It should be noted that, in the embodiments of the present disclosure, the delay information and/or the data volume information may be represented in the form of an index value (index), or may be represented by a specific value.

It can be understood that, in the embodiments of the present disclosure, a mapping relationship between the indexes and the delay information and/or the data volume information can be predetermined, and then the value of the corresponding delay information and/or data volume information can be determined based on the mapping relationship and the index value.

It can be understood that, in the embodiments of the present disclosure, the mapping relationship between the indexes and the delay information and/or the data volume information can be determined according to a threshold or a range.

It should be noted that, in the embodiments of the present disclosure, the threshold or range for determining the mapping relationship between the indexes and the delay information and/or the data volume information may be predefined, or may be determined according to a table, or may be indicated by RRC.

For example, in some embodiments, the mapping relationship between the index and the delay information can be as shown in Table 1. Herein, delay information in different value ranges can correspond to different index values. For example, a value range of (0ms, 2ms] for the delay information corresponds to an index value of 0, and a value range of (2ms, 4ms] for the delay information corresponds to an index value of 1.

For example, in some embodiments, the mapping relationship between the indexes and the data volume information can be as shown in Table 2. Herein, data volume information in different value ranges can correspond to different index values. For example, a value range of (1 slot, 3 slots] for the data volume information corresponds to an index value of 0, and a value range of (3 slots, 5 slots] for the data volume information corresponds to an index value of 1.

For example, in some embodiments, if the delay information is represented by a specific value, the value of the delay information can be directly indicated, such as 5ms; if the data volume information is represented by a specific value, the value of the data volume information can be directly indicated, such as 4 slots.

It should be noted that, in the embodiments of the present disclosure, the first information including delay information and/or data volume information may be reported for a terminal device, that is, reported at the granularity of the terminal device, representing the overall information of the terminal device (for example, a specific data volume corresponding to a delay among all data to be transmitted by the UE, and/or one or more delay values in a case where the delay satisfies a first threshold), or reported for object information (for example, reporting information of a certain LCH or a certain data packet).

It can be understood that, in the embodiments of the present disclosure, the terminal device transmits the first information to the network device, thereby enabling the network device to acquire one or more of time information, data volume information, and association information based on the first information.

For example, in some embodiments, taking the network device as a base station as an example, the UE (terminal device) transmits the first information to the base station, enabling the base station to obtain time information and/or data volume information and/or sync/coordination information, and/or the first information may also be used for the base station to perform scheduling, resource allocation, or parameter configuration.

Further, in the embodiments of the present disclosure, the first information transmitted by the terminal device is carried in any one of the following: a Medium Access Control Control Element (MAC CE); Uplink Control Information (UCI); or RRC.

It should be noted that, in the embodiments of the present disclosure, the MAC CE includes a first MAC CE or a second MAC CE, where the first MAC CE is different from the second MAC CE.

It can be understood that, in the embodiments of the present disclosure, the first MAC CE may be a newly introduced MAC CE, and the second MAC CE may include any one of the following: a Delay Status Report (DSR) MAC CE, an enhanced DSR MAC CE, a Buffer Status Report (BSR) MAC CE, or an enhanced BSR MAC CE.

That is to say, in the embodiments of the present disclosure, the first information may be carried using a MAC CE, UCI, or RRC. Herein, the MAC CE may be a newly introduced new MAC CE; or may be a DSR MAC CE, or an enhanced DSR MAC CE; or may be a BSR MAC CE, or an enhanced BSR MAC CE.

Further, in the embodiments of the present disclosure, the first information is carried in a MAC CE indicated by a Logical Channel Identification (LCID); or, the first information is carried in a MAC CE indicated by a bit(s).

It should be noted that, in the embodiments of the present disclosure, an LCID may be introduced to indicate the MAC CE carrying the first information.

For example, in some embodiments, a new LCID can be used to indicate whether the MAC CE carrying the first information is an enhanced DSR MAC CE or an original DSR MAC CE.

That is to say, in the embodiments of the present disclosure, the new LCID indicates whether the delay information and/or data volume information relies on the definition in the original DSR MAC CE or the definition in the enhanced DSR MAC CE.

For example, in some embodiments, a new LCID can be used to distinguish that the reported information is specific to the first information and not to the DSR.

For example, in some embodiments, a new LCID can indicate whether information of an object having a sync relationship is included, e.g., whether at least one of a delay difference, a data volume, and a minimum delay of the object, or of a data packet of the object is included.

For example, in some embodiments, a new LCID can indicate whether the MAC CE carrying the first information is an enhanced BSR MAC CE or an original BSR MAC CE.

That is to say, in the embodiments of the present disclosure, the new LCID indicates whether the data volume information relies on the definition in the original BSR MAC CE or the definition in the enhanced BSR MAC CE.

Correspondingly, in the embodiments of the present disclosure, based on the new LCID, the network device can learn that it is the definition in the enhanced BSR MAC CE, and thereby know that these data volume have a delay requirement(s) and need to be scheduled as soon as possible.

It should be noted that, in the embodiments of the present disclosure, a new bit can be introduced to indicate the MAC CE carrying the first information.

For example, in some embodiments, a new bit can be introduced in the MAC CE to indicate whether the delay information and/or data volume information relies on the definition in the original DSR MAC CE or the definition in the enhanced DSR MAC CE.

For example, in some embodiments, a new bit can be introduced in the MAC CE to indicate whether information of an object having a sync/coordination relationship is included, e.g., whether at least one of a delay difference, a data volume, or a minimum delay of the object, or at least one of a delay difference, a data volume, or a minimum delay of data packets of the object is included.

For example, in some embodiments, the data packet of the object may be a specific data packet. For instance, the specific data packet may be a data packet with the minimum delay, or a data packet of the object associated with an object that triggered a DSR report.

For example, in some embodiments, a new bit can be introduced in the MAC CE to indicate whether the data volume information relies on the definition in the original DSR MAC CE or the definition in the enhanced BSR MAC CE.

Further, in the embodiments of the present disclosure, when the terminal device transmits the first information to the network device, the terminal device may transmit the first information to the network device based on a trigger condition, where the trigger condition includes a first trigger condition and/or a second trigger condition.

It can be understood that, in the embodiments of the present disclosure, the first trigger condition and the second trigger condition may be different trigger mechanisms, that is, the transmitting of the first information can be triggered by one or more trigger conditions.

It should be noted that, in the embodiments of the present disclosure, the first trigger condition may include a DSR trigger condition, or a BSR trigger condition.

That is to say, in the embodiments of the present disclosure, the trigger condition for the first information may include a DSR trigger condition or a BSR trigger condition, that is, a common DSR trigger condition or a BSR trigger condition can be used.

Further, in the embodiments of the present disclosure, the second trigger condition includes at least one of the following: data arrival of an object with the association information; remaining delay of data of an object with the association information being less than or equal to a first delay threshold; a data volume of data of an object with the association information being greater than or equal to a first data threshold; no trigger of transmitting of the first information by data of an object with the association information within a current trigger period; or existence of data to be transmitted of an object with the association information..

It can be understood that, in the embodiments of the present disclosure, the second trigger condition of the first information may include the arrival of data of an object having a sync/coordination relationship, e.g., data arrival of one of the objects, or data arrival of all associated objects.

It can be understood that, in the embodiments of the present disclosure, the second trigger condition of the first information may include that the remaining delay of data having a sync/coordination relationship is less than or equal to threshold 1, i.e., the first delay threshold. For example, the delay of data of one of the objects is less than threshold 1, or the delay between the two is less than threshold 1.

It can be understood that, in the embodiments of the present disclosure, the second trigger condition of the first information may include that the data volume of data having a sync/coordination relationship is greater than or equal to threshold 3, i.e., the first data threshold.

It can be understood that, in the embodiments of the present disclosure, the second trigger condition of the first information may include, for an object having a sync/coordination relationship, that there is no pending first information trigger after the generation of the previous MAC PDU that included a first information report. For example, after a MAC PDU containing first information content is generated, if the associated objects are object 1 and object 2, and a data packet of associated object 1 triggers a new first information report, then associated object 2 or other data packets of associated object 1 cannot trigger a new first information report again.

It can be understood that, in the embodiments of the present disclosure, the second trigger condition of the first information may include the existence of data or partial data having a sync/coordination relationship to be transmitted.

For example, in some embodiments, in the case where data of the first object arrives, the reporting of the first information corresponding to the first object is triggered.

For example, in some embodiments, in the case where the remaining delay of data of the first object is less than or equal to threshold 1 (the first delay threshold), the reporting of the first information corresponding to the first object is triggered.

For example, in some embodiments, in the case where the data volume of data of the first object is greater than or equal to threshold 3 (the first data threshold), the reporting of the first information corresponding to the first object is triggered.

For example, in some embodiments, in the case where the first object has no pending first information trigger after the generation of the previous MAC PDU that included a first information report, the reporting of the first information corresponding to the first object is triggered.

For example, in some embodiments, in the case where the first object has all data or partial data to be transmitted, the reporting of the first information corresponding to the first object is triggered.

It should be noted that, in the embodiments of the present disclosure, the second trigger condition may further include timeout of a first information reporting cycle first timer, and timeout of a first information trigger cycle timer.

Further, in the embodiments of the present disclosure, the terminal device may cancel the transmitting of the first information based on a first cancellation condition.

It should be noted that, in the embodiments of the present disclosure, in the case where the first information reporting has already been triggered, the transmitting of the first information can also be canceled based on a first cancellation condition.

Further, in the embodiments of the present disclosure, the first cancellation condition includes at least one of the following: data triggering transmitting of the first information being discarded; data triggering transmitting of the first information being carried on a new Uplink (UL) grant; data of the first object triggering transmitting of the first information being discarded; remaining delay of data triggering transmitting of the first information being less than or equal to a second delay threshold, wherein the second delay threshold is smaller than the first delay threshold; an object with the association information being reconfigured; an MAC entity being reconfigured; reporting configuration of the first information being reconfigured; or trigger configuration of the first information being reconfigured.

It should be noted that, in the embodiments of the present disclosure, in the case where the first information reporting has already been triggered, the first cancellation condition for canceling the first information trigger may include: data of an object having a sync/coordination relationship being discarded.

It should be noted that, in the embodiments of the present disclosure, in the case where the first information reporting has already been triggered, the first cancellation condition for canceling the first information trigger may include: a new UL grant being capable of carrying data of an object having a sync/coordination relationship, where the object has previously triggered a first information report.

It should be noted that, in the embodiments of the present disclosure, in the case where the first information reporting has already been triggered, the first cancellation condition for canceling the first information trigger may include: data having a sync/coordination relationship having triggered a first information report, but its remaining delay being less than or equal to threshold 2, i.e., the second delay threshold, where the second delay threshold is less than the first delay threshold, i.e., threshold 2 is less than threshold 1.

For example, in some embodiments, if the first object has triggered a first information report, but its data is discarded, then canceling the reporting of the first information can be triggered.

For example, in some embodiments, if there is a new UL grant that is capable of carrying data of the first object that has triggered a first information report, then canceling the reporting of the first information can be triggered.

For example, in some embodiments, if the first object has triggered a first information report, but the remaining delay of its data is less than or equal to threshold 2 (threshold 2 is less than threshold 1), then canceling the reporting of the first information can be triggered.

For example, in some embodiments, if the first object is reconfigured, then canceling the reporting of the first information can be triggered.

For example, in some embodiments, if the MAC entity is reconfigured, then canceling the reporting of the first information can be triggered.

For example, in some embodiments, if the first information reporting configuration is reconfigured, then canceling the reporting of the first information can be triggered.

For example, in some embodiments, if the first information trigger configuration is reconfigured, then canceling the reporting of the first information can be triggered.

Further, in the embodiments of the present disclosure, the time information within the first information may be calculated and/or statistically analyzed and/or interacted to a lower layer based on an RLC (Radio Link Control) and/or a Packet Data Convergence Protocol (PDCP); where the lower layer includes a MAC (Medium Access Control), that is, interacted to the MAC.

Further, in the embodiments of the present disclosure, the time information within the first information may be notified to a lower layer of the terminal device based on an application layer or a Service Data Adaptation Protocol (SDAP) layer; where the lower layer includes any one of MAC, RLC, PDCP, or SDAP, that is, interacted to the MAC or RLC or PDCP or SDAP of the UE.

Further, in the embodiments of the present disclosure, the data volume information within the first information may be calculated and/or statistically analyzed and/or interacted to a lower layer based on the RLC and/or the PDCP; wherein the lower layer includes the MAC, that is, interacted to the MAC.

That is to say, in the embodiments of the present disclosure, the time information and/or the data volume information may be calculated and/or statistically analyzed and/or interacted to the MAC by the RLC and/or the PDCP.

Further, in the embodiments of the present disclosure, in a case where the time information and/or the data volume information satisfies a second preset trigger condition, the time information and/or the data volume information is calculated and/or statistically analyzed and/or interacted to the lower layer.

It should be noted that, in the embodiments of the present disclosure, the second preset trigger condition may include but is not limited to a trigger condition for reporting the first information, where the trigger condition for reporting the first information may include a first trigger condition and/or a second trigger condition.

That is to say, in the embodiments of the present disclosure, the second preset trigger condition may be a trigger condition for reporting the first information, or may be different from the trigger condition for reporting the first information, or may include other trigger conditions than the trigger condition for reporting the first information; the present disclosure does not make any specific limitations.

For example, in the embodiments of the present disclosure, the second preset trigger condition may be based on a periodic trigger condition and/or a trigger condition for reporting the first information.

Correspondingly, in the embodiments of the present disclosure, the RLC and/or the PDCP calculate and/or statistically analyze and/or interact the first information to the MAC when satisfying a condition (e.g., a period, or satisfying a trigger or reporting condition of the first information, that is, satisfying a trigger or reporting condition of the delay information and/or the data volume information).

Further, in the embodiments of the present disclosure, in a case of requesting or determining to transmit the time information and/or the data volume information, the time information and/or the data volume information is calculated and/or statistically analyzed and/or interacted to the lower layer.

For example, in the embodiments of the present disclosure, in a case where the MAC requests, or the MAC determines that there is a need to report or trigger the first information, the RLC and/or the PDCP calculate and/or statistically analyze and/or interact the first information to the MAC.

Further, in the embodiments of the present disclosure, the time information is determined by an application layer; and/or, the time information is determined by a terminal device implementation; and/or, the time information is carried in a packet header; and/or, the time information is determined according to a PDCP discard timer; and/or, the time information is determined according to the time when a data packet arrives at a PDCP or RLC; and/or, the time information is determined according to the waiting time of a data packet in a PDCP or RLC; and/or, the time information is determined according to a Packet Delay Budget (PDB) or PDU Set Delay Budget (PSDB) of a data packet.

For example, in some embodiments, the delay information within the time information can be determined according to the PDCP discard timer, or determined according to the time when the data packet arrives at the PDCP/RLC, or determined according to the waiting time of the data packet in the PDCP/RLC, or determined according to the PDB/PSDB of the data packet.

For example, in some embodiments, the delay information within the time information may also be determined based on at least two of the above factors. For instance, the remaining time of the discard timer is the delay. For example, if the PDB is 3ms and the data packet has waited 1ms in the PDCP, the delay is 2ms. For example, if the PDB is 2ms, the delay is 2ms.

Further, in the embodiments of the present disclosure, the data volume information may be determined according to whether there is association information; and/or, the data volume information is determined according to whether there is data with time information; and/or, the data volume information is determined according to a data volume of data packets in a PDCP or RLC buffer; and/or, the data volume information is determined according to the size of a Control PDU; and/or, the data volume information is determined according to a transmission type.

For example, in some embodiments, the data volume information may be determined according to whether there is a sync/coordination relationship, or determined according to the data volume of data packets in the PDCP/RLC buffer, or determined according to the size of a control PDU, or determined according to whether it is a new transmission or a retransmission.

For example, in some embodiments, the data volume information within the time information may also be determined based on at least two of the above factors.

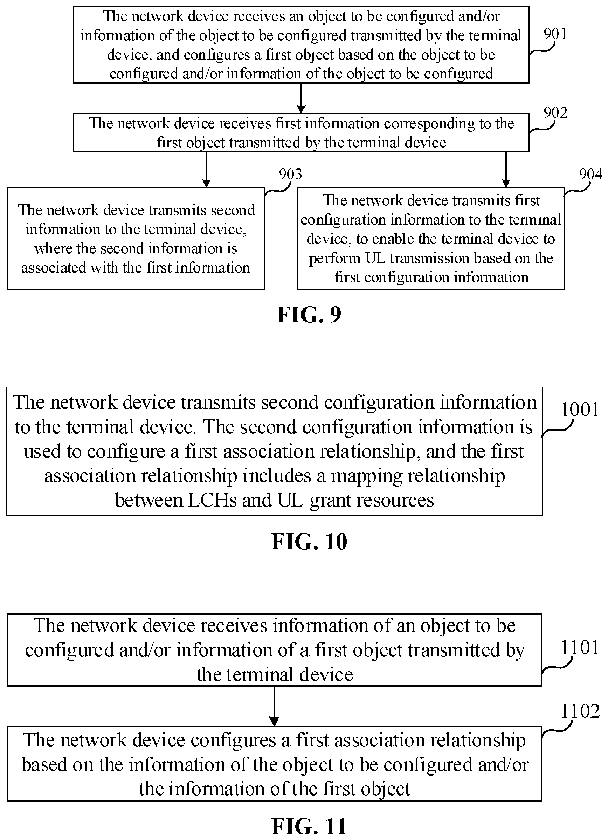

Further, in the embodiments of the present disclosure, FIG. 9 is an eighth schematic diagram of a wireless communication method according to an embodiment of the present disclosure. As shown in FIG. 9, the method for a network device to perform wireless communication may include the following operations.

At operation 901, the network device receives an object to be configured and/or information of an object to be configured transmitted by the terminal device, and configures a first object based on the object to be configured and/or the information of the object to be configured.

In the embodiments of the present disclosure, the network device may receive the object to be configured and/or the information of the object to be configured transmitted by the terminal device, and thereby can configure the first object according to the object to be configured and/or the information of the object to be configured; where the object to be configured includes any one of the following: an object with association information; an object supported by the terminal device; or an object supporting delay-based scheduling.

It can be understood that, in the embodiments of the present disclosure, the terminal device may first report the object(s) to be configured and/or the information of the object(s) to be configured to the network device, and then the network device determines which object can report corresponding first information, that is, determining the first object.

It can be understood that, in the embodiments of the present disclosure, the object(s) to be configured reported by the terminal device may be the same as the first object determined by the network device, or the objects to be configured reported by the terminal device may include the first object determined by the network device, that is, the first object may be a subset of the objects to be configured. The present disclosure does not specifically limit this.

For example, in some embodiments, the terminal device reports objects having a sync/coordination relationship, such as a QoS flow, a data flow, an LCH, an LCH group, an LCG, or a DRB, and the network device configures which object can report the first information based on the report, that is, determining the first object. The object(s) reported by the terminal device may be the same as the first object, or the first object may be a subset of the reported object(s)

For example, in some embodiments, the terminal device reports information of an object capable of identifying or reporting the first information, or information of an object capable of identifying or reporting delay-based scheduling, e.g., a QoS flow, a data flow, an LCH, an LCH group, an LCG, or a DRB. The network device configures which object can report the first information based on the report, that is, determining the first object. The object(s) reported by the terminal device may be the same as the first object, or the first object may be a subset of the reported object(s).

At operation 902, the network device receives first information corresponding to the first object transmitted by the terminal device.

In the embodiments of the present disclosure, the network device may receive the first information corresponding to the first object transmitted by the terminal device. Herein, the network device may receive, based on a network configuration, the first information corresponding to the first object transmitted by the terminal device.

Further, in the embodiments of the present disclosure, in the case of reporting the first information corresponding to the first object based on a network configuration, the terminal device may first report the object(s) and/or the information of the object(s) to the network device, and then the network device determines which object can report the corresponding first information, that is, determining the first object, thereby enabling the terminal device to transmit the first information corresponding to the first object to the network device based on the network configuration.

At operation 903, the network device transmits second information to the terminal device; where the second information is associated with the first information.

In the embodiments of the present disclosure, after the network device receives the first information corresponding to the first object transmitted by the terminal device, the network device may further transmit second information to the terminal device; where the second information is associated with the first information, that is, the second information may be determined by the network device based on the first information.

It should be noted that, in the embodiments of the present disclosure, the second information may include at least one of the following: scheduling information, resource allocation information, or parameter configuration information.

At operation 904, the network device transmits first configuration information to the terminal device, so that the terminal device performs a UL transmission based on the first configuration information.

In the embodiments of the present disclosure, after receives the first information corresponding to the first object transmitted by the terminal device, the network device may further transmit first configuration information to the terminal device, so that the terminal device performs a UL transmission based on the first configuration information.

It can be understood that, in the embodiments of the present disclosure, the first configuration information is associated with the first information, that is, the first configuration information may be determined by the network device based on the first information.

That is to say, in the embodiments of the present disclosure, the terminal device transmits the first information to the network device, thereby enabling the network device to acquire one or more of time information, data volume information, and association information based on the first information, and further enabling the network device to perform corresponding scheduling processing, allocation processing, or configuration processing based on the first information.

It can be understood that, in the embodiments of the present disclosure, the network device may further determine the second information and/or the first configuration information based on the received first information, thereby being able to perform corresponding scheduling processing, allocation processing, or configuration processing based on the second information and/or the first configuration information.

It can be understood that, in the embodiments of the present disclosure, which object can report the first information can be configured by the network or supported by the terminal device, that is, the terminal device has the capability to identify the information of the first object. Therefore, the terminal device can also directly transmit the first information corresponding to the first object to the network device.

For example, in some embodiments, for sync, the UE reports LCH1 and LCH2 as objects with sync requirements, and the reporting is semi-static (such as UE assistance information, or RRC manner) or dynamic (such as MAC CE or RRC). Optionally, the network configures the UE to report the first information.

For example, in some embodiments, for sync, LCH1 and LCH2 are objects with sync requirements, and a new MAC CE or an enhanced DSR MAC CE is used to report the first information. In the first information, the respective delays (such as the minimum remaining delay) of LCH1 and LCH2 are indicated. Further, for the delay, corresponding data volume information is respectively indicated. Optionally, the delay is that of an LCH or of a data packet (such as a specific data packet, or data with the minimum delay).

For example, in some embodiments, for sync, LCH1 and LCH2 are objects with sync requirements, and a new MAC CE or an enhanced DSR MAC CE is used to report the first information. In the first information, the delay difference of LCH2 compared to LCH1 is indicated. Further, the data volume information of LCH2 and/or LCH1 is indicated. Optionally, the delay is that of an LCH or of a data packet (such as a specific data packet, or the data packet with the minimum delay).

For example, in some embodiments, for sync, LCH1 and LCH2 are objects with sync requirements. When the remaining delay of LCH1 and/or LCH2 is less than threshold 1, the remaining delay of LCH1 and/or LCH2 is reported, and/or the delay difference between LCH1 and LCH2 is reported. Further, the data volume information of LCH2 and/or LCH1 is indicated. Optionally, the delay is that of an LCH or of a data packet (such as a specific data packet, or data with the minimum delay).

For example, in some embodiments, for sync, LCH1 and LCH2 are objects with sync requirements. In the case where data of LCH1 and/or LCH2 arrives, the remaining delay of LCH1 and/or LCH2 is reported, and/or the delay difference between LCH1 and LCH2 is reported. Further, the data volume information of LCH2 and/or LCH1 is indicated. Optionally, the delay is that of an LCH or of a data packet (such as a specific data packet, or data with the minimum delay).

For example, in some embodiments, for sync, LCH1 and LCH2 are objects with sync requirements, and a new MAC CE or an enhanced DSR MAC CE is used to report the first information. Under the condition of acquiring the delay difference between LCH1 and LCH2, and learning that data packet(s) has/have been acquired (e.g., data packet(s) between respective specific data packets of LCH1 and LCH2, or between data packets of LCH1 and LCH2 in each cycle, or between a data packet with the shortest delay and its sync data packet, or between respective data packets of LCH1 and LCH2 within a period of time), the first information is reported.

For example, in some embodiments, for sync, LCH1 and LCH2 are objects with sync requirements, and a new MAC CE or an enhanced DSR MAC CE is used to report the first information. If LCH1 triggers a DSR report, in the case of reporting the DSR information of LCH1, the delay and/or data volume information of LCH2 or data packets of LCH2 is reported. The data packet of LCH2 is a data packet in LCH2 associated with LCH1, or a data packet of LCH2 associated with the data packet triggering the LCH1 DSR report, or a data packet in LCH2 with the minimum remaining delay, or a data packet in LCH2 with a remaining delay less than threshold M.

For example, in some embodiments, for sync, LCH1 and LCH2 are objects with sync requirements, and a new MAC CE or an enhanced DSR MAC CE is used to report the first information. If LCH1 and LCH2, or the data packet of LCH1 and the data packet of LCH2, have a delay difference less than or equal to threshold B, then the first information is reported, or the reporting of the first information is triggered.

It can be understood that, in the embodiments of the present disclosure, any one or more of the multiple examples described above can also be used in combination, or used independently. The present disclosure does not make any specific limitations.

For example, in some embodiments, for delay-based scheduling, the UE reports itself as a UE supporting delay-based scheduling, or reports that LCH1 can support delay-based scheduling. Optionally, the network configures LCH1 of the UE to report the first information.

For example, in some embodiments, for delay-based scheduling, LCH1 is an LCH capable of reporting delay information, or LCH1 is an LCH supporting delay-based scheduling, or the UE is a UE capable of reporting delay information, or the UE is a UE supporting delay-based scheduling, and the network configures the UE to report the first information. If a new MAC CE or an enhanced DSR MAC CE is used to report the first information, the delay (e.g., minimum remaining delay) of LCH1 is indicated in the first information. Further, for the delay, corresponding data volume information is indicated. Optionally, the delay is that of an LCH or of a data packet (such as a specific data packet, or data with the minimum delay).

For example, in some embodiments, for delay-based scheduling, LCH1 is an LCH capable of reporting delay information, or LCH1 is an LCH supporting delay-based scheduling, or the UE is a UE capable of reporting delay information, or the UE is a UE supporting delay-based scheduling, and the network configures the UE to report the first information. If a new MAC CE or an enhanced BSR MAC CE is used to report the first information, the data volume of LCH1 or of the LCG where LCH1 is located is indicated in the first information (e.g., the data volume of a data packet with the minimum remaining delay, or the data volume of data packets less than a delay threshold, or the data volume of LCH1, or the data volume of the LCG where LCH1 is located).

For example, in some embodiments, for delay-based scheduling, LCH1 is an LCH capable of reporting delay information, or LCH1 is an LCH supporting delay-based scheduling, or the UE is a UE capable of reporting delay information, or the UE is a UE supporting delay-based scheduling, and the network configures the UE to report the first information. The UE reports the first information in the case where data arrives, or the delay is less than or equal to threshold A.

It can be understood that, in the embodiments of the present disclosure, any one or more of the multiple examples described above can also be used in combination, or used independently. The present disclosure does not make any specific limitations.

The present disclosure provides a wireless communication method, in which a terminal device can report first information including time information, and/or data volume information, and/or association information to a network device, thereby enabling the network device to perform scheduling, resource allocation, or parameter configuration based on the first information. It is evident that in the embodiments of the present disclosure, the transmission or behavior of sync/coordination info can be supported, while simultaneously supporting delay-based scheduling over the air interface, which in turn can support multi-modal service transmission over the air interface, effectively improving communication performance.

Based on the above embodiments, yet another embodiment of the present disclosure proposes a wireless communication method applicable to a network device. FIG. 10 is a ninth schematic diagram of a wireless communication method according to an embodiment of the present disclosure. As shown in FIG. 10, the method for the network device to perform wireless communication may include the following operations.

At operation 1001, the network device transmits second configuration information to the terminal device, where the second configuration information is arranged to configure a first association relationship, and the first association relationship includes a mapping relationship between LCHs and UL grant resources.

In the embodiments of the present disclosure, the network device may transmit second configuration information to the terminal device. Herein, the second configuration information is arranged to configure the first association relationship. Herein, the first association relationship can characterize an association relationship between LCHs and UL grants.

That is to say, in the embodiments of the present disclosure, an association relationship between LCHs and UL grants can be introduced.

Further, in the embodiments of the present disclosure, the first association relationship may be configured by the network device based on information of an object reported by the terminal device. Herein, after receiving the information of the object reported by the terminal device, the network device may configure the second configuration information based on the information of the object, and thereby complete the configuration of the first association relationship through the issued second configuration. The information of the object may include information of an object to be configured and/or information of a first object.

It should be noted that, in the embodiments of the present disclosure, the first association relationship may include a mapping relationship between LCHs and UL grant resources. That is, the first association relationship can be used to determine a carrying or mapping relationship between LCHs and UL grants.

It should be noted that, in the embodiments of the present disclosure, the first association relationship may include an LCH mapping restriction.

Further, in the embodiments of the present disclosure, the UL grant resources include a Dynamic Grant (DG) resource, and correspondingly, the first association relationship may also include a mapping relationship between LCHs and DG resources.

It can be understood that, in the embodiments of the present disclosure, the network-configured first association relationship can be used to determine data of which LCHs can be carried and transmitted on a specific DG (such as a first DG resource).

Further, in the embodiments of the present disclosure, the network device transmits first indication information to the terminal device, where the first indication information is arranged to indicate a first identifier, and the first identifier corresponds to a channel to be transmitted that is carried by the first DG resource.

That is to say, in the embodiments of the present disclosure, based on the first identifier indicated by the first indication information, the channel to be transmitted corresponding to the first identifier can be carried on the first DG resource.

It should be noted that, in the embodiments of the present disclosure, the first indication information may include Downlink Control Information (DCI), that is, the first identifier is indicated through DCI.

It should be noted that, in the embodiments of the present disclosure, the channel to be transmitted may include an LCH or an LCG.

Further, in the embodiments of the present disclosure, based on the first association relationship, the channel to be transmitted indicated by the first identifier may be transmitted through the first DG; or, the channel to be transmitted indicated by the first identifier may be transmitted preferentially through the first DG; or, the channel to be transmitted indicated by the first identifier may be transmitted with low priority through the first DG.

That is to say, in the embodiments of the present disclosure, the network device can configure the first association relationship. The first association relationship is an LCH mapping restriction, or is arranged to determine a carrying or mapping relationship between LCHs and UL grants.

For example, in some embodiments, for a UL DG, the network configures a first association relationship to determine data of which LCH can be carried and transmitted on a specific DG.

For example, in some embodiments, the DCI can indicate an LCH or LCG identifier (the first identifier corresponding to the channel to be transmitted) that can be carried by a specific DG. Herein, in the case of configuring an LCH or LCG, it indicates whether the LCH or LCG can use the specific DG for transmission, or whether the LCH or LCG can use the specific DG preferentially for transmission, or whether the LCH or LCG can use the specific DG for low-priority transmission.

Further, in the embodiments of the present disclosure, data of the first object can be exclusively transmitted with the UL grant indicated by the second configuration information or, data of the first object can be transmitted with high priority the UL grant indicated by the second configuration information; or, data of the first object can be transmitted with low priority with the UL grant indicated by the second configuration information.

Further, in the embodiments of the present disclosure, data of an object with association information can be exclusively transmitted with the UL grant indicated by the second configuration information; or, data of an object with association information can be transmitted with high priority with the UL grant indicated by the second configuration information; or, data of an object with association information can be transmitted with low priority with the UL grant indicated by the second configuration information.

That is to say, in the embodiments of the present disclosure, for a UL grant, the network configures whether to exclusively perform transmission of data of the first object, or whether to prioritize transmission of data of the first object, or whether to assign low priority to the transmission of data of the first object, or whether to exclusively perform transmission of objects with a sync/coordination relationship, or whether to prioritize transmission of objects with a sync/coordination relationship, or whether to assign low priority to the transmission of objects with a sync/coordination relationship.

It should be noted that, in the embodiments of the present disclosure, the first object may be an object capable of reporting the corresponding first information. Herein, the first object may be determined by the network device, or may be determined by the terminal device; the present disclosure does not make specific limitations.

That is to say, in the embodiments of the present disclosure, which objects can report the first information can be configured by the network, and/or supported by the UE; for example, the UE has the capability to identify the information of the first object.

It can be understood that, in the embodiments of the present disclosure, the first object may be an object configured by the network device and/or supported by the terminal device; and/or, the first object may be an object having time information or association information; and/or, the first object may be an object whose time or relationship requirements satisfy a first requirement condition; and/or, the first object is an object configured to be capable of performing a related behavior(s).

For example, in some embodiments, the first object may be an object configured by the network and/or supported by the UE, or may be an object having delay information or sync/coordination info (or multi-modal information), or may be an object whose delay or sync/coordination requirement (or multi-modal requirement) satisfies a certain condition, or may also be an object configured to be capable of performing a related behavior(s).

For example, in some embodiments, for UL grant1, if there is/are a data packet(s) with a sync/coordination relationship, then the data packet(s) with a sync/coordination relationship is/are carried on UL grant1. Further, if there is/are remaining bit(s) in the UL grant, they can carry data packet(s) of other LCHs.

For example, in some embodiments, for UL grant1, if there is/are a data packet(s) of the first object, then the data packet(s) of the first object is/are carried on UL grant1. Further, if there is/are remaining bit(s) in the UL grant, it/they can carry data packet(s) of other LCHs.

Further, in the embodiments of the present disclosure, for a UL grant, the network configures whether to exclusively carry the transmission of data of the first object, or whether to exclusively carry the transmission of objects with a sync/coordination relationship.

For example, in some embodiments, for UL grant1, if there is/are a data packet(s) with a sync/coordination relationship, then the data packet(s) with a sync/coordination relationship is/are carried on UL grant1. Further, if there is/are remaining bit(s) in the UL grant, it/they can carry padding.

For example, in some embodiments, for UL grant1, if there is/are a data packet(s) of the first object, then the data packet(s) of the first object are carried on UL grant1. Further, if there is/are remaining bit(s) in the UL grant, it/they can carry padding.

Further, in the embodiments of the present disclosure, FIG. 11 is a tenth schematic diagram of a wireless communication method according to an embodiment of the present disclosure. As shown in FIG. 11, the method for the network device to perform wireless communication may include the following operations.

At operation 1101, the network device receives information of an object to be configured and/or information of a first object transmitted by the terminal device.

In the embodiments of the present disclosure, the network device may receive information of an object to be configured and/or information of a first object transmitted by the terminal device. Herein, the object to be configured includes any one of the following: an object with association information; an object supported by the terminal device; or an object supporting delay-based scheduling.

For example, in some embodiments, the terminal device reports an object(s) having a sync/coordination relationship, such as a QoS flow, a data flow, an LCH, an LCH group, an LCG, or a DRB.

For example, in some embodiments, the terminal device reports information of an object capable of identifying or reporting the first information, or information of an object capable of identifying or reporting delay-based scheduling, such as a QoS flow, a data flow, an LCH, an LCH group, an LCG, or a DRB.

At operation 1102, the network device configures a first association relationship based on the information of the object to be configured and/or the information of the first object.

In the embodiments of the present disclosure, after receiving the information of the object to be configured and/or the information of the first object transmitted by the terminal device, the network device may configure the first association relationship based on the information of the object to be configured and/or the information of the first object.

Further, in the embodiments of the present disclosure, the network device may use the received information of the object to be configured and/or the information of the first object to determine the first association relationship, where the network device may configure second configuration information, thereby completing the configuration of the first association relationship through the second configuration information.

That is to say, in the embodiments of the present disclosure, the terminal device transmits the information of the object to be configured and/or the information of the first object to the network device, thereby enabling the network device to configure the first association relationship based on the information of the object to be configured and/or the information of the first object.

For example, in some embodiments, a first association relationship is introduced. For example, LCH mapping restriction X is introduced; LCH mapping restriction X is used to indicate which LCHs (such as LCH1 and LCH2, or LCH3) can be transmitted on DG type A (a specific DG). If the network schedules a DG, it indicates in the DCI whether the UL grant is DG type A. If a DG is DG type A, then only LCHs corresponding to DG type A (such as LCH1 and LCH2, or LCH3) can be transmitted using this DG.

For example, in some embodiments, a first association relationship is introduced. For example, LCH mapping restriction Y is introduced; LCH mapping restriction Y is used to indicate which LCHs (such as LCH1 and LCH2, or LCH3) can be transmitted on DG type A. If the network schedules a DG, it indicates in the DCI whether the UL grant is DG type A. If a DG is DG type A, then LCHs corresponding to DG type A (such as LCH1 and LCH2, or LCH3) have priority to be transmitted using this DG. If the DG has remaining bits, it can further carry data of other LCHs.

For example, in some embodiments, a first association relationship is introduced. For example, LCH mapping restriction Z is introduced; LCH mapping restriction X is used to indicate which LCH(s) (such as LCH1 and LCH2, or LCH3) can be transmitted on CG type A. If the network configures a CG (Configured Grant), it indicates in the DCI whether the UL grant is CG type A. If a CG is CG type A, then LCHs corresponding to CG type A (such as LCH1 and LCH2, or LCH3) have priority to be transmitted using this DG. If the CG has remaining bits, they can further carry data of other LCHs.

For example, in some embodiments, a first association relationship is introduced. For example, LCH mapping restriction X is introduced; LCH mapping restriction X is used to indicate which LCH(s) (such as LCH1 and LCH2, or LCH3) can be transmitted on CG type A or DG type A. If the size of the LCH list is 0 or the LCH list is NULL, then no LCH can be carried and transmitted on CG type A or DG type A. If the LCH list does not appear, it represents that the LCH can be transmitted on any CG and/or DG.

The present disclosure provides a wireless communication method. By introducing a new mapping relationship between LCHs and UL grants, the transmission of a specific LCH can be guaranteed, and under certain possibilities, the transmission of other LCHs can also be guaranteed. It is evident that in the embodiments of the present disclosure, multi-modal service transmission can be supported over the air interface, effectively improving communication performance.

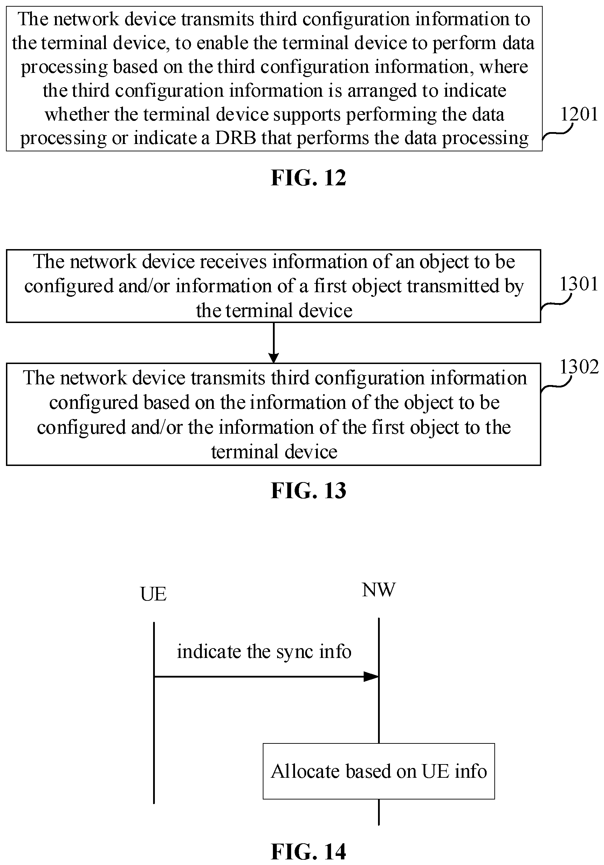

Based on the above embodiments, yet another embodiment of the present disclosure proposes a wireless communication method, which can be applied to a network device. FIG. 12 is an eleventh schematic diagram of a wireless communication method according to an embodiment of the present disclosure. As shown in FIG. 12, the method for the network device to perform wireless communication may include the following operations.

At operation 1201, the network device transmits third configuration information to the terminal device, so that the terminal device performs data processing based on the third configuration information; where the third configuration information is arranged to indicate whether the terminal device supports performing the data processing; or to indicate a DRB that performs the data processing.

In the embodiments of the present disclosure, the network device may transmit the third configuration information to the terminal device, thereby enabling the terminal device to perform data processing based on the third configuration information.

It should be noted that, in the embodiments of the present disclosure, the third configuration information is arranged to indicate whether the terminal device supports performing the data processing; or to indicate the DRB that performs the data processing.

Further, in the embodiments of the present disclosure, the data processing may include data processing based on third information; where the third information includes first information, and the first information includes association information and/or time information.

That is to say, in the embodiments of the present disclosure, the terminal device may perform data processing based on the third information. Wherein, the third information may include the first information, and the first information may include association information and/or time information.

It should be noted that, in the embodiments of the present disclosure, the first information may include at least one of time information, data volume information, or association information.

It should be noted that, in the embodiments of the present disclosure, the first information may also include at least one of time information, data volume information, or transmission mode information.

It should be noted that, in the embodiments of the present disclosure, the first information may include time information, where the time information may include delay information and/or timestamp information. Herein, the timestamp information can be understood as time point information.

It should be noted that, in the embodiments of the present disclosure, the first information may include data volume information. Herein, the data volume information can be used for the network device to learn about data related to the time information, thereby enabling the corresponding data to be completely scheduled or resources to be allocated to it before a time point required by a delay.

It should be noted that, in the embodiments of the present disclosure, the first information may include association information. Herein, the association information can be understood as synchronization/coordination information. For example, the association information may be sync/coordination info.

It can be understood that, in the embodiments of the present disclosure, the association information can be arranged to indicate an object having a first association relationship, and/or to indicate whether the object has a demand for association information.

That is to say, in the embodiments of the present disclosure, the association information included in the first information can be arranged to indicate at least one of the following: a second object having a first association relationship among objects corresponding to the association information; or whether a third object corresponding to the association information has a association requirement.

For example, in some embodiments, taking the association information as sync/coordination info for example, the sync/coordination info can be arranged to indicate which object(s) has/have a sync/coordination relationship, or to indicate whether a certain object has a demand for sync/coordination info.

It should be noted that, in the embodiments of the present disclosure, both the association information and the time information (such as delay information) in the first information can be simultaneously reported or used by the terminal device.

For example, in some embodiments, the sync/coordination info needs to be reported together with the delay information, or used (functioned) together.

Further, in the embodiments of the present disclosure, the first information may include at least one piece of time information and/or at least one piece of data volume information. Herein, the at least one piece of time information and the at least one piece of data volume information may have a one-to-one correspondence.

Further, in the embodiments of the present disclosure, the first information may further include information of at least one object, and the information of the at least one object corresponds to at least one of the time information, the data volume information, or the association information.

That is to say, in the embodiments of the present disclosure, the information of the object may include object information corresponding to the time information, and/or object information corresponding to the data volume information, or object information having a sync/coordination relationship.

It should be noted that, in the embodiments of the present disclosure, the at least one object includes an object having a first association relationship and/or an object satisfying a preset delay condition.

It can be understood that, in the embodiments of the present disclosure, an object having a first association relationship can be understood as an object having a sync/coordination relationship, that is, a multi-modal object.

It can be understood that, in the embodiments of the present disclosure, the preset delay condition can characterize a certain delay requirement or need, for example, a remaining delay satisfies a preset threshold.

That is to say, in the embodiments of the present disclosure, an object among the at least one object may be a multi-modal object, or an object whose delay satisfies a certain demand.

Further, in the embodiments of the present disclosure, an object among the at least one object includes one of the following: a PDU, an SDU, a data packet, a PDU set, a data burst, a DRB, an RLC, a QoS flow, or a PDU session.

That is to say, in the embodiments of the present disclosure, a certain object may be any one of a PDU, an SDU, a data packet, a PDU set, a data burst, a DRB, an RLC, a QoS flow, or a PDU session, which is not specifically limited in the present disclosure.

Further, in the embodiments of the present disclosure, when the terminal device performs data processing based on the third information, the terminal device activates or deactivates PDCP discard processing based on the association information or time information.

That is to say, in the embodiments of the present disclosure, the data processing may include PDCP discard processing based on association information and/or time information. For example, the data processing may be PDCP discard processing based on multi-modal information (i.e., association information) or remaining delay information.

Further, in the embodiments of the present disclosure, the third configuration information is arranged to indicate whether the terminal device or a DRB performs PDCP discard processing based on association information or time information.

Further, in the embodiments of the present disclosure, the third configuration information is arranged to indicate whether a PDCP or a DRB PDCP performs discard processing based on association information or time information.

That is to say, in the embodiments of the present disclosure, based on the third configuration information, the network configures the UE or specifies which DRB(s) perform(s) PDCP discard processing based on multi-modal information or remaining delay information.

For example, in some embodiments, it is indicated per UE or per DRB whether to perform PDCP discard processing based on multi-modal information or remaining delay information.

For example, in some embodiments, it is indicated in a PDCP config whether the PDCP or DRB performs PDCP discard processing based on multi-modal information or remaining delay information.

Further, in the embodiments of the present disclosure, the network device may use a MAC CE to indicate whether the terminal device supports performing PDCP discard processing based on association information or time information; or to indicate a DRB that performs PDCP discard processing based on association information or time information.

That is to say, in the embodiments of the present disclosure, the network device uses a MAC CE to indicate whether the UE or which DRBs activate/deactivate PDCP discard processing based on multi-modal information or remaining delay information.

For example, in some embodiments, if a MAC CE is received from the network device, the UE activates/deactivates PDCP discard processing based on multi-modal information or remaining delay information.

For example, in some embodiments, if a MAC CE is received from the network device, the UE activates/deactivates PDCP discard processing based on multi-modal information or remaining delay information for the DRB indicated by the MAC CE.

For example, in some embodiments, if a MAC CE from the network device indicates to activate PDCP discard processing based on multi-modal information or remaining delay information, the UE notifies a higher layer to activate the PDCP discard processing based on multi-modal information or remaining delay information.

For example, in some embodiments, if a MAC CE from the network device indicates to activate PDCP discard processing based on multi-modal information or remaining delay information, the UE notifies a higher layer to activate the PDCP discard processing based on multi-modal information or remaining delay information for the DRB indicated by the MAC CE.

For example, in some embodiments, if a MAC CE from the network device indicates to deactivate PDCP discard processing based on multi-modal information or remaining delay information, the UE notifies a higher layer to deactivate the PDCP discard processing based on multi-modal information or remaining delay information.

For example, in some embodiments, if a MAC CE from the network device indicates to deactivate PDCP discard processing based on multi-modal information or remaining delay information, the UE notifies a higher layer to deactivate the PDCP discard processing based on multi-modal information or remaining delay information for the DRB indicated by the MAC CE.

Further, in the embodiments of the present disclosure, FIG. 13 is a twelfth schematic diagram of a wireless communication method according to an embodiment of the present disclosure. As shown in FIG. 13, the method for the network device to perform wireless communication may include the following operations.

At operation 1301, the network device receives information of an object to be configured and/or information of a first object transmitted by the terminal device.

In the embodiments of the present disclosure, the network device receives information of the object to be configured and/or information of the first object transmitted by the terminal device. Herein, the object to be configured includes any one of the following: an object with association information; an object supported by the terminal device; or an object supporting delay-based scheduling.

For example, in some embodiments, the network device receives an object having a sync/coordination relationship reported by the terminal device, such as a QoS flow, a data flow, an LCH, an LCH group, an LCG, or a DRB.

For example, in some embodiments, the network device receives information of an object capable of identifying or reporting first information, or information of an object capable of identifying or reporting delay-based scheduling reported by the terminal device, e.g., a QoS flow, a data flow, an LCH, an LCH group, an LCG, or a DRB.

At operation 1302, the network device transmits third configuration information to the terminal device, where the third configuration information is configured based on the information of the object to be configured and/or the information of the first object.

In the embodiments of the present disclosure, after receiving the information of the object to be configured and/or the information of the first object transmitted by the terminal device, the network device transmits third configuration information to the terminal device, where the third configuration information may be configured by the network device based on the information of the object to be configured and/or the information of the first object.

Further, in the embodiments of the present disclosure, the network device may determine the third configuration information using the received information of the object to be configured and/or the information of the first object, thereby using the third configuration information to configure the UE or specify which DRB(s) to perform PDCP discard processing based on multi-modal information or remaining delay information.

That is to say, in the embodiments of the present disclosure, the terminal device transmits the information of the object to be configured and/or the information of the first object to the network device, thereby enabling the network device to configure the third configuration information based on the information of the object to be configured and/or the information of the first object.

The present disclosure provides a wireless communication method, in which the network device can configure the terminal device to perform data processing based on the first information. For example, the network configures a UE or specifies which DRB(s) to perform PDCP discard processing based on multi-modal information or remaining delay information, thereby supporting the deletion of associated data packet(s), which in turn can improve system capacity.

Based on the above embodiments, yet another embodiment of the present disclosure proposes a wireless communication method applicable to a terminal device and a network device. Taking a base station and a UE as an example, the wireless communication method of the present disclosure is exemplarily described below using multiple examples.

Example 1: The UE transmits first information, where the first information includes at least one of the following: delay information, or sync/coordination info.

The UE transmits the first information to the base station. Specifically, at least one of the following may be applied:
a) The purpose of the first information is to enable the base station to acquire delay and/or data volume information and/or sync/coordination information, and/or to be used for the base station to perform scheduling, resource allocation, or parameter configuration.
   The data volume information is used for the base station to learn about data related to the delay, and thereby complete scheduling of the corresponding data or allocate resources to the corresponding data before the time point required by the delay.
b) The first information includes sync/coordination info.

Optionally, the sync/coordination info may be arranged to indicate which object(s) have a sync/coordination relationship, or to indicate whether a certain object has a demand for sync/coordination info. The object may be one of a PDU, an SDU, a data packet, a PDU set, a data burst, a DRB, an RLC, a QoS flow, or a PDU session.

Optionally, the sync/coordination info needs to be reported together with the delay information, or used (functioned) together.

c) The first information includes delay and/or data volume information. Further, the first information includes multiple pieces of delay and/or multiple pieces of data volume information.

Optionally, the first information includes object information (i.e., object information is explicitly included in the first information), such as object information corresponding to the reported delay and/or object information corresponding to the reported data volume, or object information having a sync/coordination relationship. Optionally, the object information is indicated in the form of a bitmap, or indicated through an index/ID/SN. Optionally, the object information indicates an object identifier, such as an ID, an index, or an SN of a PDU, an SDU, a data packet, a PDU set, a data burst, a DRB, an RLC, a QoS flow, or a PDU session.

For example, if reporting information of a single object, the information of the object may be indicated directly by an ID, an index, or an SN, or the object may be identified at a corresponding bitmap position within a bitmap representing the object information (e.g., the bitmap bit is set to 1).

For example, if reporting information of multiple objects, the information of the objects may be indicated directly by IDs, indexes, or SNs (optionally, the specified object information can be indicated sequentially. For example, sorting the objects and related object information (such as delays) in ascending order of ID, index, or SN), or the objects may be identified at corresponding bitmap positions within a bitmap representing the object information (e.g., the bitmap bit is set to 1).

Optionally, the object information relates to multi-modal objects, or objects whose delays satisfy a certain demand (i.e., remaining delay).

Optionally, which object(s) can report the first information can be configured by the network and/or supported by the UE (for example, the UE has the capability to identify the information of the first object).

The first information is reported for a certain object or certain objects, but implicitly indicates the object information when reporting the first information.

For example, reporting is specific to a specific LCH, a specific LCG, or a specific LCH group (that is, the network may additionally configure several LCHs as a group, where these several LCHs have a sync relationship).

For example, reporting for all LCHs, all LCGs, or all LCH groups (that is, the network may additionally configure several LCHs as a group, where these several LCHs have a sync relationship).

Optionally, which LCHs, LCGs, or LCH groups can report the first information can be configured by the network and/or supported by the UE (for example, the UE has the capability to identify the information of the first object).

Optionally, the delay information is multi-modal delay information (the multi-modal information is sync/coordination information). For example, Alt1: the delay information is a delay difference between objects with a sync/coordination relationship (e.g., only the difference value between the two objects is provided, without taking compared objects into consideration); or a delay difference of one object relative to another object having a sync/coordination relationship with the one object (e.g., there is a definite compared object, and the difference value relative to the compared object is provided); respective delays of multiple objects with a sync/coordination relationship; a delay of an object having data to be transmitted among multiple objects with a sync/coordination relationship (e.g., there are two synchronized flows, transmission of one flow has completed while the other flow still has data to be transmitted, and the delay of the data is the first delay information. Alternatively, there are two synchronized data packets, one packet has been transmitted completely while the other still has data to be transmitted, and the delay of the residual data is the first delay information); a delay of an object having a shortest delay tolerance among multiple objects with a sync/coordination relationship, or a delay of an object having a longest delay tolerance among multiple objects with a sync/coordination relationship; or a delay of a specific object having a sync/coordination relationship (such as an object having a minimum index or maximum index). Alt2: a delay difference between data packets with shortest delays of respective objects with a sync/coordination relationship, (e.g., only a difference value between the two data packets is provided, without taking the compared objects into consideration); or a delay difference between a data packet with a shortest delay of one object and a data packet with a shortest delay of another object having a sync/coordination relationship with the one object (e.g., there is a definite compared object, and the difference value relative to this compared object is provided); or respective delays of data packets with shortest delays of multiple objects with a sync/coordination relationship; or a delay of a data packet with a shortest delay of an object having data to be transmitted among multiple objects with a sync/coordination relationship (e.g., there are two synchronized flows, transmission of one flow has completed and the other flow still has data to be transmitted. If there is data A with a shortest delay among the data to be transmitted, the delay of data A is provided. Alternatively, there are two synchronized data packets, one packet has been fully transmitted and the other packet has data to be transmitted, and the delay of the data to be transmitted is provided); or a delay of a data packet with a shortest delay of an object having a shortest delay tolerance among multiple objects with a sync/coordination relationship (e.g., if two synchronized objects have delays of 10ms (milliseconds) and 9ms respectively, and the object having 9ms delay includes two data packets with remaining delays of 5ms and 4ms respectively, then the delay information of 4ms is reported); or a delay of a data packet with a shortest delay of an object having a longest delay tolerance among multiple objects with a sync/coordination relationship (e.g., if two synchronized objects have delays of 10ms and 9ms respectively, and the object having 10ms delay includes two data packets with remaining delays of 5ms and 4ms respectively, then the delay information of 4ms is reported); or a delay of a data packet of a specific object having a sync/coordination relationship (such as the object having a minimum index or maximum index); or a delay of a data packet with a shortest delay of a specific object having a sync/coordination relationship (e.g., an object having a minimum index, maximum index, shortest delay or longest delay). (Optionally, "shortest" in this paragraph can also be replaced with "longest").

Optionally, the data volume information is information of an object having a sync/coordination relationship, or data volume information of an object corresponding to the reported delay information, or information of an LCH/LCG/LCH group where a data packet corresponding to the reported delay information is located. Optionally, the information for an object in the data volume information may be information of a first object, or may be overall information associated with the first object (e.g., in a multi-modal case, data 1 is indicated, but information of data 1 and associated data 2 is reported).

Optionally, the delay information is remaining delay information. For example, the delay information is delay information for a first object, or delay information of a first object in a case where a trigger condition is satisfied, or delay information of a first object in a case where the first information is reported, or delay information of a shortest-delay data packet of the first object.

Optionally, the remaining delay is how much time is left to reach the duration required by a PDB/PSDB, or the remaining time based on timeout of a PDCP discard timer.

Optionally, the data volume information is information of a first object, or data volume information of an object corresponding to the reported delay information.

Optionally, the delay information and/or the data volume information is an index (for example, a numerical range in which a value is located. e.g., for delay A-B, the corresponding index is 0, for delay B-C, the corresponding index is 1), or a specific value (for example, specific numerical values, such as 5ms, 4 slots, etc.).

Specifically, the index can be determined according to a threshold or a range.

Specifically, the threshold or range corresponding to the index is predefined, determined according to a table, or indicated by RRC.

Optionally, the delay information corresponds to the reported data volume information one to one.

Optionally, the delay information and/or data volume information is reported for the UE (that is, reported at the granularity of the UE, representing the overall information of the UE. E.g., a specific data volume corresponding to a delay among all data to be transmitted by the UE, and/or one or more delay values in a case where the delay satisfies a first threshold), or reported for the object information (e.g., reporting information of a certain LCH or a certain data packet).

d) The first information, which is carried using a MAC CE, UCI, or RRC.

For example, the MAC CE is a newly introduced new MAC CE.

For example, the MAC CE is a DSR MAC CE, or an enhanced DSR MAC CE.

Optionally, a new LCID indicates whether the MAC CE is an enhanced DSR MAC CE or an existing DSR MAC CE. Optionally, a new LCID indicates whether the delay information and/or data volume information relies on the definition in the original DSR MAC CE or the definition in the enhanced DSR MAC CE (that is, via the new LCID, it distinguishes that the reported information is specific to the first information and not to the DSR). Optionally, a new LCID indicates whether information of an object having a sync relationship is included (such as at least one of a delay difference, a data volume, or a minimum delay of the object or of a data packet of the object).

Optionally, a new bit is introduced in the MAC CE to indicate whether the delay information and/or data volume information relies on the definition in the original DSR MAC CE or the definition in the enhanced DSR MAC CE. Alternatively, a new bit is introduced in the MAC CE to indicate whether information of an object having a sync/coordination relationship is included (such as at least one of a delay difference, a data volume, or a minimum delay of the object, or at least one of a delay difference, a data volume, or a minimum delay of data packets of the object. Optionally, the data packet is a specific data packet. For example, the specific data packet may be a data packet with the minimum delay, or a data packet of the object associated with an object that triggered a DSR report).

For example, the MAC CE is a BSR MAC CE, or an enhanced BSR MAC CE.

Optionally, a new LCID indicates whether the MAC CE is an enhanced BSR MAC CE or an existing BSR MAC CE. Optionally, a new LCID indicates whether the data volume information relies on the definition in the original BSR MAC CE or the definition in the enhanced BSR MAC CE. Optionally, based on the new LCID, the base station knows that it relies on the definition in the enhanced BSR MAC CE, and thereby knows that these data volumes have delay requirements and need to be scheduled as soon as possible.

Optionally, a new bit is introduced in the MAC CE to indicate whether the data volume information relies on the definition in the original DSR MAC CE or the definition in the enhanced BSR MAC CE.

e) Optionally, the trigger condition for the first information, which can reuse the existing DSR trigger condition or BSR trigger condition.

f) Optionally, the trigger condition for the first information may include at least one of the following: the arrival of data of an object(s) having a sync/coordination relationship ( e.g., data arrival of one of the objects, or data arrival of all associated objects); or the remaining delay of data having a sync/coordination relationship is less than or equal to threshold 1 (e.g., the delay of data of one of the objects is less than threshold 1, or the delay between the two is less than threshold 1); the data volume of data having a sync/coordination relationship is greater than or equal to threshold 3; or for an object having a sync/coordination relationship, that there is no pending first information trigger after the generation of the previous MAC PDU that included a first information report (i.e., after a MAC PDU containing first information content is generated, if the associated objects are object 1 and object 2, and a data packet of associated object 1 triggers a new first information report, then associated object 2 or other data packets of associated object 1 cannot trigger a new first information report again); or the existence of data or partial data having a sync/coordination relationship to be transmitted. Data arrival of a first object (the first object is configured by the network and/or supported by the UE, and/or the first object has delay information or sync/coordination info (or multi-modal information), and/or the first object is an object whose delay or sync/coordination requirement (or multi-modal requirement) satisfies a certain condition, and/or the first object is configured to be capable of performing a related behavior(s)); the remaining delay of data of the first object is less than or equal to threshold 1; the data volume of data of the first object is greater than or equal to threshold 3; the first object has no pending first information trigger after the generation of the previous MAC PDU that included a first information report; there is data or partial data of the first object to be transmitted. A first timer for a first information reporting cycle times out; a first information trigger cycle timer times out.

g) Optionally, in the case where the first information reporting has already been triggered, cancellation conditions for the first information trigger include at least one of the following: data of an object having a sync/coordination relationship is discarded; a new UL grant can carry data of an object having a sync/coordination relationship (the object has previously triggered a first information report); data having a sync/coordination relationship has triggered a first information report, but its remaining delay is less than or equal to threshold 2 (threshold 2 is less than threshold 1); a first object has triggered a first information report, but its data is discarded; a new UL grant can carry data of a first object that triggered a first information report; a first object has triggered a first information report, but the remaining delay of its data is less than or equal to threshold 2 (threshold 2 is less than threshold 1); the first object is reconfigured; the MAC entity is reconfigured; a first information reporting configuration is reconfigured; or a first information trigger configuration is reconfigured.

h) The delay information and/or the data volume information is calculated and/or statistically analyzed and/or interacted to the MAC by an RLC and/or a PDCP.

Optionally, the RLC and/or PDCP calculate and/or statistically analyze and/or interact the first information to the MAC when conditions are met (e.g., periodic, or satisfying a first information trigger or reporting condition (i.e., satisfying a trigger or reporting condition of the delay information and/or data volume information)). Alternatively, in a case where the MAC makes a request, or the MAC determines that there is a need to report or trigger the first information, the RLC and/or the PDCP calculate and/or statistically analyze and/or interact the first information to the MAC.

Optionally, the delay information is determined according to a PDCP discard timer, or determined according to the time when the data packet arrives at the PDCP/RLC, or determined according to the waiting time of the data packet in the PDCP/RLC, or determined according to the PDB/PSDB of the data packet. (The delay information may also be determined by at least two of these factors). For instance, the remaining time of the discard timer is the delay. For example, if the PDB is 3ms and the data packet has waited 1ms in the PDCP, the delay is 2ms. For example, if the PDB is 2ms, the delay is 2ms.

Optionally, the data volume information is determined according to whether there is a sync/coordination relationship, or determined according to the data volume of data packets in the PDCP/RLC buffer, or determined according to the size of a control PDU, or determined according to whether it is a new transmission or a retransmission (the data volume information may also be determined by at least two of these factors).

2. The base station acquires delay and/or data volume information according to the first information reported by the UE, and/or the first information reported by the UE is used for the base station to perform scheduling, resource allocation, or parameter configuration.
a) Optionally, the UE reports an object having a sync/coordination relationship (such as a QoS flow, a data flow, an LCH, an LCH group, an LCG, or a DRB), and the network configures which object(s) can report the first information based on the report. Optionally, the reported object may be the same as the first object, or the first object may be a subset of the reported object(s).
b) Optionally, the UE reports information of an object capable of identifying or reporting the first information, or reports information of an object capable of identifying or reporting delay-based scheduling (such as a QoS flow, data flow, LCH, LCH group, LCG, or DRB). The network configures which objects can report the first information based on the report. Optionally, the reported object may be the same as the first object, or the first object may be a subset of the reported objects.

For example, for sync, the UE reports LCH1 and LCH2 as objects with sync requirements, and the reporting is semi-static (such as UE assistance information, or an RRC method) or dynamic (such as a MAC CE or RRC). Optionally, the network configures the UE to report the first information.

For example, for sync, LCH1 and LCH2 are objects with sync requirements, and a new MAC CE or an enhanced DSR MAC CE is used to report the first information. In the first information, the respective delays (such as the minimum remaining delay) of LCH1 and LCH2 are indicated. Further, for the delay, corresponding data volume information is respectively indicated. Optionally, the delay is that of an LCH or of a data packet (such as a specific data packet, or data with the minimum delay).

For example, for sync, LCH1 and LCH2 are objects with sync requirements, and a new MAC CE or an enhanced DSR MAC CE is used to report the first information. In the first information, the delay difference of LCH2 compared to LCH1 is indicated. Further, the data volume information of LCH2 and/or LCH1 is indicated. Optionally, the delay is that of an LCH or of a data packet (such as a specific data packet, or the data packet with the minimum delay).

For example, for sync, LCH1 and LCH2 are objects with sync requirements. When the remaining delay of LCH1 and/or LCH2 is less than threshold 1, the remaining delay of LCH1 and/or LCH2 is reported, and/or the delay difference between LCH1 and LCH2 is reported. Further, the data volume information of LCH2 and/or LCH1 is indicated. Optionally, the delay is that of an LCH or of a data packet (such as a specific data packet, or data with the minimum delay).

For example, for sync, LCH1 and LCH2 are objects with sync requirements. In the case where data of LCH1 and/or LCH2 arrives, the remaining delay of LCH1 and/or LCH2 is reported, and/or the delay difference between LCH1 and LCH2 is reported. Further, the data volume information of LCH2 and/or LCH1 is indicated. Optionally, the delay is that of an LCH or of a data packet (such as a specific data packet, or data with the minimum delay).

For example, for sync, LCH1 and LCH2 are objects with sync requirements, and a new MAC CE or an enhanced DSR MAC CE is used to report the first information. Under the condition of acquiring the delay difference between LCH1 and LCH2, and learning that data packets have been acquired (e.g., between respective specific data packets of LCH1 and LCH2, or between data packets of LCH1 and LCH2 in each cycle, or between a data packet with the shortest delay and its sync data packet, or between respective data packets of LCH1 and LCH2 within a period of time), the first information is reported.

For example, for sync, LCH1 and LCH2 are objects with sync requirements, and a new MAC CE or an enhanced DSR MAC CE is used to report the first information. If LCH1 triggers a DSR report, in the case of reporting the DSR information of LCH1, the delay and/or data volume information of LCH2 or data packets of LCH2 is reported. The data packet of LCH2 is a data packet in LCH2 associated with LCH1, or a data packet of LCH2 associated with the data packet triggering the LCH1 DSR report, or a data packet in LCH2 with the minimum remaining delay, or a data packet in LCH2 with a remaining delay less than threshold M.

For example, for sync, LCH1 and LCH2 are objects with sync requirements, and a new MAC CE or an enhanced DSR MAC CE is used to report the first information. If LCH1 and LCH2, or the data packet of LCH1 and the data packet of LCH2, have a delay difference less than or equal to threshold B, then the first information is reported, or the reporting of the first information is triggered.

For example, for delay-based scheduling, the UE reports itself as a UE supporting delay-based scheduling, or reports that LCH1 can support delay-based scheduling. Optionally, the network configures LCH1 of the UE to report the first information.

For example, for delay-based scheduling, LCH1 is an LCH capable of reporting delay information, or LCH1 is an LCH supporting delay-based scheduling, or the UE is a UE capable of reporting delay information, or the UE is a UE supporting delay-based scheduling, and the network configures the UE to report the first information. If a new MAC CE or an enhanced DSR MAC CE is used to report the first information, the delay (e.g., minimum remaining delay) of LCH1 is indicated in the first information. Further, for the delay, corresponding data volume information is indicated. Optionally, the delay is that of an LCH or of a data packet (such as a specific data packet, or data with the minimum delay).

For example, for delay-based scheduling, LCH1 is an LCH capable of reporting delay information, or LCH1 is an LCH supporting delay-based scheduling, or the UE is a UE capable of reporting delay information, or the UE is a UE supporting delay-based scheduling, and the network configures the UE to report the first information. If a new MAC CE or an enhanced BSR MAC CE is used to report the first information, the data volume of LCH1 or of the LCG where LCH1 is located is indicated in the first information (e.g., the data volume of a data packet with the minimum remaining delay, or the data volume of data packets less than a delay threshold, or the data volume of LCH1, or the data volume of the LCG where LCH1 is located).

For example, for delay-based scheduling, LCH1 is an LCH capable of reporting delay information, or LCH1 is an LCH supporting delay-based scheduling, or the UE is a UE capable of reporting delay information, or the UE is a UE supporting delay-based scheduling, and the network configures the UE to report the first information. The UE reports the first information in the case where data arrives, or the delay is less than or equal to threshold A.

Therefore, in the embodiments of the present disclosure, FIG. 14 is a first implementation schematic diagram of a wireless communication method according to an embodiment of the present disclosure. As shown in FIG. 14, the UE (terminal device) reports the first information to the NW (network device), such as "indicate the sync info", thereby enabling the network to learn the delay information or delay difference information for scheduling or resource allocation, that is, performing scheduling, resource allocation, or parameter configuration based on the first information.

### Example 2: Introducing an Association Relationship Between LCHs and UL Grants

1. The network configures a first association relationship, where the first association relationship is an LCH mapping restriction, or is used to determine a carrying or mapping relationship between LCHs and UL grants.
   a) Optionally, for a UL DG, the network configures data of which LCH(s) can be carried and transmitted on the DG.
      For example, the DCI indicates an LCH or LCG identifier that can be carried by a specific DG. When configuring an LCH or LCG, it indicates whether the LCH or LCG can use the specific DG for transmission, whether the LCH or LCG can prioritize the use of the specific DG for transmission, or whether the LCH or LCG uses the specific DG for low-priority transmission.
   b) Optionally, for a UL grant, the network configures whether to prioritize transmission of data of the first object, whether to assign low priority to the transmission of data of the first object, whether to prioritize transmission of object(s) having a sync/coordination relationship, or whether to assign low priority to the transmission of objects having a sync/coordination relationship.

For example, for UL grant1, if there are data packets with a sync/coordination relationship, then the data packets with a sync/coordination relationship are carried on UL grant1. Further, if there are remaining bits in the UL grant, they can carry data packets of other LCHs.

For example, for UL grant1, if there are data packets of the first object, then the data packets of the first object are carried on UL grant1. Further, if there are remaining bits in the UL grant, they can carry data packet(s) of other LCHs.

c) Optionally, for a UL grant, the network configures whether to exclusively carry the transmission of data of the first object, or whether to exclusively carry the transmission of objects having a sync/coordination relationship.

For example, for UL grant1, if there are data packets with a sync/coordination relationship, then the data packets with a sync/coordination relationship are carried on UL grant1. Further, if there are remaining bits in the UL grant, they can carry padding.

For example, for UL grant1, if there are data packets of the first object, then the data packets of the first object are carried on UL grant1. Further, if there are remaining bits in the UL grant, they can carry padding.

2. The network acquires information of an object having a sync/coordination relationship, and/or information of an object capable of reporting the first information (the first object is the same as in Example 1). Based on this information, the network configures a preset first association relationship.

a) Optionally, the UE reports an object having a sync/coordination relationship (such as a QoS flow, a data flow, an LCH, an LCH group, an LCG, or a DRB).

b) Optionally, the UE reports information of an object capable of identifying or reporting the first information, or reports information of an object capable of identifying or reporting delay-based scheduling (such as a QoS flow, a data flow, an LCH, an LCH group, an LCG, or a DRB).

For example, a first association relationship is introduced, such as introducing LCH mapping restriction X. LCH mapping restriction X is used to indicate which LCH(s) (such as LCH1 and LCH2, or LCH3) can be transmitted on DG type A. If the network schedules a DG, it indicates in the DCI whether the UL grant is DG type A. If a DG is DG type A, then only LCH(s) corresponding to DG type A (such as LCH1 and LCH2, or LCH3) can be transmitted using this DG.

For example, a first association relationship is introduced, such as introducing LCH mapping restriction Y. LCH mapping restriction Y is used to indicate which LCHs (such as LCH1 and LCH2, or LCH3) can be transmitted on DG type A. If the network schedules a DG, it indicates in the DCI whether the UL grant is DG type A. If a DG is DG type A, then LCH(s) corresponding to DG type A (such as LCH1 and LCH2, or LCH3) has/have priority to be transmitted using this DG. If the DG has remaining bits, it can further carry data of other LCHs.

For example, a first association relationship is introduced, such as introducing LCH mapping restriction Z. LCH mapping restriction Z is used to indicate which LCHs (such as LCH1 and LCH2, or LCH3) can be transmitted on CG type A. If the network configures a CG (Configured Grant), it indicates in the DCI whether the UL grant is CG type A. If a CG is CG type A, then LCH(s) corresponding to CG type A (such as LCH1 and LCH2, or LCH3) have priority to be transmitted using this CG. If the CG has remaining bits, it can further carry data of other LCH(s).

For example, a first association relationship is introduced, such as introducing LCH mapping restriction X. LCH mapping restriction X is used to indicate which LCH(s) (such as LCH1 and LCH2, or LCH3) can be transmitted on CG type A or DG type A. If the size of the LCH list is 0 or the LCH list is NULL, then no LCH can be carried and transmitted on CG type A or DG type A. If the LCH list does not appear, it represents that the LCH can be transmitted on any CG and/or DG.

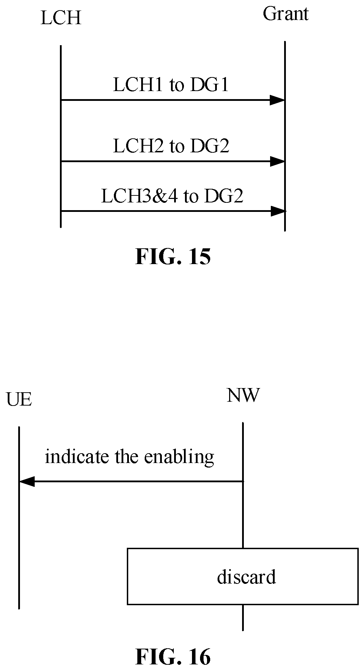

It can thus be seen that, in the embodiments of the present disclosure, FIG. 15 is a second implementation schematic diagram of a wireless communication method according to an embodiment of the present disclosure. As shown in FIG. 15, a first association relationship representing an association relationship between LCHs and UL grants can be introduced. Wherein, based on the first association relationship, a UL grant resource carrying the LCH can be configured for the LCH; for example, DG1 can carry LCH1, DG2 can carry LCH2, and DG2 can carry LCH3 and LCH4.

It can be understood that, in the embodiments of the present disclosure, by introducing a new mapping relationship between LCHs and UL grants, the transmission of a specific LCH can be guaranteed, and under certain possibilities, the transmission of other LCHs can also be guaranteed.

Example 3: PDCP discard processing based on multi-modal information or remaining delay information.
1. The UE performs PDCP discard processing based on multi-modal information or remaining delay information.
   a) Optionally, the processing is performed, activated, or deactivated per UE or per MAC entity. Alternatively, the processing is performed, activated, or deactivated per DRB.
   b) Optionally, the processing is performed at the PDCP entity.
   c) Optionally, whether to perform the processing is determined by the PDCP, indicated by the network, or notified by the UE MAC to the UE PDCP.
   d) Optionally, the processing is to consider multi-modal information or remaining delay information in a case of a PDCP discard mechanism.

Optionally, if for objects having a sync/coordination relationship, a data packet of one of the objects is deleted (or discarded), then the PDCP also deletes the associated data packet of another object. Optionally, if the associated objects correspond to different PDCPs or DRBs, the PDCPs perform interaction to notify the counterpart whether to delete the data packet, and/or information of the deleted associated data packet (such as an SN, or whether it is associated with other packets).

Optionally, if for objects having a sync/coordination relationship, the remaining delay of a data packet of one of the objects is less than or equal to a first threshold, then the PDCP deletes the data packet and its associated data packet(s). Optionally, if the associated object(s) correspond to different PDCPs or DRBs, the PDCPs perform interaction to notify the counterpart whether to delete the data packet(s), and/or information of the deleted associated data packet(s) (such as SN, or whether it is associated with other packets).

Optionally, if there is a first object, and the remaining delay of its data packet is less than or equal to the first threshold, then the PDCP deletes the data packet. Optionally, if the data packet is associated with other data packet(s), the data packet(s) associated with the data packet are also deleted.

Optionally, if the PDCP performs a packet deletion operation, and if the deleted data packet has already been delivered to the RLC layer, the PDCP notifies the RLC to delete the corresponding data packet (e.g., indicating the SN of the deleted PDCP data packet).

Optionally, if the PDCP performs PDCP discard processing based on multi-modal information or remaining delay information, and if the data packet to be deleted has already been delivered to the RLC layer, the PDCP cannot delete the corresponding data packet.

2. The network configures the UE or specifies which DRB(s) to perform PDCP discard processing based on multi-modal information or remaining delay information.
a) Optionally, it is indicated per UE or per DRB whether to perform PDCP discard processing based on multi-modal information or remaining delay information.
b) Optionally, it is indicated in a PDCP config whether the PDCP or DRB performs PDCP discard processing based on multi-modal information or remaining delay information.
c) Optionally, a MAC CE is used to indicate whether the UE or which DRB(s) activate(s)/deactivate(s) PDCP discard processing based on multi-modal information or remaining delay information.

If the MAC CE is received, the UE activates/deactivates PDCP discard processing based on multi-modal information or remaining delay information. Alternatively, if the MAC CE is received, the UE activates/deactivates PDCP discard processing based on multi-modal information or remaining delay information for the DRB indicated by the MAC CE.

If the MAC CE indicates to activate PDCP discard processing based on multi-modal information or remaining delay information, the UE notifies a higher layer to activate PDCP discard processing based on multi-modal information or remaining delay information. Alternatively, if the MAC CE indicates to activate PDCP discard processing based on multi-modal information or remaining delay information, the UE notifies a higher layer to activate PDCP discard processing based on multi-modal information or remaining delay information for the DRB indicated by the MAC CE.

If the MAC CE indicates to deactivate PDCP discard processing based on multi-modal information or remaining delay information, the UE notifies a higher layer to deactivate PDCP discard processing based on multi-modal information or remaining delay information. Alternatively, if the MAC CE indicates to deactivate PDCP discard processing based on multi-modal information or remaining delay information, the UE notifies a higher layer to deactivate PDCP discard processing based on multi-modal information or remaining delay information for the DRB indicated by the MAC CE.

d) The base station acquires object information having a sync/coordination relationship, and/or object information capable of reporting the first information (the first object is the same as in Example 1). Based on the information, the network configures a preset association relationship.

Optionally, the UE reports an object having a sync/coordination relationship (e.g., a QoS flow, a data flow, an LCH, an LCH group, an LCG, or a DRB).

Optionally, the UE reports information of an object capable of identifying or reporting the first information, or information of an object capable of identifying or reporting delay-based scheduling (e.g., a QoS flow, a data flow, an LCH, an LCH group, an LCG, a DRB).

It can thus be seen that, in the embodiments of the present disclosure, FIG. 16 is a third implementation schematic diagram of a wireless communication method according to an embodiment of the present disclosure. As shown in FIG. 16, the network configures the UE or specifies which DRB(s) to perform PDCP discard processing based on multi-modal information or remaining delay information, thereby supporting the deletion of associated data packets, which can in turn improve system capacity.

Example 4: Last-In-First-Out processing of data packets based on multi-modal information.

If associated data packets are mapped to the same LCH, PDCP, or DRB, and if the UE learns that the two data packets are associated with each other, then the associated data packets are transmitted together to a lower layer, or, if there is an available grant, the delivery order of the data packets is adjusted, and/or adjacent SNs are allocated to the associated data packets.

For example: associated flows are mapped to DRB1. The order of data packets arriving at the PDCP is flow1 packet1, flow1 packet2, flow1 packet3, flow2 packet1. packet1 in flow1 and packet1 in flow2 are associated. Then the order in which the PDCP delivers the packets is flow1 packet1, flow2 packet1, flow1 packet2, flow1 packet3; or flow1 packet2, flow1 packet3, flow1 packet1, flow2 packet1. Alternatively, the PDCP allocates PDCP SNs as flow1 packet1 (PDCP SN1), flow2 packet1 (PDCP SN3), flow1 packet2 (PDCP SN4), flow1 packet3 (PDCP SN2).

It can be understood that, in the embodiments of the present disclosure, the above solutions and examples can be used independently or in combination, and the present disclosure does not impose specific limitations.

The present disclosure provides a wireless communication method. On the one hand, a terminal device can report first information including time information, and/or data volume information, and/or association information to a network device, thereby enabling the network device to perform scheduling, resource allocation, or parameter configuration based on the first information; on the other hand, by introducing a new mapping relationship between LCHs and UL grants, specific LCH transmission can be guaranteed; on yet another hand, the network device can configure the terminal device to perform data processing based on the first information. It can be seen that in the embodiments of the present disclosure, the transmission or behavior of sync/coordination info can be supported, while delay-based scheduling over the air interface is simultaneously supported, thereby enabling multi-modal service transmission over the air interface, effectively improving communication performance.

The preferred embodiments of the present disclosure have been described in detail above with reference to the accompanying drawings, but the present disclosure is not limited to the specific details in the above embodiments. Within the scope of the technical concept of the present disclosure, various simple modifications can be made to the technical solutions of the present disclosure, and these simple modifications all fall within the protection scope of the present disclosure. For example, the various specific technical features described in the above specific embodiments can be combined in any suitable manner without contradiction. To avoid unnecessary repetition, various possible combination manners are not further described in the present disclosure. For another example, any combination can also be made between various different embodiments of the present disclosure, as long as it does not violate the idea of the present disclosure, it should also be regarded as the content disclosed in the present disclosure. For yet another example, on the premise of no conflict, the various embodiments described in the present disclosure and/or the technical features in the various embodiments can be arbitrarily combined with the prior art, and the technical solutions obtained after combination should also fall within the protection scope of the present disclosure.

It should also be understood that, in the various method embodiments of the present disclosure, the magnitude of the sequence numbers of the above processes does not mean the order of execution. The execution order of each process should be determined by its function and internal logic, and should not constitute any limitation on the implementation process of the embodiments of the present disclosure. In addition, in the embodiments of the present disclosure, the terms "downlink", "uplink", and "sidelink" are used to indicate the transmission direction of signals or data, wherein "downlink" is used to indicate that the transmission direction of signals or data is a first direction transmitted from a site to user equipment of a cell, "uplink" is used to indicate that the transmission direction of signals or data is a second direction transmitted from user equipment of a cell to a site, and "sidelink" is used to indicate that the transmission direction of signals or data is a third direction transmitted from user equipment 1 to user equipment 2. For example, a "downlink signal" indicates that the transmission direction of the signal is the first direction. In addition, in the embodiments of the present disclosure, the term "and/or" is merely an association relationship describing associated objects, indicating that there can be three relationships. Specifically, A and/or B can indicate three cases: A exists alone, A and B exist simultaneously, and B exists alone. In addition, the character "/" in this text generally indicates that the associated objects before and after it are in an "or" relationship.

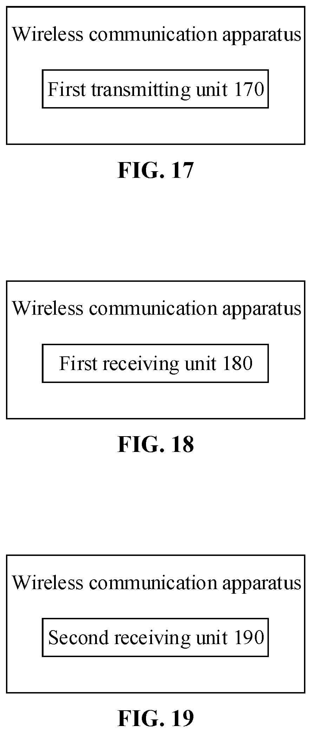

FIG. 17 is a first schematic structural diagram of a wireless communication apparatus according to an embodiment of the present disclosure. As shown in FIG. 17, the apparatus includes a first transmitting unit 170.

The first transmitting unit 170 is configured to transmit first information to a network device; where the first information includes at least one of the following: time information, data volume information, or association information.

Those skilled in the art should understand that the related descriptions of the above wireless communication apparatus in the embodiments of the present disclosure can be understood with reference to the related descriptions of the wireless communication methods in the embodiments of the present disclosure.

FIG. 18 is a second schematic structural diagram of a wireless communication apparatus according to an embodiment of the present disclosure. As shown in FIG. 18, the apparatus includes a first receiving unit 180.

The first receiving unit 180 is configured to receive second configuration information transmitted by a network device, the second configuration information is arranged to configure a first association relationship, the first association relationship including a mapping relationship between LCHs and UL grant resources.

Those skilled in the art should understand that the related descriptions of the above wireless communication apparatus in the embodiments of the present disclosure can be understood with reference to the related descriptions of the wireless communication methods in the embodiments of the present disclosure.

FIG. 19 is a third schematic structural diagram of a wireless communication apparatus according to an embodiment of the present disclosure. As shown in FIG. 19, the apparatus includes a second receiving unit 190.

The second receiving unit 190 is configured to receive third configuration information transmitted by a network device, and perform data processing based on the third configuration information; where the third configuration information is arranged to indicate whether the terminal device supports performing data processing; or to indicate a DRB that performs data processing.

Those skilled in the art should understand that the related descriptions of the above wireless communication apparatus in the embodiments of the present disclosure can be understood with reference to the related descriptions of the wireless communication methods in the embodiments of the present disclosure.

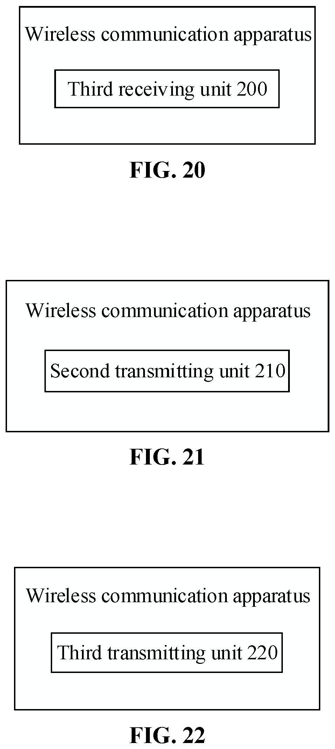

FIG. 20 is a fourth schematic structural diagram of a wireless communication apparatus according to an embodiment of the present disclosure. As shown in FIG. 20, the apparatus includes a third receiving unit 200.

The third receiving unit 200 is configured to receive first information transmitted by a terminal device; where the first information includes at least one of the following: time information, data volume information, or association information.

Those skilled in the art should understand that the related descriptions of the above wireless communication apparatus in the embodiments of the present disclosure can be understood with reference to the related descriptions of the wireless communication methods in the embodiments of the present disclosure.

FIG. 21 is a fifth schematic structural diagram of a wireless communication apparatus according to an embodiment of the present disclosure. As shown in FIG. 21, the apparatus includes a second transmitting unit 210.

The second transmitting unit 210 is configured to transmit second configuration information to a terminal device, the second configuration information being used to configure a first association relationship, the first association relationship including a mapping relationship between an LCH and a UL grant resource.

Those skilled in the art should understand that the related descriptions of the above wireless communication apparatus in the embodiments of the present disclosure can be understood with reference to the related descriptions of the wireless communication methods in the embodiments of the present disclosure.

FIG. 22 is a sixth schematic structural diagram of a wireless communication apparatus according to an embodiment of the present disclosure; as shown in FIG. 22, the apparatus includes a third transmitting unit 220.

The third transmitting unit 220 is configured to transmit third configuration information to a terminal device, so that the terminal device performs data processing based on the third configuration information; wherein the third configuration information is arranged to indicate whether the terminal device supports performing data processing; or to indicate a DRB that performs data processing.

Those skilled in the art should understand that the related descriptions of the above wireless communication apparatus in the embodiments of the present disclosure can be understood with reference to the related descriptions of the wireless communication methods in the embodiments of the present disclosure.

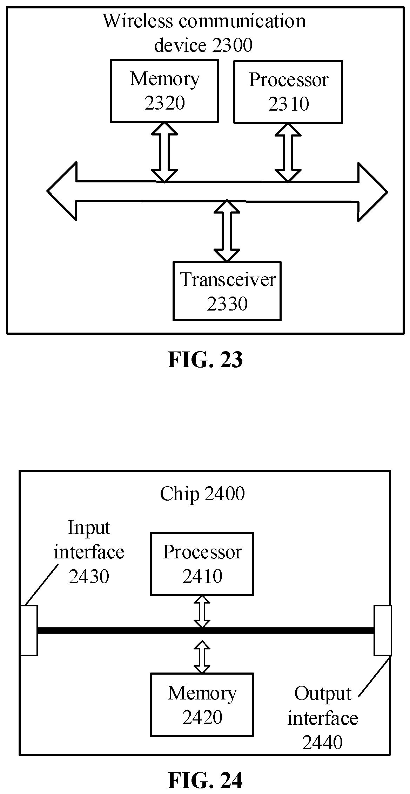

FIG. 23 is a schematic structural diagram of a wireless communication device according to an embodiment of the present disclosure. The communication device 2300 shown in FIG. 23 includes a processor 2310. The processor 2310 can call and run a computer program from a memory to implement the methods in the embodiments of the present disclosure.

Optionally, as shown in FIG. 23, the communication device 2300 may further include a memory 2320. Wherein, the processor 2310 can call and run a computer program from the memory 2320 to implement the methods in the embodiments of the present disclosure.

The memory 2320 may be a separate device independent of the processor 2310, or may be integrated in the processor 2310.

Optionally, as shown in FIG. 23, the communication device 2300 may further include a transceiver 2330, and the processor 2310 can control the transceiver 2330 to communicate with other devices. Specifically, it can transmit information or data to other devices, or receive information or data transmitted by other devices.

Wherein, the transceiver 2330 may include a transmitter and a receiver. The transceiver 2330 may further include antennas, and the number of antennas may be one or more.

The communication device 2300 may specifically be the terminal in the embodiments of the present disclosure, and the communication device 2300 can implement the corresponding processes implemented by the terminal in the various methods of the embodiments of the present disclosure. For brevity, details are not described herein again.

FIG. 24 is a schematic structural diagram of a chip according to an embodiment of the present disclosure. As shown in FIG. 24, the chip 2400 includes a processor 2410. The processor 2410 can call and run a computer program from a memory to implement the methods in the embodiments of the present disclosure.

Optionally, as shown in FIG. 24, the chip 2400 may further include a memory 2420. Wherein, the processor 2410 can call and run a computer program from the memory 2420 to implement the methods in the embodiments of the present disclosure.

Wherein, the memory 2420 may be a separate device independent of the processor 2410, or may be integrated in the processor 2410.

Optionally, the chip 2400 may further include an input interface 2430. Wherein, the processor 2410 can control the input interface 2430 to communicate with other devices or chips. Specifically, it can acquire information or data transmitted by other devices or chips.

Optionally, the chip 2400 may further include an output interface 2440. Wherein, the processor 2410 can control the output interface 2440 to communicate with other devices or chips. Specifically, it can output information or data to other devices or chips.

The chip can be applied to the terminal in the embodiments of the present disclosure, and the chip can implement the corresponding processes implemented by the terminal in the various methods of the embodiments of the present disclosure. For brevity, details are not described herein again.

It should be understood that the chip mentioned in the embodiments of the present disclosure may also be referred to as a system-level chip, a system chip, a chip system, or a system-on-chip, etc.

It should be understood that the processor in the embodiments of the present disclosure may be an integrated circuit chip with signal processing capabilities. In the implementation process, the various steps of the above method embodiments can be completed by integrated logic circuits of hardware in the processor or instructions in the form of software. The above processor may be a general-purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. It can implement or execute the various methods, steps, and logical block diagrams disclosed in the embodiments of the present disclosure. A general-purpose processor may be a microprocessor or the processor may also be any conventional processor, etc. The steps of the methods disclosed in connection with the embodiments of the present disclosure can be directly embodied as being executed and completed by a hardware decoding processor, or executed and completed by a combination of hardware and software modules in the decoding processor. The software modules may be located in mature storage media in the art, such as a random access memory, a flash memory, a read-only memory, a programmable read-only memory, an electrically erasable programmable memory, or a register. The storage medium is located in a memory, and the processor reads information in the memory and completes the steps of the above methods in combination with its hardware.

It can be understood that the memory in the embodiments of the present disclosure may be a volatile memory or a non-volatile memory, or may include both volatile and non-volatile memories. Wherein, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. By way of example but not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include, but is not limited to, these and any other suitable types of memory.

It should be understood that the above memory is an exemplary but not restrictive description. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), and so on. That is to say, the memory in the embodiments of the present disclosure is intended to include, but is not limited to, these and any other suitable types of memory.

An embodiment of the present disclosure further provides a computer-readable storage medium, configured to store a computer program. The computer-readable storage medium can be applied to the terminal in the embodiments of the present disclosure, and the computer program causes a computer to execute the corresponding processes implemented by the terminal in the various methods of the embodiments of the present disclosure. For brevity, details are not described herein again.

An embodiment of the present disclosure further provides a computer program product, including computer program instructions. The computer program product can be applied to the terminal in the embodiments of the present disclosure, and the computer program instructions cause a computer to execute the corresponding processes implemented by the terminal in the various methods of the embodiments of the present disclosure. For brevity, details are not described herein again.

An embodiment of the present disclosure further provides a computer program. The computer program can be applied to the terminal in the embodiments of the present disclosure. When the computer program is run on a computer, it causes the computer to execute the corresponding processes implemented by the terminal in the various methods of the embodiments of the present disclosure. For brevity, details are not described herein again.

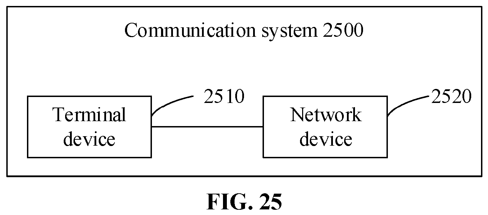

FIG. 25 is a schematic block diagram of a wireless communication system according to an embodiment of the present disclosure. As shown in FIG. 25, the communication system 2500 includes a terminal device 2510 and a network device 2520.

The terminal device 2510 can be used to implement the corresponding functions implemented by the terminal device in the above methods, and the network device 2520 can be used to implement the corresponding functions implemented by the network device in the above methods. For brevity, details are not described herein again.

Those of ordinary skill in the art can appreciate that the units and algorithm steps of the various examples described in connection with the embodiments disclosed herein can be implemented in electronic hardware, or a combination of computer software and electronic hardware. Whether these functions are executed in hardware or software depends on the specific application and design constraints of the technical solution. Professionals can use different methods to implement the described functions for each specific application, but such implementation should not be considered to go beyond the scope of the present disclosure.

Those skilled in the art can clearly understand that, for the convenience and conciseness of description, the specific working processes of the systems, apparatuses, and units described above can refer to the corresponding processes in the foregoing method embodiments, and details are not described herein again.

In the several embodiments provided in the present disclosure, it should be understood that the disclosed systems, apparatuses, and methods can be implemented in other ways. For example, the apparatus embodiments described above are merely illustrative. For example, the division of the units is merely a logical function division, and there may be other division manners in actual implementation. For example, multiple units or components may be combined or integrated into another system, or some features may be ignored or not executed. In addition, the displayed or discussed mutual couplings or direct couplings or communication connections may be implemented through some interfaces. The indirect couplings or communication connections between apparatuses or units may be implemented in electronic, mechanical, or other forms.

The units described as separate parts may or may not be physically separate, and parts displayed as units may or may not be physical units, that is, they may be located in one place, or they may be distributed on multiple network units. Some or all of the units can be selected according to actual needs to achieve the objectives of the solutions of the embodiments.

In addition, functional units in the various embodiments of the present disclosure may be integrated into one processing unit, or each unit may exist alone physically, or two or more units may be integrated into one unit.

If the functions are implemented in the form of a software functional unit and sold or used as an independent product, they can be stored in a computer-readable storage medium. Based on such an understanding, the technical solutions of the present disclosure essentially, or the part contributing to the prior art, or a part of the technical solutions can be embodied in the form of a software product. The computer software product is stored in a storage medium, and includes several instructions to instruct a computer device (which may be a personal computer, a server, or a network device, etc.) to perform all or part of the steps of the methods described in the various embodiments of the present disclosure. The aforementioned storage medium includes: a USB flash drive, a removable hard disk, a Read-Only Memory (ROM), a Random Access Memory (RAM), a magnetic disk, or an optical disc and other media capable of storing program codes.

The above are only specific implementations of the present disclosure, but the protection scope of the present disclosure is not limited thereto. Any variations or replacements that can be easily conceived by those skilled in the art within the technical scope disclosed in the present disclosure shall be covered within the protection scope of the present disclosure. Therefore, the protection scope of the present disclosure shall be subject to the protection scope of the claims.

## Claims

1. A wireless communication method, comprising:
transmitting, by a terminal device, first information to a network device, wherein the first information comprises at least one of time information, data volume information, or association information.

2. The method according to claim 1, wherein the first information further comprises information of at least one object, and the information of the at least one object corresponds to at least one of the time information, the data volume information, or the association information; and
wherein the at least one object comprises an object having a preset association relationship and/or an object satisfying a preset delay condition.

3. The method according to claim 2, wherein an object of the at least one object comprises at least one of a Packet Data Unit (PDU), a Service Data Unit (SDU), a data packet, a PDU set, a data burst, a Data Radio Bearer (DRB), Radio Link Control (RLC), a Quality of Service (QoS) flow, or a PDU session.

4. The method according to claim 2 or 3, wherein transmitting, by the terminal device, first information to the network device comprises:
transmitting, by the terminal device, the first information corresponding to a first object to the network device based on network configuration and/or terminal capability, wherein the at least one object comprises the first object;
the first object is an object configured by the network device and/or supported by the terminal device; and/or
the first object is an object having the time information or the association information; and/or
the first object is an object whose time or association requirement satisfies a first requirement condition; and/or
the first object is an object configured to be able to perform a relevant behavior.

5. The method according to claim 4, wherein the information of the at least one object is indicated in at least one of the following ways:
bitmap indication;
object identifier indication;
indication based on a first reporting Logical Channel (LCH), a first reporting Logical Channel Group (LCG), or a first LCH group corresponding to the first object;
indication based on all LCHs, all LCGs, or all LCH groups corresponding to the first object; or
indication of a second LCH, a second LCG, or a second LCH group capable of carrying the first object based on a first indication.

6. The method according to claim 4 or 5, wherein the first information comprises the association information, and the association information is arranged to indicate at least one of:
a second object having a preset association relationship among objects corresponding to the association information; or
whether a third object corresponding to the association information has an association requirement.

7. The method according to any one of claims 4 to 6, wherein the first information comprises the time information, and the time information comprises delay information and/or timestamp information.

8. The method according to claim 7, wherein the time information comprises the delay information, the delay information comprises first delay information, and the first delay information comprises any one of:
a delay difference(s) between objects with the association information;
a delay difference(s) between a preset object with the association information and other object(s);
a delay difference(s) between multiple objects with the association information;
a delay of an object having data to be transmitted among multiple objects with the association information;
a delay of an object having a longest delay tolerance among multiple objects with the association information;
a delay of an object having a shortest delay tolerance among multiple objects with the association information;
a delay of an object satisfying a first requirement among multiple objects with the association information;
a delay difference between the shortest delays or a delay difference between the longest delays corresponding to objects with the association information;
a delay difference(s) between a shortest delay of a preset object with the association information and shortest delay(s) of other object(s), or a delay difference(s) between a longest delay of a preset object with the association information and longest delay(s) of other object(s);
a delay difference(s) between multiple shortest delays or a delay difference(s) between multiple longest delays corresponding to multiple objects with the association information;
a delay of a shortest-delay data packet or a longest-delay data packet of an object having data to be transmitted among multiple objects with the association information;
a delay of a shortest-delay data packet or a longest-delay data packet of an object having a longest delay tolerance among multiple objects with the association information;
a delay of a shortest-delay data packet or a longest-delay data packet of an object having a shortest delay tolerance among multiple objects with the association information; or
a delay of a shortest-delay data packet or a longest-delay data packet of an object satisfying a second requirement among multiple objects with the association information.

9. The method according to claim 7, wherein the time information comprises the timestamp information, and the timestamp information comprises any one of:
time of an object with the association information;
a time difference(s) between a preset object with the association information and other object(s);
a time difference(s) between multiple objects with the association information;
time of an object having data to be transmitted among multiple objects with the association information;
time of an object having a longest delay tolerance among multiple objects with the association information;
time of an object having a shortest delay tolerance among multiple objects with the association information;
time of an object satisfying a third requirement among multiple objects with the association information;
a time difference(s) between shortest delays or a time difference(s) between longest delays corresponding to objects with the association information;
time of an object whose remaining delay is less than or equal to a first threshold;
a shortest time or a longest time of data in an LCH where an object whose remaining delay is less than or equal to a second threshold is located;
respective time of all data in an LCH where an object whose remaining delay is less than or equal to a third threshold is located;
a shortest time or a longest time of data in an LCG where an object whose remaining delay is less than or equal to a fourth threshold is located;
respective time of all data in an LCG where an object whose remaining delay is less than or equal to a fifth threshold is located;
a shortest time or a longest time of data in an LCH group where an object whose remaining delay is less than or equal to a sixth threshold is located; or
respective time of all data in an LCH group where an object whose remaining delay is less than or equal to a seventh threshold is located.

10. The method according to claim 4, wherein the first information comprises the data volume information, and the data volume information comprises any one of:
information of an object with the association information;
information of an object corresponding to the time information;
information of a Logical Channel (LCH) where a data packet corresponding to the time information is located;
information of a Logical Channel Group (LCG) where a data packet corresponding to the time information is located;
information of an LCH group where a data packet corresponding to the time information is located; or
information of the first object and information of other objects associated with the first object.

11. The method according to claim 7, wherein the time information comprises the delay information, the delay information comprises second delay information, the second delay information comprises remaining delay information, and the remaining delay information comprises any one of:
delay information of the first object;
delay information of the first object when the first object satisfies a first preset trigger condition;
delay information of the first object when the first information is transmitted; or
delay information of a shortest-delay data packet of the first object.

12. The method according to any one of claims 7 to 11, wherein the delay information comprises a delay index or a delay value; and
wherein the data volume information comprises a data volume index or a data volume value.

13. The method according to any one of claims 1 to 12, wherein the first information is carried on any one of a Media Access Control Control Element (MAC CE), Uplink Control Information (UCI), or Radio Resource Control (RRC).

14. The method according to claim 13, wherein the MAC CE comprises a first MAC CE or a second MAC CE, and the first MAC CE is different from the second MAC CE.

15. The method according to claim 14, wherein the second MAC CE comprises any one of a Delay Status Report (DSR) MAC CE, an enhanced DSR MAC CE, a Buffer Status Report (BSR) MAC CE, or an enhanced BSR MAC CE.

16. The method according to any one of claims 13 to 15, wherein the first information is carried on a MAC CE indicated by a Logical Channel Identifier (LCID); or
the first information is carried on a MAC CE indicated by one or more bits.

17. The method according to any one of claims 1 to 16, wherein transmitting, by the terminal device, first information to a network device comprises:
transmitting, by the terminal device, the first information to the network device based on a trigger condition, wherein the trigger condition comprises a first trigger condition and/or a second trigger condition.

18. The method according to claim 17, wherein the first trigger condition is a Delay Status Report (DSR) trigger condition or a Buffer Status Report (BSR) trigger condition.

19. The method according to claim 17, wherein the second trigger condition comprises at least one of:
data arrival of an object with the association information;
remaining delay of data of an object with the association information being less than or equal to a first delay threshold;
a data volume of data of an object with the association information being greater than or equal to a first data threshold;
no trigger of transmitting of the first information by data of an object with the association information within a current trigger period; or
existence of data to be transmitted of an object with the association information.

20. The method according to claim 19, further comprising:
canceling, by the terminal device, transmitting of the first information based on a first cancellation condition, wherein the first cancellation condition comprises at least one of:
data triggering transmitting of the first information being discarded;
data triggering transmitting of the first information being carried on a new Uplink (UL) grant;
data of the first object triggering transmitting of the first information being discarded;
remaining delay of data triggering transmitting of the first information being less than or equal to a second delay threshold, wherein the second delay threshold is smaller than the first delay threshold;
an object with the association information being reconfigured;
an MAC entity being reconfigured;
reporting configuration of the first information being reconfigured; or
trigger configuration of the first information being reconfigured.

21. The method according to any one of claims 1 to 20, further comprising at least one of the following:
calculating and/or collecting and/or delivering the time information to a lower layer based on Radio Link Control (RLC) and/or Packet Data Convergence Protocol (PDCP);
notifying the time information to a lower layer of the terminal device based on an application layer or a Service Data Adaptation Protocol (SDAP) layer; or
calculating and/or collecting and/or delivering the data volume information to a lower layer based on RLC and/or PDCP.

22. The method according to claim 21, wherein in a case that the time information and/or the data volume information satisfy a second preset trigger condition, the time information and/or the data volume information to the lower layer are calculated and/or statistically analyzed and/or interacted to the lower layer.

23. The method according to claim 21, wherein in a case of requesting or determining to transmit the time information and/or the data volume information, the time information and/or the data volume information are calculated and/or statistically analyzed and/or interacted to the lower layer.

24. The method according to any one of claims 1 to 23, wherein
the time information is determined by an application layer; and/or
the time information is determined by the terminal device; and/or
the time information is carried in a packet header; and/or
the time information is determined according to a PDCP discard timer; and/or
the time information is determined according to arrival time of a data packet at PDCP or RLC; and/or
the time information is determined according to waiting time of a data packet at PDCP or RLC; and/or
the time information is determined according to a Packet Delay Budget (PDB) or a Packet Service Delay Budget (PSDB) of a data packet.

25. The method according to any one of claims 1 to 23, wherein the data volume information is determined according to whether the association information exists; and/or
the data volume information is determined according to whether data of the time information exists; and/or
the data volume information is determined according to a data volume of data packets in a PDCP or RLC buffer; and/or
the data volume information is determined according to a size of a control PDU; and/or
the data volume information is determined according to a transmission type.

26. The method according to any one of claims 1 to 25, further comprising:
transmitting, by the terminal device, an object to be configured and/or information of the object to be configured to the network device; wherein the object to be configured comprises any one of:
an object with the association information;
an object supported by the terminal device; or
an object supporting delay-based scheduling.

27. The method according to any one of claims 1 to 26, further comprising:
receiving, by the terminal device, second information transmitted by the network device, wherein the second information is associated with the first information and comprises at least one of scheduling information, resource allocation information and parameter configuration information; and/or
performing, by the terminal device, uplink (UL) transmission based on first configuration information transmitted by the network device, wherein the first configuration information is associated with the first information.

28. A wireless communication method, the method comprising:
receiving, by a terminal device, second configuration information transmitted by a network device, wherein the second configuration information is arranged to configure a first association relationship, and the first association relationship comprises a mapping relationship between Logical Channels (LCHs) and uplink (UL) grant resources.

29. The method according to claim 28, wherein the UL grant resources comprise Dynamic Grant (DG) resources, and the first association relationship comprises a mapping relationship between LCHs and DG resources.

30. The method according to claim 29, further comprising:
receiving, by the terminal device, first indication information transmitted by the network device, wherein the first indication information is arranged to indicate a first identifier, and the first identifier corresponds to a to-be-transmitted channel carried by first DG resources; wherein the to-be-transmitted channel comprises an LCH or a Logical Channel Group (LCG).

31. The method according to claim 30, further comprising:
transmitting the to-be-transmitted channel indicated by the first identifier through the first DG; or
preferentially transmitting the to-be-transmitted channel indicated by the first identifier through the first DG; or
transmitting, with low priority, the to-be-transmitted channel indicated by the first identifier through the first DG.

32. The method according to claim 28, wherein
only data of a first object is transmitted through the UL grant indicated by the second configuration information; or
data of a first object is preferentially transmitted through the UL grant indicated by the second configuration information; or
data of a first object is transmitted with low priority through the UL grant indicated by the second configuration information.

33. The method according to claim 28, wherein
only data of an object with the association information is transmitted through the UL grant indicated by the second configuration information, or
data of an object with the association information is preferentially transmitted through the UL grant indicated by the second configuration information, or
data of an object with the association information is transmitted with low priority through the UL grant indicated by the second configuration information.

34. The method according to claim 32 or 33, further comprising:
transmitting, by the terminal device, information of an object to be configured and/or information of the first object to the network device; wherein the object to be configured comprises any one of:
an object with the association information;
an object supported by the terminal device; or
an object supporting delay-based scheduling.

35. The method according to claim 34, wherein the first association relationship is configured by the network device based on the information of the object to be configured and/or the information of the first object.

36. A wireless communication method, comprising:
receiving, by a terminal device, third configuration information transmitted by a network device; and
performing data processing based on the third configuration information;
wherein the third configuration information is arranged to:
indicate whether the terminal device supports the data processing; or
indicate a Data Radio Bearer (DRB) for performing the data processing.

37. The method according to claim 36, wherein the data processing comprises data processing based on third information; wherein the third information comprises first information, and the first information comprises association information and/or time information.

38. The method according to claim 37, wherein performing data processing based on the third information comprises:
activating or deactivating Packet Data Convergence Protocol (PDCP) discard processing based on the association information or the time information.

39. The method according to claim 38, further comprising any one of:
the PDCP discard processing is performed or activated or deactivated by the terminal device based on the association information or the time information;
the PDCP discard processing is performed or activated or deactivated by a MAC entity; or
the PDCP discard processing is performed or activated or deactivated by a DRB.

40. The method according to claim 38 or 39, wherein the PDCP discard processing is performed at a PDCP entity based on the association information or the time information.

41. The method according to any one of claims 37 to 40, further comprising any one of the following:
determining, by the PDCP, whether to perform the PDCP discard processing based on the association information or the time information;
indicating, by the network device, whether to perform the PDCP discard processing based on the association information or the time information; or
notifying, by the MAC, the PDCP of whether to perform the PDCP discard processing based on the association information or the time information.

42. The method according to any one of claims 37 to 41, wherein the PDCP discard processing based on the association information or the time information comprises any one of:
deleting associated data packet(s) of other associated object(s) in a case where a data packet of a fourth object among objects with the association information is deleted;
deleting a data packet of a fifth object and associated data packet(s) of other associated object(s) in a case where remaining delay of the data packet of the fifth object among objects with the association information is less than or equal to an eighth threshold; or
deleting a data packet of the first object and associated data packet(s) of other associated object(s) in a case where remaining delay of the data packet of the first object is less than or equal to an eighth threshold.

43. The method according to any one of claims 37 to 42, further comprising:
indicating, through a MAC CE from the network device:
whether the terminal device supports the PDCP discard processing based on the association information or the time information; or
a DRB for performing the PDCP discard processing based on the association information or the time information.

44. The method according to claim 42, further comprising:
transmitting, by the terminal device, information of an object to be configured and/or information of the first object to the network device; wherein the object to be configured comprises any one of:
an object with the association information;
an object supported by the terminal device; or
an object supporting delay-based scheduling.

45. The method according to claim 44, wherein the third configuration information is configured by the network device based on the information of the object to be configured and/or the information of the first object.

46. A wireless communication method, comprising:
receiving, by a network device, first information transmitted by a terminal device; wherein the first information comprises at least one of time information, data volume information, or association information.

47. The method according to claim 46, wherein the first information further comprises information of at least one object, and the information of the at least one object corresponds to at least one of the time information, the data volume information, or the association information;
wherein the at least one object comprises an object having a preset association relationship and/or an object satisfying a preset delay condition.

48. The method according to claim 47, wherein an object among the at least one object comprises one of a Packet Data Unit (PDU), a Service Data Unit (SDU), a data packet, a PDU set, a data burst, a Data Radio Bearer (DRB), Radio Link Control (RLC), a Quality of Service (QoS) flow, or a PDU session.

49. The method according to claim 47 or 48, wherein receiving, by the network device, first information transmitted by the terminal device comprises:
receiving, by the network device, the first information corresponding to a first object transmitted by the terminal device based on network configuration and/or terminal capability, wherein the at least one object comprises the first object; and wherein
the first object is an object configured by the network device and/or supported by the terminal device; and/or
the first object is an object having the time information or the association information; and/or
the first object is an object whose time or association requirement satisfies a first requirement condition; and/or
the first object is an object configured to be able to perform a relevant behavior.

50. The method according to claim 49, wherein the information of the at least one object is indicated in at least one of the following ways:
bitmap indication;
object identifier indication;
indication based on a first reporting Logical Channel (LCH), a first reporting Logical Channel Group (LCG), or a first LCH group corresponding to the first object;
indication based on all LCHs, all LCGs, or all LCH groups corresponding to the first object; or
indication of a second LCH, a second LCG, or a second LCH group capable of carrying the first object based on a first indication.

51. The method according to claim 49 or 50, wherein the first information comprises the association information, and the association information is arranged to indicate at least one of:
a second object having a preset association relationship among objects corresponding to the association information; or
whether a third object corresponding to the association information has an association requirement.

52. The method according to any one of claims 49 to 51, wherein the first information comprises the time information, and the time information comprises delay information and/or timestamp information.

53. The method according to claim 52, wherein the time information comprises the delay information, the delay information comprises first delay information, and the first delay information comprises any one of:
a delay difference(s) between objects with the association information;
a delay difference(s) between a preset object with the association information and other object(s);
a delay difference(s) between multiple objects with the association information;
a delay of an object having data to be transmitted among multiple objects with the association information;
a delay of an object having a longest delay tolerance among multiple objects with the association information;
a delay of an object having a shortest delay tolerance among multiple objects with the association information;
a delay of an object satisfying a first requirement among multiple objects with the association information;
a delay difference between the shortest delays or a delay difference between the longest delays corresponding to objects with the association information;
a delay difference(s) between a shortest delay of a preset object with the association information and shortest delay(s) of other object(s), or a delay difference(s) between a longest delay of a preset object with the association information and longest delay(s) of other object(s);
a delay difference(s) between multiple shortest delays or a delay difference(s) between multiple longest delays corresponding to multiple objects with the association information;
a delay of a shortest-delay data packet or a longest-delay data packet of an object having data to be transmitted among multiple objects with the association information;
a delay of a shortest-delay data packet or a longest-delay data packet of an object having a longest delay tolerance among multiple objects with the association information;
a delay of a shortest-delay data packet or a longest-delay data packet of an object having a shortest delay tolerance among multiple objects with the association information; or
a delay of a shortest-delay data packet or a longest-delay data packet of an object satisfying a second requirement among multiple objects with the association information.

54. The method according to claim 52, wherein the time information comprises the timestamp information, and the timestamp information comprises any one of:
time of an object with the association information;
a time difference(s) between a preset object with the association information and other object(s);
a time difference(s) between multiple objects with the association information;
time of an object having data to be transmitted among multiple objects with the association information;
time of an object having a longest delay tolerance among multiple objects with the association information;
time of an object having a shortest delay tolerance among multiple objects with the association information;
time of an object satisfying a third requirement among multiple objects with the association information;
a time difference(s) between shortest delays or a time difference(s) between longest delays corresponding to objects with the association information;
time of an object whose remaining delay is less than or equal to a first threshold;
a shortest time or a longest time of data in an LCH where an object whose remaining delay is less than or equal to a second threshold is located;
respective time of all data in an LCH where an object whose remaining delay is less than or equal to a third threshold is located;
a shortest time or a longest time of data in an LCG where an object whose remaining delay is less than or equal to a fourth threshold is located;
respective time of all data in an LCG where an object whose remaining delay is less than or equal to a fifth threshold is located;
a shortest time or a longest time of data in an LCH group where an object whose remaining delay is less than or equal to a sixth threshold is located; or
respective time of all data in an LCH group where an object whose remaining delay is less than or equal to a seventh threshold is located.

55. The method according to claim 49, wherein the first information comprises the data volume information, and the data volume information comprises any one of:
information of an object with the association information;
information of an object corresponding to the time information;
information of a Logical Channel (LCH) where a data packet corresponding to the time information is located;
information of a Logical Channel Group (LCG) where a data packet corresponding to the time information is located;
information of an LCH group where a data packet corresponding to the time information is located; or
information of the first object and information of other objects associated with the first object.

56. The method according to claim 52, wherein the time information comprises the delay information, the delay information comprises second delay information, the second delay information comprises remaining delay information, and the remaining delay information comprises any one of:
delay information of the first object;
delay information of the first object when the first object satisfies a first preset trigger condition;
delay information of the first object when the first information is transmitted; or
delay information of a shortest-delay data packet of the first object.

57. The method according to any one of claims 52 to 56, wherein the delay information comprises a delay index or a delay value; and
wherein the data volume information comprises a data volume index or a data volume value.

58. The method according to any one of claims 46 to 57, wherein the first information is carried on any one of a Media Access Control Control Element (MAC CE), uplink control information (UCI), or Radio Resource Control (RRC).

59. The method according to claim 58, wherein the MAC CE comprises a first MAC CE or a second MAC CE, and the first MAC CE is different from the second MAC CE.

60. The method according to claim 59, wherein the second MAC CE is any one of a Delay Status Report (DSR) MAC CE, an enhanced DSR MAC CE, a Buffer Status Report (BSR) MAC CE, or an enhanced BSR MAC CE.

61. The method according to any one of claims 58 to 60, wherein the first information is carried on a MAC CE indicated by a Logical Channel Identifier (LCID); or
the first information is carried on a MAC CE indicated by one or more bits.

62. The method according to any one of claims 46 to 61, wherein
the time information is determined by an application layer; and/or
the time information is determined by the terminal device implementation; and/or
the time information is carried in a packet header; and/or
the time information is determined according to a PDCP discard timer; and/or
the time information is determined according to arrival time of a data packet at PDCP or RLC; and/or
the time information is determined according to waiting time of a data packet at PDCP or RLC; and/or
the time information is determined according to a PDB or a PSDB of a data packet.

63. The method according to any one of claims 46 to 61, wherein the data volume information is determined according to whether the association information exists; and/or
the data volume information is determined according to whether data of the time information exists; and/or
the data volume information is determined according to a data volume of data packets in a PDCP or RLC buffer; and/or
the data volume information is determined according to a size of a control PDU; and/or
the data volume information is determined according to a transmission type.

64. The method according to any one of claims 46 to 63, further comprising:
receiving, by the network device, an object to be configured and/or information of the object to be configured transmitted by the terminal device; wherein the object to be configured comprises any one of:
an object with the association information;
an object supported by the terminal device; or
an object supporting delay-based scheduling.

65. The method according to any one of claims 46 to 64, further comprising:
transmitting, by the network device, second information to the terminal device, wherein the second information is associated with the first information and comprises at least one of scheduling information, resource allocation information, or parameter configuration information, and/or
transmitting, by the network device, first configuration information to the terminal device to enable the terminal device to perform uplink (UL) transmission based on the first configuration information, wherein the first configuration information is associated with the first information.

66. A wireless communication method, the method comprising:
transmitting, by a network device, second configuration information to a terminal device, wherein the second configuration information is arranged to configure a first association relationship, and the first association relationship comprises a mapping relationship between Logical Channels (LCHs) and uplink (UL) grant resources.

67. The method according to claim 66, wherein the UL grant resources comprise dynamic grant (DG) resources, and the first association relationship comprises a mapping relationship between LCHs and DG resources.

68. The method according to claim 67, further comprising:
transmitting, by the network device, first indication information to the terminal device, wherein the first indication information is arranged to indicate a first identifier, and the first identifier corresponds to a to-be-transmitted channel carried by first DG resources; wherein the to-be-transmitted channel comprises an LCH or a Logical Channel Group (LCG).

69. The method according to claim 68, further comprising:
transmitting the to-be-transmitted channel indicated by the first identifier through the first DG; or
preferentially transmitting the to-be-transmitted channel indicated by the first identifier through the first DG; or
transmitting, with low priority, the to-be-transmitted channel indicated by the first identifier through the first DG.

70. The method according to claim 66, wherein
only data of a first object is transmitted through the UL grant indicated by the second configuration information; or
data of a first object is preferentially transmitted through the UL grant indicated by the second configuration information; or
data of a first object is transmitted with low priority through the UL grant indicated by the second configuration information.

71. The method according to claim 66, wherein
only data of an object with the association information is transmitted through the UL grant indicated by the second configuration information, or
data of an object with the association information is preferentially transmitted through the UL grant indicated by the second configuration information, or
data of an object with the association information is transmitted with low priority through the UL grant indicated by the second configuration information.

72. The method according to claim 70 or 71, further comprising:
receiving, by the network device, information of an object to be configured and/or information of the first object transmitted by the terminal device; wherein the object to be configured comprises any one of:
an object with the association information;
an object supported by the terminal device; or
an object supporting delay-based scheduling.

73. The method according to claim 72, further comprising:
configuring, by the network device, the first association relationship based on the information of the object to be configured and/or the information of the first object.

74. A wireless communication method, comprising:
transmitting, by a network device, third configuration information to a terminal device, to enable the terminal device to perform data processing based on the third configuration information, wherein the third configuration information is arranged to:
indicate whether the terminal device supports the data processing; or
indicate a Data Radio Bearer (DRB) for performing the data processing.

75. The method according to claim 74, wherein the data processing comprises data processing based on third information, wherein the third information comprises first information, and the first information comprises association information and/or time information.

76. The method according to claim 75, wherein performing data processing based on the third information comprises activating or deactivating Packet Data Convergence Protocol (PDCP) discard processing based on the association information or the time information.

77. The method according to claim 76, wherein
the third configuration information is arranged to indicate whether the terminal device or the DRB is to perform, based on the association information or the time information, the PDCP discard processing; or
the third configuration information is arranged to indicate whether the PDCP or the DRB is to perform, based on the association information or the time information, the PDCP discard processing.

78. The method according to claim 76, further comprising:
indicating, through the network device, whether the terminal device supports the PDCP discard processing based on the association information or the time information; or
indicating, through the network device, a DRB for performing the PDCP discard processing based on the association information or the time information.

79. The method according to any one of claims 74 to 78, further comprising:
receiving, by the network device, information of an object to be configured and/or information of the first object transmitted by the terminal device;
wherein the object to be configured comprises any one of:
an object with the association information;
an object supported by the terminal device; or
an object supporting delay-based scheduling.

80. The method according to claim 79, further comprising:
configuring, by the network device, the third configuration information based on the information of the object to be configured and/or the information of the first object.

81. A wireless communication apparatus, comprising:
a first transmitting unit, configured to transmit first information to a network device; wherein the first information comprises at least one of time information, data volume information, or association information.

82. A wireless communication apparatus, comprising:
a first receiving unit, configured to receive second configuration information transmitted by a network device, wherein the second configuration information is arranged to configure a first association relationship, and the first association relationship comprises a mapping relationship between Logical Channels (LCHs) and uplink (UL) grant resources.

83. A wireless communication apparatus, comprising:
a second receiving unit, configured to receive third configuration information transmitted by a network device and perform data processing based on the third configuration information, wherein the third configuration information is arranged to indicate whether the terminal device supports data processing or indicate a Data Radio Bearer (DRB) for performing data processing.

84. A wireless communication apparatus, comprising:
a third receiving unit, configured to receive first information transmitted by a terminal device, wherein the first information comprises at least one of time information, data volume information, or association information.

85. A wireless communication apparatus, comprising:
a second transmitting unit, configured to transmit second configuration information to a terminal device, wherein the second configuration information is arranged to configure a first association relationship, and the first association relationship comprises a mapping relationship between Logical Channels (LCHs) and uplink (UL) grant resources.

86. A wireless communication apparatus, comprising:
a third transmitting unit, configured to transmit third configuration information to a terminal device to enable the terminal device to perform data processing based on the third configuration information, wherein the third configuration information is arranged to indicate whether the terminal device supports data processing or indicate a Data Radio Bearer (DRB) for performing data processing.

87. A wireless communication device, comprising:
a memory configured to store computer executable instructions; and
a processor connected to the memory, and configured to execute the computer executable instructions to: implement the method according to any one of claims 1 to 27, implement the method according to any one of claims 28 to 35, implement the method according to any one of claims 36 to 45, implement the method according to any one of claims 46 to 65, implement the method according to any one of claims 66 to 73, or implement the method according to any one of claims 74 to 80.

88. A chip, comprising:
a processor, configured to invoke and run a computer program from a memory, to enable a device installed with the chip to: execute the method according to any one of claims 1 to 27, execute the method according to any one of claims 28 to 35, execute the method according to any one of claims 36 to 45, execute the method according to any one of claims 46 to 65, execute the method according to any one of claims 66 to 73, or execute the method according to any one of claims 74 to 80.

89. A computer readable storage medium, wherein the computer readable storage medium has a computer program stored therein, and the computer program, when executed by at least one processor, implements the method according to any one of claims 1 to 27, implements the method according to any one of claims 28 to 35, implements the method according to any one of claims 36 to 45, implements the method according to any one of claims 46 to 65, implements the method according to any one of claims 66 to 73, or implements the method according to any one of claims 74 to 80.
